# EUROPÄISCHE PATENTSCHRIFT

(11) **EP 2 004 742 B1**
(45) Veröffentlichungstag und Bekanntmachung des Hinweises auf die Patenterteilung: **27.07.2011**
(21) Anmeldenummer: 07727567.5
(22) Anmeldetag: 30.03.2007
(51) Int. Cl.: C08K 5/00, C09B 67/00

(54) **ZUSAMMENSETZUNG, ENTHALTEND POLYMERE, FARBMITTEL UND STABILISATOREN**
COMPOSITION CONTAINING POLYMERS, COLOURING AGENTS AND STABILISERS
COMPOSITION CONTENANT DES POLYMÈRES, DES COLORANTS ET DES STABILISATEURS

(30) Priorität: 31.03.2006 EP 06006854
(43) Veröffentlichungstag der Anmeldung: 24.12.2008
(73) Patentinhaber: BASF SE, 67056 Ludwigshafen (DE)
(72) Erfinder: BLUM, Till, 68165 Mannheim (DE); GLASER, Alban, 68159 Mannheim (DE); SCHAMBONY, Simon, 67067 Ludwigshafen (DE); APPEL, Manfred, 76857 Dernbach (DE)
(86) Internationale Anmeldenummer: PCT/EP2007/053095
(87) Internationale Veröffentlichungsnummer: WO 2007/113248

(56) Entgegenhaltungen:
- EP-A- 1 342 748
- EP-A1- 0 479 075
- WO-A-01/74777
- WO-A-02/092684

## Beschreibung

Die vorliegende Erfindung betrifft eine Zusammensetzung, die wenigstens ein Polymer, wenigstens ein Farbmittel und als Stabilisator wenigstens eine Piperidinverbindung enthält. Insbesondere soll der Stabilisator die Zusammensetzung vor der Einwirkung von Licht, Sauerstoff und/oder Wärme schützen und außerdem für eine gute Farbstabilität des eingefärbten Polymers sorgen. Des Weiteren betrifft die vorliegende Erfindung ein Verfahren zur Herstellung einer pigmenthaltigen Polymerzusammensetzung, bei dem man eine Polymerkomponente mit einem Pigment in innigen Kontakt bringt und als Dispergierhilfsmittel eine Piperidinverbindung einsetzt sowie die Verwendung der Piperidinverbindung als Dispergierhilfsmittel.

Es ist bekannt, dass sich die mechanischen, chemischen und/oder ästhetischen Eigenschaften von Kunststoffen unter der Einwirkung von Licht, Sauerstoff und/oder Wärme verschlechtern. Diese Verschlechterung des Kunststoffs, die auch als Alterung bezeichnet wird, zeigt sich üblicherweise als Vergilbung, Verfärbung, Rissbildung oder Versprödung der Materialien. In der Regel beruht die Alterung auf Oxidationsreaktionen, die durch Wärme, Licht, mechanische Beanspruchung, Katalyse oder durch Reaktion mit Verunreinigungen ausgelöst werden können. Die Alterungserscheinungen der Kunststoffe können bei der Herstellung, Verarbeitung zu Formteilen und/oder im Gebrauch der Formteile auftreten. Um die Abnahme der mechanischen Eigenschaften und die Verfärbung der Produkte zu reduzieren, werden daher Kunststoffe im Allgemeinen mit Stabilisatoren oder Stabilisatorenzusammensetzungen stabilisiert.

Sterisch gehinderte Amine (Hindered Amine Light Stabilizer; HALS) sind bekannte Stabilisatoren gegen photolytische und thermische Zersetzung von Kunststoffen. HALS-Verbindungen aus dem Stand der Technik sind 2,2,6,6-Tetraalkylpiperidinderivate. Die zur Stabilisierung eingesetzten HALS-Verbindungen können sowohl monomer als auch oligomer vorliegen.

Die EP 0 316 582 und die WO 01/74777 beschreiben
4-Formylamino-2,2,6,6-tetra(C₁-C₄)alkylpiperidinderivate als wirksame Lichtstabilisatoren für organisches Material, insbesondere für Polyolefine, Polyamide und Polyurethane. Zahlreiche, monomere HALS-Verbindungen enthaltende Stabilisatorgemische wurden bereits im Stand der Technik zur Stabilisierung von pigmentierten Polyolefinen beschrieben, beispielsweise in EP 1 338 622, DE 197 35 974 und EP 1 342 748. Die WO 2005/054353 beschreibt pigmentierte Polystyrole, die wenigstens einen UV-Absorber, wenigstens eine monomere HALS-Verbindung und wenigstens eine oligomere HALS-Verbindung enthalten.

Die aus dem Stand der Technik bekannten monomeren HALS-Verbindungen sind hinsichtlich ihrer anwendungstechnischen Eigenschaften oftmals nicht zufriedenstellend. Ein wesentlicher Nachteil ist die häufig zu geringe Dauer der Schutzwirkung infolge der geringen Migrationsstabilität monomerer HALS-Verbindungen. Ein weiterer Nachteil ist, dass viele bekannte Lichtstabilisatoren eine deutlich wahrnehmbare Eigenfarbe im sichtbaren Wellenlängenbereich haben, was die Farbintensität und Brillanz eines farbmittelhaltigen Kunststoffs mindert. Viele Lichtschutzmittel weisen zudem eine geringe Löslichkeit im Anwendungsmedium auf. Die daraus resultierende Kristallisation des Lichtschutzmittels kann eine Trübung des Polymers bewirken, was ebenfalls unerwünscht ist. Es besteht daher weiterhin ein Bedarf an Stabilisatoren und Stabilisatorzusammensetzungen, die verbesserte anwendungstechnische Eigenschaften aufweisen.

Der vorliegenden Erfindung liegt daher die Aufgabe zu Grunde, einen Stabilisator beziehungsweise ein Stabilisatorgemisch mit einem verbesserten Eigenschaftsprofil bereit zu stellen. Insbesondere sollte eine langanhaltende Schutzwirkung auf hohem Niveau erzielt werden. Der Stabilisator beziehungsweise das Stabilisatorgemisch sollte darüber hinaus eine gute Verträglichkeit mit den zu stabilisierenden Polymeren und eine geringe Eigenfarbe aufweisen. Ferner liegt der Erfindung die Aufgabe zu Grunde, ein Verfahren zur Herstellung von pigmentierten Polymerzusammensetzungen bereitzustellen. Die nach dem erfindungsgemäßen Verfahren erhaltene pigmenthaltige Polymerzusammensetzung sollte sich zur Herstellung von Formteilen besser eignen als bekannte farbmittelhaltige Polymerzusammensetzungen und insbesondere eine Pigmenteinsparung bei gleicher Farbstärke wie herkömmliche Polymerzubereitungen ermöglichen.

Diese Aufgaben werden gelöst unter Einsatz einer Piperidin-Verbindung der Formel (I) 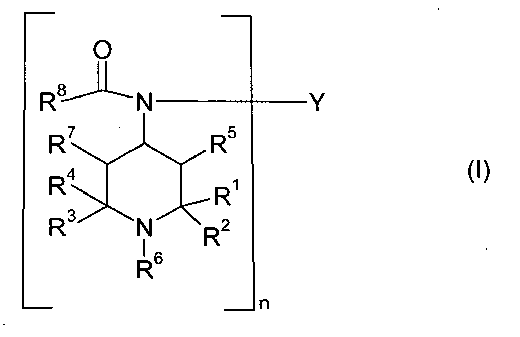 worin
- n: für 1 oder 2 steht;
- R¹, R², R³ und R⁴: unabhängig voneinander für C₁-C₄-Alkyl stehen, oder R¹ und R² und/oder R³ und R⁴ gemeinsam mit dem Kohlenstoffatom, an das sie gebunden sind, einen 4-, 5-, 6-, 7- oder 8-gliedrigen Ring bilden;
- R⁵, R⁷: unabhängig voneinander für Wasserstoff oder C₁-C₄-Alkyl steht;
- R⁶: für Wasserstoff, Oxyl, Hydroxy, Acyl, C₁-C₄₀-Alkyl oder C₂-C₄₀-Alkenyl steht, wo- bei die zwei zuletzt genannten Reste durch eine oder mehrere nicht benachbarte Gruppen, die unabhängig voneinander ausgewählt sind unter Sauerstoff, Schwe- fel, -NH- und N(C₁-C₄₀-Alkyl)-, unterbrochen sein können und/oder einen oder mehrere Substituenten tragen können, die ausgewählt sind unter Cyano, Hydro- xy, Amino und Aryl, wobei Aryl seinerseits ein- oder mehrfach durch C₁-C₄-Alkyl, Halogen, C₁-C₄-Alkoxy, Di-(C₁-C₄-alkyl)amino, Methylendioxy oder Ethylendioxy substituiert sein kann;
- R⁸: für Wasserstoff oder C₁-C₁₀-Alkyl steht; und
- wenn n: für 1 steht
- Y: für Wasserstoff, C₁-C₂₂-Alkyl steht, das unsubstituiert ist oder einfach oder mehr- fach durch gleiche oder verschiedene Resten R^{a} substituiert ist und durch eine oder mehrere nicht benachbarte Gruppen, die unabhängig voneinander ausge- wählt sind unter Sauerstoff, Schwefel, -NH- und N(C₁-C₁₀-Alkyl)-, unterbrochen sein kann; oder
- Y: für C₃-C₂₂-Alkenyl, C₃-C₁₂-Cycloalkyl, C₆-C₁₂-Bicycloalkyl, C₃-C₁₀-Cycloalkenyl steht, worin die vier zuletzt genannten Reste einen oder mehrere Reste R^{a} tragen können und C₃-C₁₂-Cycloalkyl, C₆-C₁₂-Bicycloalkyl, C₃-C₁₀-Cycloalkenyl außer- dem eine oder mehrere Alkylgruppen tragen können, oder,
- Y: für Aryl steht, worin Aryl ein- oder mehrfach durch Halogen, C₁-C₄-Alkyl, C₁-C₄-Alkoxy, C₁-C₄-Alkoxycarbonyl, Methylendioxy, Ethylendioxy oder Di-(C₁-C₄-alkyl)amino substituiert sein kann; oder
- Y: für einen heterocyclischen Ring steht, der gegebenenfalls ein oder mehrere glei- che oder verschiedene Reste trägt, die unter Oxyl, Hydroxy, Acyl, C₁-C₄₀-Alkyl oder C₂-C₄₀-Alkenyl ausgewählt sind, wobei C₁-C₄₀-Alkyl und C₂-C₄₀-Alkenyl durch eine oder mehrere nicht benachbarte Gruppen, die unabhängig voneinan- der ausgewählt sind unter Sauerstoff, Schwefel, -NH- und N(C₁-C₁₀-Alkyl)-, un- terbrochen sein können und/oder einen oder mehrere Substituenten tragen kön- nen, die unabhängig voneinander ausgewählt sind unter Cyano, Hydroxy, Amino, und Aryl, wobei Aryl seinerseits ein- oder mehrfach durch C₁-C₄-Alkyl, Halogen, C₁-C₄-Alkoxy, Di-(C₁-C₄-alkyl)amino, Methylendioxy oder Ethylendioxy substitu- iert sein kann;
wobei

- R^{a}: für Cyano, Amino, Hydroxy, Hydroxy-C₁-C₄-alkoxy, C₁-C₄-Alkoxycarbonyl, Aryl oder Heterocyclyl steht, wobei die zwei letztgenannten Reste ihrerseits ein- oder mehrfach durch Halogen, Hydroxy, C₁-C₄-Alkyl, C₁-C₄-Alkoxy, C₁-C₄-Alkoxycarbonyl, Methylendioxy, Ethylendioxy oder Di-(C₁-C₄-alkyl)amino substituiert sein können;
und wenn n für 2 steht
- Y: für eine zweiwertige Gruppe mit 1 bis 30 Brückenatomen zwischen den flankie- renden Bindungen steht, wobei die zweiwertige Gruppe Struktureinheiten auf- weist, die ausgewählt sind unter Alkylen, Alkenylen, Arylen, Heterocyclylen, Cyc- loalkylen, wobei Alkylen und Alkenylen ein- oder mehrfach durch Sauerstoff, Schwefel, -NH- und -N(C₁-C₁₀-Alkyl)- unterbrochen sein können, und Arylen, He- terocyclylen und Cycloalkylen ein- oder mehrfach durch C₁-C₄-Alkyl substituiert sein können.

Ein Gegenstand der vorliegenden Erfindung ist daher eine Zusammensetzung, enthaltend als Stabilisator (i) wenigstens eine Piperidin-Verbindung der Formel (I) wie zuvor definiert, wenigstens ein Polymer (ii) ausgewählt unter Polyamiden, Copolyamiden und Copolymeren von Styrol oder α- Methylstyrol; und wenigstens ein Pigment (iii).

Eine spezielle Ausführungsform der vorliegende Erfindung betrifft eine Zusammensetzung, die außerdem wenigstens ein unter Antioxidantien, Lichtstabilisierungsmitteln, Metalldesaktivatoren, antistatischen Mitteln, Verstärkungs- oder Füllstoffen, Beschlagverhinderungsmittel und Bioziden ausgewähltes Additiv enthält.

Ein weiterer Gegenstand der vorliegenden Erfindung ist ein Verfahren zur Herstellung einer pigmenthaltigen Polymerzusammensetzung, enthaltend eine kontinuierliche Polymerphase und eine darin dispergierte teilchenförmige Pigmentphase, bei dem man die Polymerzusammensetzung mit dem Pigment in innigen Kontakt bringt und als Dispergierhilfsmittel wenigstens eine Piperidin-Verbindung der Formel (I) einsetzt.

Ein weiterer Gegenstand der vorliegenden Erfindung ist die Verwendung einer Piperidin-Verbindung der Formel (I) als Dispergierhilfsmittel in einer pigmenthaltigen Polymerzusammensetzung.

Im Rahmen der vorliegenden Erfindung steht der Begriff Halogen für Fluor, Chlor, Brom oder lod.

C₁-C₂₂-Alkyl steht für gesättigte, geradkettige oder verzweigte Kohlenwasserstoffreste mit 1 bis 22 Kohlenstoffatomen, z. B. Methyl, Ethyl, Propyl, Isopropyl, n-Butyl, Isobutyl, sec.-Butyl, tert.-Butyl, n-Pentyl, 2-Pentyl, 2-Methylbutyl, 3-Methylbutyl, 1,2-Dimethylpropyl, 1, 1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyf, 1-Ethylbutyl, 2-Ethylbutyl, 1-Ethyl-2-methylpropyf, n-Heptyl, 2-Heptyl, 3-Heptyl, 2-Ethylpentyl, 1-Propyfbutyl, n-Octyl, 2-Ethylhexyl, 2-Propylheptyl, 1,1,3,3-Tetramethylbutyf, Nonyl, Decyl, n-Undecyl, n-Dodecyl, n-Tridecyl, iso-Tridecyl, n-Tetradecyl, n-Hexadecyl, n-Octadecyl, n-Eicosyl und dergleichen.

C₁-C₄₀-Alkyl steht für gesättigte, geradkettige oder verzweigte Kohlenwasserstoffreste mit 1 bis 40 Kohlenstoffatomen, z. B. C₁-C₂₂-Alkyl sowie Triacontanyl, Tritriacontanyl oder Tetracontanyl.

Wenn Alkyl durch eine oder mehrere, beispielsweise 1, 2, 3, 4, 5, 6, 7 oder 8 nicht benachbarte Gruppen, die unabhängig voneinander ausgewählt sind unter Sauerstoff, Schwefel, -NH- und N(C₁-C₁₀-Alkyl)-, unterbrochen ist, so werden die Termini der Alkylgruppe durch Kohlenstoffatome gebildet. Beispiele hierfür sind -(CH₂)₃N(CH₃)₂, -(CH₂)₃N(C₂H₅)₂, -(CH₂)₃-OCH₃, -(CH₂)₃-O-CH(CH₃)₂, -(CH₂)₂O(CH₂)₂-OCH₃, -CH₂-(CH₂)₂-CH₂-N(CH₂)₃, -(CH₂)₂-N[CH(CH₃)₂]₂, -(CH₂)₂-N(C₂H₅)₂, -(CH₂)₂N(CH₃)₂, - (CH₂)₂OCH₃, -(CH₂)₂OCH₂CH₃, -(CH₂)₃-SCH₃, -(CH₂)₃-S-CH(CH₃)₂, -(CH₂)₂S(CH₂)₂-SCH₃, -(CH₂)₂SCH₃ und -(CH₂)₂SCH₂CH₃.

C₁-C₄₀-Alkyl wie zuvor definiert kann einen oder mehrere, beispielsweise 1, 2, 3, 4, 5 oder 6 Substituenten aufweisen, die unabhängig voneinander ausgewählt sind unter Cyano, Amino, Hydroxy, und Aryl, wobei Aryl seinerseits ein- oder mehrfach, beispielsweise einfach, zweifach, dreifach oder vierfach, durch Halogen, C₁-C₄-Alkyl, C₁-C₄-Alkoxy, Methylendioxy, Ethylendioxy oder Di-(C₁-C₄-alkyl)amino substituiert sein kann.

Wenn C₁-C₂₂-Alkyl einen oder mehrere, gleiche oder verschiedene Reste R^{a} trägt, so trägt die Alkylgruppe vorzugweise 1, 2, 3, 4, 5 oder 6 Reste R^{a}.

Im Falle von Hydroxy-substituiertem Alkyl weist die Alkylgruppe vorzugsweise eine oder zwei, insbesondere eine Hydroxy-Gruppe auf, z.B. Hydroxymethyl, 2-Hydroxyeth-1-yl, 2-Hydroxyprop-1-yl, 3-Hydroxyprop-1-yl, 1-Hydroxyprop-2-yl, 2-Hydroxybut-1-yl, 3-Hydroxybut-1-yl, 4-Hydroxybut-1-yl, 1-Hydroxybut-2-yl, 1-Hydroxybut-3-yl, 2-Hydroxybut-3-yl, 1-Hydroxy-2-methylprop-3-yl, 2-Hydroxy-2-methylprop-3-yl oder 2-Hydroxymethylprop-2-yl.

Im Falle eines Aminosubstituenten weist die Alkylgruppe vorzugsweise eine oder zwei, insbesondere 1, Aminogruppe auf, z. B. Aminomethyl, 2-Aminoeth-1-yl, 2-Aminoprop-1-yl, 3-Aminoprop-1-yl, 1-Aminoprop-2-yl, 2-Aminobut-1-yl, 3-Aminobut-1-yl, 4-Aminobut-1-yl oder 1-Aminobut-2-yl.

Im Falle von Hydroxy-C₁-C₄-alkoxy-substituiertem Alkyl weist die Alkylgruppe vorzugsweise einen oder zwei, insbesondere einen, Hydroxy-C₁-C₄-alkoxysubstituenten auf.

Im Falle von C₁-C₄-Alkoxycarbonyl-substituiertem Alkyl weist die Alkylgruppe vorzugsweise einen oder zwei, insbesondere einen, Alkoxycarbonylsubstituenten auf, z. B. Methoxycarbonylmethyl, Ethoxycarbonylmethyl, 2-Methoxycarbonylethyl, 1-Methoxycarbonylyethyl, 2-Ethoxycarbonylethyl, 1-Ethoxycarbonylethyl, n-Propoxycarbonylmethyl, Isopropoxycarbonylmethyl, n-Butoxycarbonylmethyl, (1-Methylpropoxy)carbonylmethyl oder (2-Methylcarbonylpropoxy)methyl.

Im Fall von Cyano-substituiertem Alkyl weist die Alkylgruppe vorzugsweise einen oder zwei, insbesondere einen Cyanosubstituenten auf, wie Cyanmethyl oder Cyanethyl.

Im Falle von Aryl-substituiertem Alkyl weist die Alkylgruppe vorzugsweise 1, 2, 3, oder 4, insbesondere einen oder zwei Arylsubstituenten auf, wobei die Arylgruppe ihrerseits ein- oder mehrfach, insbesondere ein- oder zweifach, durch C₁-C₄-Alkyl, Halogen, C₁-C₄-Alkoxy, C₁-C₄-Alkoxycarbonyl, Methylendioxy, Ethylendioxy oder Di-(C₁-C₄-alkyl)amino substituiert sein kann. Vorzugsweise steht Aryl für Phenyl. Beispiele für Phenyl-substituiertes Alkyl umfassen Benzyl, Methoxybenzyl, Methylbenzyl, Ethylbenzyl, Isopropylbenzyl, Trimethylbenzyl, Fluorbenzyl, Chlorbenzyl, Methylendioxybenzyl, Phenylethyl, Phenylpropyl, Dimethylaminobenzyl, Diphenylmethyl und 1,3-Diphenylprop-2-yl.

C₂-C₂₂-Alkenyl steht für einfach ungesättigte, geradkettige oder verzweigte Kohlenwasserstoffreste mit 2 bis 22 Kohlenstoffatomen und einer Doppelbindung in beliebiger Position, z. B. Ethenyl, 1-Propenyl, 2-Propenyl, 1-Methylethenyl, 1-Butenyl, 2-Butenyl, 3-Butenyl, 1-Methyl-1-propenyl, 2-Methyl-1-propenyl, 1-Methyl-2-propenyl, 2-Methyl-2-propenyl und dergleichen. Wenn die Alkenylgruppe einen oder mehrere Substituenten R^{a} trägt, so kann sie beispielsweise 1, 2, 3, 4, 5 oder 6 Substituenten R^{a} tragen.

C₂-C₄₀-Alkenyl steht für einfach ungesättigte, geradkettige oder verzweigte Kohlenwasserstoffreste mit 2 bis 40 Kohlenstoffatomen und einer Doppelbindung in beliebiger Position und kann durch eine oder mehrere, beispielsweise 1, 2, 3, 4, 5, 6, 7 oder 8 nicht benachbarte Gruppen, die unabhängig voneinander ausgewählt sind unter Sauerstoff, Schwefel, -NH- und N(C₁-C₁₀-Alkyl)- unterbrochen sein (d.h. die Termini der Alkenylgruppe werden durch Kohlenstoffatome gebildet) und kann gegebenenfalls einen oder mehrere, z. B. 1, 2, 3, 4, 5, 6, 7 oder 8 Substituenten tragen, die unter Cyano, Hydroxy, Amino und Aryl ausgewählt sind, wobei Aryl seinerseits ein- oder mehrfach durch C₁-C₄-Alkyl, Halogen, C₁-C₄-Alkoxy, Di-(C₁-C₄-alkyl)amino, Methylendioxy oder Ethylendioxy substituiert sein kann.

Cycloalkyl steht für eine monocyclische, gesättigte Kohlenwasserstoffgruppe mit z. B. 3 bis 12 Kohlenstoffringglieder, wie Cyclopropyl, Cyclobutyl, Cyclopentyl, Cyclohexyl, Cycloheptyl, Cyclooctyl, Cyclononyl, Cyclodecyl und dergleichen. Cycloalkyl kann ein oder mehrere Reste R^{a} und ein oder mehrere, z. B. 1, 2, 3, 4, 5 oder mehr als 5, Alkylgruppen, z. B. C₁-C₁₀-Alkylgruppen, tragen. Falls Cycloalkyl mit R^{a} substituiert ist, so trägt Cycloalkyl in der Regel 1, 2, 3, 4, 5, oder 6 Substituenten R^{a}.

Bicycloalkyl steht für eine bicyclische, gesättigte Kohlenwasserstoffgruppe mit beispielsweise 6 bis 12 Kohlenstoffatomen wie Bicyclo[2.2.1]hept-1-yl, Bicyclo[2.2.1 ]hept-2-yl, Bicyclo[2.2.1]hept-7-yl, Bicyclo[2.2.2]oct-1-yl, Bicyclo[2.2.2]oct-2-yl, Bicyclo[3.3.0]-octyl, Bicyclo[4.4.0]decyl und dergleichen. Bicycloalkyl kann ein oder mehrere Reste R^{a} und ein oder mehrere, z. B. 1, 2, 3, 4, 5 oder mehr als 5, Alkylgruppen, z. B. C₁-C₁₀-Alkylgruppen, tragen. Falls Bicyclooalkyl mit R^{a} substituiert ist, so trägt Bicycloalkyl in der Regel 1, 2, 3, 4, 5, oder 6 Substituenten R^{a}.

Cycloalkenyl steht für eine monocyclische, einfach ungesättigte Kohlenwasserstoffgruppe mit beispielsweise 3 bis 10 Kohlenstoffringgliedern wie Cyclopenten-1-yl, Cyclopenten-3-yl, Cyclohexen-1-yl, Cyclohexen-3-yl und dergleichen. Cycloalkenyl kann ein oder mehrere Reste R^{a} und ein oder mehrere, z. B. 1, 2, 3, 4, 5 oder mehr als 5, Alkylgruppen, z. B. C₁-C₁₀-Alkylgruppen, tragen. Falls Cycloalkenyl mit R^{a} substituiert ist, so trägt Cycloalkenyl in der Regel 1, 2, 3, 4, 5, oder 6 Substituenten R^{a}.

Der Ausdruck "Aryl" umfasst im Rahmen der vorliegenden Erfindung ein- oder mehrkernige aromatische Kohlenwasserstoffreste. Der Ausdruck "Aryl" steht vorzugsweise für Phenyl, Tolyl, Xylyl, Mesityl, Duryl, Naphthyl, Fluorenyl, Anthracenyl, Phenanthrenyl oder Naphthyl, besonders bevorzugt für Phenyl oder Naphthyl. Aryl kann ein- oder mehrfach, z. B. 1-, 2-, 3-,4- , 5- oder 6-fach, durch C₁-C₄-Alkyl, Halogen, C₁-C₄-Alkoxy, C₁-C₄-Alkoxycarbonyl, Methylendioxy, Ethylendioxy oder Di-(C₁-C₄-alkyl)amino substituiert sein.

Der Ausdruck "Acyl" umfasst Alkanoyl-, Hetaroyl und Aroylgruppen mit im Allgemeinen 1 bis 22, vorzugsweise 1 bis 11 Kohlenstoffatomen, beispielsweise die Formyl-, Acetyl-, Propionyl-, Butyryl-, Pentanoyl-, Hexanoyl-, Heptanoyl-, 2-Ethylhexanoyl-, 2-Propylheptanoyl-, Benzoyl- oder Naphthoylgruppen.

Wenn n für 2 steht, dann steht Y für eine zweiwertige Gruppe mit 1 bis 30 Brückenatomen zwischen den flankierenden Bindungen stehen, wobei die zweiwertige Gruppe Struktureinheiten, beispielsweise ein, zwei, drei, vier, fünf, sechs oder sieben Struktureinheiten, aufweist, die ausgewählt sind unter Alkylen, Alkenylen, Arylen, Heterocyclylen, Cycloalkylen, wobei Alkylen und Alkenylen ein- oder mehrfach durch Sauerstoff, Schwefel, -NH- und -N(C₁-C₁₀-Alkyl)- wie N(C₁-C₄-Alkyl) unterbrochen sein können und / Arylen, Heterocyclylen und Cycloalkylen ein- oder mehrfach, beispielsweise, ein-, zweidrei- oder vierfach, durch C₁-C₄-Alkyl substituiert sein können.

Wenn Y als Struktureinheit Alkylen enthält, dann weist Alkylen vorzugsweise 1 bis 30 Kohlenstoffatome auf und steht für eine lineare oder verzweigte, gesättigte Kohlenwasserstoffkette wie 1,1-Ethandiyl, 1,2-Ethandiyl, Prop-1,2-ylen, Prop-1,3-ylen, But-1,2-ylen, But-1,3-ylen, But-1,4-ylen, 2-Methylprop-1,3-ylen, Pent-1,2-ylen, Pent-1,3-ylen, Pent-1,4-ylen, Pent-1,5-ylen, Pent-2,3-ylen, Pent-2,4-ylen, 1-Methyl-1,4-butylen, Hex-1,3-ylen, Hex-2,4-ylen, Hex-1,4-ylen, Hex-1,5-ylen, Hex-1,6-ylen, Hept-1,7-ylen, Oct-1,8-ylen und dergleichen.

Wenn Y als Struktureinheit Alkylen enthält, das durch Sauerstoff, Schwefel, -NH- und -N(C₁-C₁₀-Alkyl)- wie N(C₁-C₄-Alkyl) ein- oder mehrfach, beispielsweise, einmal, zweimal, dreimal, viermal, fünfmal, sechsmal, siebenmal oder achtmal, unterbrochen ist, so umfassen Beispiele hierfür -(C₃H₆O)-C₃H₆-, -(C₃H₆O)₂-C₃H₆-, -(C₃H₆O)₃-C₃H₆-, -(C₃H₆O)₄-C₃H₆-, -(C₃H₆O)₅-C₃H₆-, -(CH₂)₃O(CH₂)₄O(CH₂)₃-, -(CH₂)₃O(CH₂)₂O(CH₂)₂O(CH₂)₂-, -(CH₂)₃O(CH₂)₂O(CH₂)₃- , -(CH₂)-[N(CH₃)]-(CH₂)₂-, -CH₂-C(CH₃)-[O(CH₂)₅CH₃]-CH₂-CH(CH₃)-CH₂-, -CH₂-C(CH₃)-[O(CH₂)₅CH₃]-CH₂-CH(C₂H₅)-CH₂-, -(C₃H₆S)-C₃H₆-, -(C₃H₆S)₂-C₃H₆-, -(C₃H₆S)₃-C₃H₆-, -(C₃H₆S)₄-C₃H₆-, -(C₃H₆S)₅-C₃H₆-, -(CH₂)₃S(CH₂)₄S(CH₂)₃-, -(CH₂)₃S(CH₂)₂S(CH₂)₂S(CH₂)₂-, -(CH₂)₃S(CH₂)₂S(CH₂)₃-, -CH₂-C(CH₃)-[S(CH₂)₅CH₃]-CH₂-CH(CH₃)-CH₂-, -CH₂-C(CH₃)-[S(CH₂)₅CH₃]-CH₂-CH(C₂H₅)-CH₂-.

Wenn Y als Struktureinheit Alkenylen enthält, dann weist Alkenylen vorzugsweise 2 bis 30 Kohlenstoffatome auf und steht für eine lineare oder verzweigte, einfach ungesättigte Kohlenwasserstoffkette.

Wenn Y als Struktureinheit Arylen enthält, wobei Arylen unsubstituiert oder ein- oder mehrfach, beispielsweise 1-, 2-, 3- oder 4-fach, durch C₁-C₄-Alkyl substituiert ist, so umfassen Beispiele hierfür Naphthylen, Phenylen und Biphenylen.

Wenn Y als Struktureinheit Cycloalkylen enthält, dann weist Cycloalkylen vorzugsweise 5 bis 22 Kohlenstoffatome auf. Cycloalkylen kann unsubstituiert sein oder ein oder mehrere, beispielsweise 1, 2, 3 oder 4, C₁-C₄-Alkylreste wie Methyl tragen.

Wenn Y als Struktureinheit Heterocyclylen enthält, dann steht Heterocyclylen vorzugsweise für einen 5-, 6-, 7-, 8-, 9- oder 10-gliedrigen heterocyclischen Ring, der ein, zwei, drei oder vier unter O, S und N ausgewählte Heteroatome als Ringglied enthält. Heterocyclylen kann gesättigt, teilweise ungesättigt oder aromatisch sein. Vorzugsweise enthält der Heterocyclus zwei Stickstoffatome als Ringglieder. Der Heterocyclus kann unsubstituiert oder ein oder mehrere, beispielsweise 1, 2, 3 oder 4, C₁-C₄-Alkylreste wie Methyl tragen.

Der Ausdruck "heterocyclischer Ring", "Heterocyclus" oder "Heterocyclyl" steht für 5-, 6-, 7-, 8-, 9- oder 10-gliedriges Heterocyclyl und umfasst sowohl aromatisches Heterocyclyl (Hetaryl bzw. Heteroaryl) als auch vollständig gesättigte oder teilweise ungesättigte heterocyclische Reste. Heterocyclyl weist 1, 2, 3 oder 4 Heteroatome, ausgewählt unter O, S und N auf, z. B. 1, 2, 3 oder 4 Stickstoffatome, 1, 2 oder 3 Stickstoffatome, 1 oder 2 Sauerstoffatome, oder 1 Sauerstoffatom und 1 oder 2 Stickstoffatome oder 1 Schwefelatom und 1 oder 2 Stickstoffatome. Vorzugsweise enthält Heterocyclyl 5 oder 6 Ringatome.

Heterocyclyl ist unsubstituiert oder trägt gegebenenfalls ein oder mehrere, z. B. 1, 2, 3, 4, 5, 6 oder 7, gleiche oder verschiedene Reste, die unter Oxyl, Hydroxy, Acyl, C₁-C₄₀-Alkyl oder C₂-C₄₀-Alkenyl ausgewählt sind, wobei C₁-C₄₀-Alkyl und C₂-C₄₀-Alkenyl durch eine oder mehrere nicht benachbarte Gruppen, die unabhängig voneinander ausgewählt sind unter Sauerstoff, Schwefel, -NH- und N(C₁-C₁₀-Alkyl)-, unterbrochen sein können und/oder einen oder mehrere Substituenten tragen können, die unabhängig voneinander ausgewählt sind unter Cyano, Hydroxy, Amino, und Aryl, wobei Aryl seinerseits ein- oder mehrfach durch C₁-C₄-Alkyl, Halogen, C₁-C₄-Alkoxy, Di-(C₁-C₄-alkyl)amino, Methylendioxy oder Ethylendioxy substituiert sein kann.

Die in der Zusammensetzung enthaltene Piperidin-Verbindung der Formel (I) zeichnet sich durch eine gute Verträglichkeit mit dem eingesetzten Polymer und dem eingesetzten Pigment, einen geringen Dampfdruck und somit durch eine geringe Migrationsneigung aus. Somit weist eine erfindungsgemäße Zusammensetzung im Vergleich zu einer Zusammensetzung, die anstelle einer Piperidin-Verbindung der Formel (I) einen aus dem Stand der Technik bekannten Stabilisator enthält, eine verbesserte Stabilität auf.

Hinsichtlich der Verwendung der Piperidin-Verbindung der Formel (I) in der erfindungsgemäßen Zusammensetzung ist es bevorzugt, wenn die Variablen R¹, R², R³, R⁴, R⁵, R⁶, R⁷ und R⁸ unabhängig voneinander und insbesondere in Kombination die folgenden Bedeutungen aufweisen:
- R¹, R², R³, R⁴: Methyl;
- R⁵, R⁷: Wasserstoff;
- R⁸: Wasserstoff;
- R⁶: Wasserstoff; C₁-C₁₀-Alkyl, wie Methyl, Ethyl, n-Propyl, Butyl, Pentyl, Hexyl; C₁-C₄-Cyanoalkyl, wie Cyanmethyl oder Cyanethyl; C₁-C₄-Aminoalkyl wie Ami- nomethyl, Aminoethyl; C₁-C₄-Hydroxyalkyl, wie Hydroxymethyl oder Hydroxye- thyl; Phenyl-C₁-C₄-alkyl, wie Benzyl, Phenylethyl oder Phenylpropyl; Tolyl-C₁-C₄-alkyl, wie 2-Methylbenzyl, 3-Methylbenzyl oder 4-Methylbenzyl; C₂-C₆-Alkenyl, wie Allyl; Acyl wie C₁-C₂₂-Alkanoyl, beispielsweise Formyl, Acetyl, Propionyl, Butanoyl oder Pentanoyl oder Benzoyl; insbesondere Wasserstoff, Acetyl, Cyanmethyl, Aminoethyl und speziell Wasserstoff.

In einer bevorzugten Ausführungsform der vorliegenden Erfindung stehen R¹, R² , R³ und R⁴ jeweils für Methyl und R⁵ und R⁷ jeweils für Wasserstoff.

Wenn n für 1 steht, dann weist Y vorzugsweise eine der folgenden Bedeutungen auf:
i) Wasserstoff;
ii) C₁-C₂₂-Alkyl, wie z.B. Methyl, Ethyl, n-und i-Propyl, n-Butyl, sec.-Butyl, i-Butyl, tert-Butyl, n-Pentyl, i-Pentyl, Hexyl, Octyl, Decyl, Dodecyl, Octadecyl, 3,3-Dimethylbut-2-yl, Neopentyl, 4-Methylpent-2-yl und 2-Ethylhexyl;
iii) C₁-C₁₀-Alkyl, das einfach oder mehrfach, z. B, ein-, zwei- oder dreifach mit gleichen oder verschiedenen Resten R^{a} substituiert ist: Beispiele hierfür sind:
   C1-C₁₀-Cyanalkyl, wie Cyanmethyl oder Cyanethyl;
   C₁-C₁₀-Hydroxyalkyl wie Hydroxyethyl, Hydroxypropyl, Hydroxybutyl; durch C₁-C₄-Alkoxycarbonyl substituiertes C₁-C₁₀-Alkyl, wie z. B. Methoxycarbonylethyl und Ethoxycarbonylethyl;
   Phenyl-C₁-C₁₀-alkyl, wobei Phenyl seinerseits ein- oder mehrfach, z. B. ein- oder zweifach, durch C₁-C₄-Alkyl, Fluor, Chlor, C₁-C₄-Alkoxy, Di-(C₁-C₄-alkyl)amino, Methylendioxy substituiert sein kann, wie Benzyl, Methylbenzyl, Ethylbenzyl, Isopropylbenzyl, Trimethylbenzyl, Methoxybenzyl, Fluorbenzyl, Chlorbenzyl, Dimethylaminobenzyl, 3,4-(Methylendioxy)benzyl, Phenylethyl, Phenylpropyl und Phenylbutyl, Diphenylmethyl und 1,3-Diphenylprop-2-yl;
   C₁-C₁₀-Alkyl, das durch 5-, 6-, 7-, 8-, 9- oder 10-gliedriges gesättigten, partiell gesättigtes oder aromatisches Heterocyclus substituiert ist, wobei der Heterocyclus ein, zwei, drei oder vier unter Sauerstoff, Stickstoff oder Schwefel als Ringglieder ausgewählte Heteroatome enthält und gegebenenfalls einen oder mehrere, z. B. 1 oder 2, Substituenten trägt, die unter Oxyl, Hydroxy, Acyl, C₁-C₁₀-Alkyl oder C₂-C₁₀-Alkenyl ausgewählt sind, wie 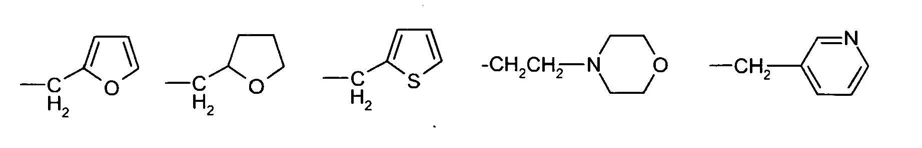 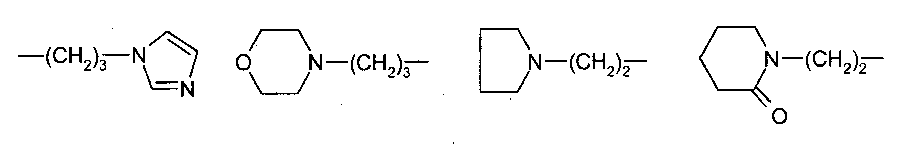
iv) durch -O-, -S-, -NH- und -N(C₁-C₄-Alkyl)- unterbrochenes und gegebenenfalls durch Hydroxy substituiertes C₄-C₂₂-Alkyl, wie z. B. -(CH₂)₃N(CH₃)₂, -(CH₂)₃N(C₂H₅)₂, -(CH₂)₃-OCH₃, -(CH₂)₃-O-CH(CH₃)₂, -(CH₂)₂O-(CH₂)₂-OH, -CH₂-(CH₂)₂-CH₂-N(CH₂)₃, -(CH₂)₂-N[CH(CH₃)₂]₂, -(CH₂)₂-N(C₂H₅)₂, -(CH₂)₂N(CH₃)₂, -(CH₂)-₂OCH₃ und -(CH₂)₂OCH₂CH_{3;}
v) C₃-C₂₂-Alkenyl, wie z. B. Allyl, 1-Butenyl, 1-Pentenyl und Oleyl;
vi) C₃-C₁₂-Cycloalkyl, wie z. B. Cyclopropyl, Cyclobutyl, Cyclopentyl, Cyclohexyl, Methylcyclohexyl, Cycloheptyl, Cyclooctyl, Cyclododecyl, insbesondere Cyclopentyl und Cyclohexyl;
vii) C₆-C₁₂-Bicydoalkyl wie Bicycloheptyl;
viii) gegebenenfalls durch C₁-C₄-Alkyl oder C₁-C₄-Alkoxycarbonyl substituiertes Phenyl, wie z. B. Phenyl, Tolyl, Methoxy- und Ethoxycarbonylphenyl; oder
ix) einen Rest der Formel 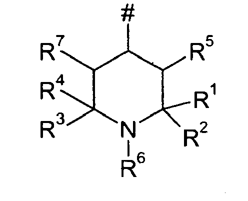
worin # für die Verknüpfungsstelle an das Amidstickstoffatom steht und R¹ bis R⁷ die zuvor genannten Bedeutungen und insbesondere die als bevorzugt genannten Bedeutungen aufweisen.

Wenn n für 2 steht, dann steht Y für eine zweiwertige Gruppe, die die beiden AmidStickstoffatome verknüpft und weist vorzugsweise eine der folgenden Bedeutungen auf:
a) C₁-C₁₂-Alkylen, wie Methylen 1,2-Ethandiyl, Propan-1,3-diyl, Butan-1,4-diyl, Pentan-1,5-diyl, Hexan-1,6-diyl, Heptan-1,7-diyl, Octan-1,8-diyl, 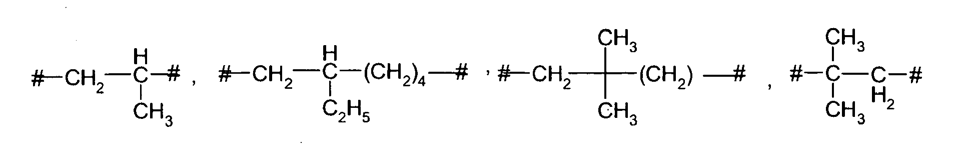 wobei # die Verknüpfungsstellen mit dem jeweiligen Amid-Stickstoffatom kennzeichnet, speziell unverzweigten C₄-C₈-Alkylen, ganz speziell Hexan-1,6-diyl;
b) für eine zweiwertige Gruppe mit 1 bis 30 Brückenatomen zwischen den flankierenden Bindungen, wobei die zweiwertige Gruppe Struktureinheiten aufweist, die ausgewählt sind unter Alkylen, wobei Alkylen ein- oder mehrfach, beispielsweise einmal, zweimal, dreimal, viermal, fünfmal, sechsmal, siebenmal oder achtmal, durch Sauerstoff, Schwefel, -NH- und -N(Alkyl)- wie -N(C₁-C₄-Alkyl)- unterbrochen ist, wie -(CH₂)₃O(CH₂)₄O(CH₂)₃-, -(CH₂)₃O(CH₂)₂O(CH₂)₂O(CH₂)₃-; -(C₃H₆O)-C₃H₆-, -(C₃H₆O)₂-C₃H₆-, -(C₃H₆O)₃-C₃H₆-, -(C₃H₆O)₄-C₃H₆-, -(C₃H₆O)₅-C₃H₆-, -(CH₂)₃O(CH₂)₂O(CH₂)₃-, 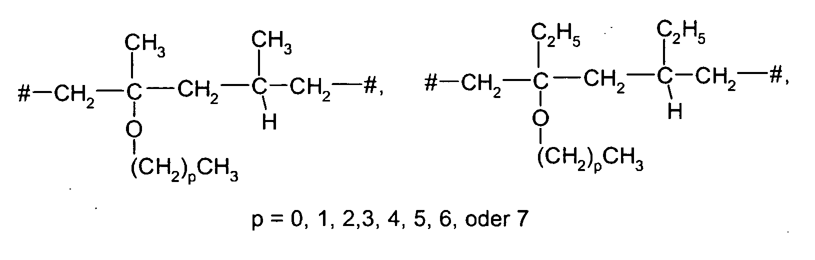 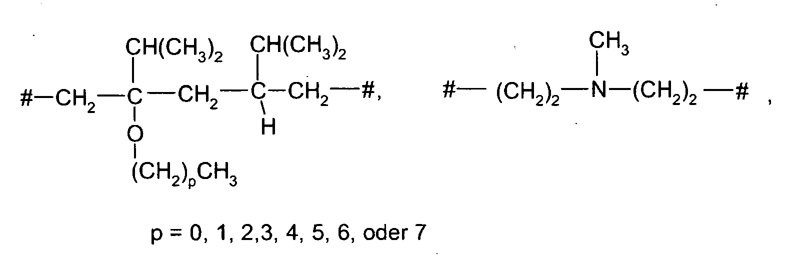 oder 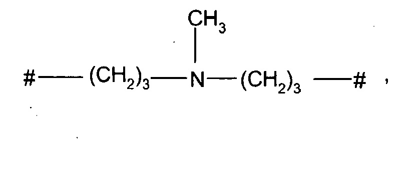
c) für eine zweiwertige Gruppe mit 1 bis 30 Brückenatomen zwischen den flankierenden Bindungen, wobei die zweiwertige Gruppe Struktureinheiten aufweist, die ausgewählt sind unter Alkylen, Cycloalkylen, Heterocyclylen und Phenylen, wobei Phenylen, Heterocyclylen und Cycloalkylen ein- oder mehrfach, beispielweise einfach, zweifach oder dreifach, durch C₁₋C₄-Alkyl substituiert sein können, wie 1,2-Phenylen, 1,3-Phenylen, 1,4-Phenylen, 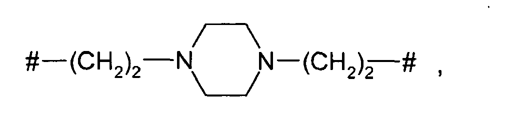 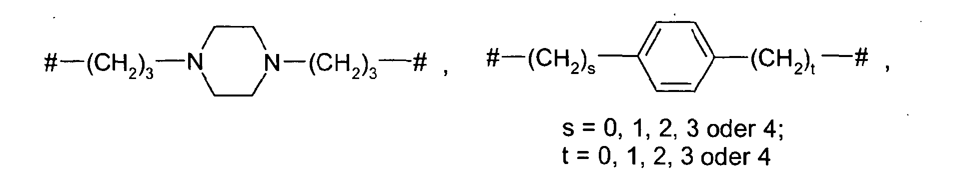 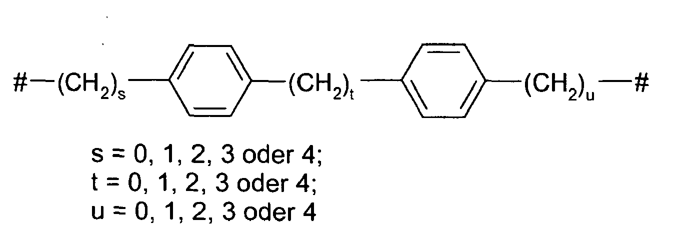 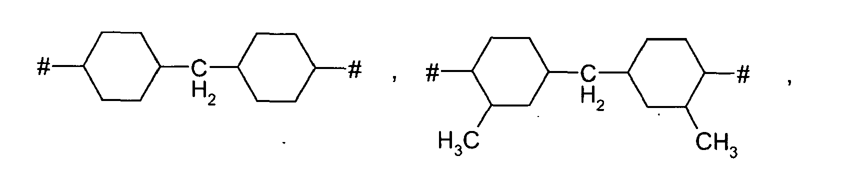 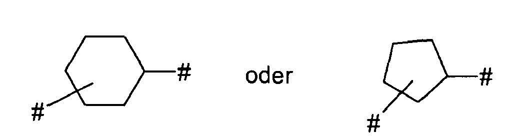
worin # die Verknüpfungsstellen der Gruppe Y an die zwei Amidstickstoffatome kennzeichnet.

In einer besonders bevorzugten Ausführungsform der vorliegenden Erfindung weisen die Variablen R¹, R², R³, R⁴, R⁵, R⁶, P7 R⁸ und Y sowie der Index n in Formel (I) die folgenden Bedeutungen auf: Der Index n steht für 2, R¹, R², R³, R⁴ stehen jeweils für Methyl, R⁵, R⁶, R⁷ und R⁸ stehen jeweils für Wasserstoff und Y steht für Hexan-1,6-diyl. Verbindungen der allgemeinen Formel (I) können durch Reaktion von Verbindungen der allgemeinen Formel (II), worin R¹, R², R³, R⁴, R⁵, R⁶, Y und n die zuvor genannten Bedeutungen aufweisen, mit Ameisensäure oder Ameisensäureestern im Falle von R⁸ gleich Wasserstoff, beziehungsweise mit einer C₁-C₁₀-Carbonsäure oder einem C₁-C₁₀-Carbonsäureester, wenn R⁸ = C₁-C₁₀-Alkyl ist, hergestellt werden. Hierfür sind der Methyl- und der Ethylester bevorzugt. Dabei kann mit oder ohne Katalysator gearbeitet werden. Katalysatoren können dabei Lewissäuren sein, von denen besonders Titanorthoester und hier speziell Titanorthobutylat genannt sein sollen.

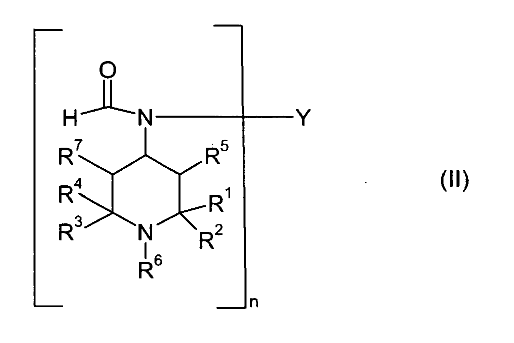

Derartige Umsetzungen sind in der EP 0 316 582 beschrieben.

Verbindungen der allgemeinen Formel (I) mit R⁶ = H können nach an sich bekannten Verfahren wie Alkylierung, reduktive Aminierung, Umsetzung mit Glykolsäurenitril u. a. in Verbindungen der allgemeinen Formel (I), worin R für gegebenenfalls substituiertes Alkyl, Alkenyl, Acyl steht, umgewandelt werden. Geeignete Alkylierungsmittel sind beispielsweise Alkylhalogenide, wie Alkylchorid, Alkylbromid oder Alkyliodid, z. B. Methylchlorid, Methylbromid oder Methyliodid oder Dialkylsulfate wie Dimethylsulfat oder Diethylsulfat. Die Umsetzung mit dem Alkylierungsmittel wird vorteilhaft in Gegenwart eines Lösungsmittels durchgeführt. Als Lösungsmittel für diese Umsetzungen verwendet man - je nach Temperaturbereich - aliphatische, cycloaliphatische oder aromatische Kohlenwasserstoffe wie Hexan, Cyclohexan, Toluol, Xylol, chlorierte aliphatische und aromatische Kohlenwasserstoffe wie Dichlormethan, Chlorbenzol, offenkettige Dialkylether wie Diethylether, Di-n-propylether, Methyl-tert-butylether, cyclische Ether wie Tetrahydrofuran, 1,4-Dioxan, Glykolether wie Dimethylglykolether oder Gemische dieser Lösungsmittel.

Verbindungen der allgemeinen Formel (I) mit R⁶ = H können beispielsweise durch Oxidation in die entsprechende Oxylgruppe umgewandelt werden. Als Oxidationsmittel kommen Peroxide, wie Wasserstoffperoxid, t-Butylhydroperoxid, Cumolhydroperoxid, Persäuren, wie Peressigsäure, meta-Chlorpersäure, ortho-Chlorperbenzoesäure, Perbenzoesäure, para-Nitroperbenzoesäure oder Magnesiummonoperoxyphthalat in Betracht. Die Oxidation kann in einem inerten Lösungsmittel, beispielsweise in einem chlorierten Kohlenwasserstoff wie Methylenchlorid, einem aliphatischen Kohlenwasserstoff wie Petrolether oder einem aromatischen Kohlenwasserstoff wie Toluol, Xylol, Benzol oder Gemische davon erfolgen.

Die Verbindungen der Formel (II) sind entweder literaturbekannt oder können vom Fachmann der organischen Synthese durch Abwandlung an sich bekannter Verfahren hergestellt werden.

Erfindungsgemäß verwendet man die Piperinderivate der Formel (I) zum Stabilisieren einer Zusammensetzung, die Polymer und wenigstens ein Farbmittel umfasst, gegen den Abbau durch Licht und/oder Wärme. Darüber hinaus vermögen die Verbindungen (I) auch als Metalldesaktivatoren zu wirken.

Eine bevorzugte Ausführungsform der vorliegenden Erfindung betrifft ein Verfahren zur Herstellung einer pigmenthaltigen Polymerzusammensetzung, die als Polymer ii) ein halogenhaltiges Polymer enthält. Zu den halogenhaltigen Polymeren gehören Polychloropren, chlorierte und fluorierte Kautschuke, chloriertes und bromiertes Copolymer von Isobutylen-Isopren (Halogen-Kautschuk), chloriertes und sulfochloriertes Polyethylen, Copolymere von Ethylen und chloriertem Ethylen und chloriertem Ethylen, Epichlorhydrinhomo- und Copolymere, insbesondere Polymere von Halogen-enthaltenden Vinylverbindungen, z. B. Polyvinylchlorid (PVC), Polyvinylidenchlorid (PVDC), Polyvinylfluorid, Polyvinylidenfluorid sowie Copolymere davon, wie Vinylchlorid/Vinylidenchlorid-, Vinylchlorid/Vinylacetat- oder Vinylidenchlorid/Vinylacetat-Copolymere. Polyvinylchlorid wird mit unterschiedlichem Gehalt an Weichmachern eingesetzt, mit einem Gehalt an Weichmachern von 0 - 12 % als Hart-PVC, von mehr als 12 % als Weich-PVC beziehungsweise mit sehr hohem Gehalt an Weichmachern als PVC-Paste. Übliche Weichmacher sind z. B. Phthalate, Epoxide, Adipinsäureester.

Polyvinylchlorid wird durch radikalische Polymerisation von Vinylchlorid in Substanz-, Suspensions-, Mikrosuspension- und Emulsionspolymerisation hergestellt. Die Polymerisation wird häufig durch Peroxide eingeleitet. PVC wird vielfältig eingesetzt, beispielsweise als Schaum-Kunstleder, Isoliertapeten, Haushaltsartikel, Schuhsohlen, Möbelprofilen, Fußbodenbelägen oder Rohre.

Polyvinylidenchlorid wird durch radikalische Polymerisation von Vinylidenchlorid hergestellt. Vinylidenchlorid kann auch mit (Meth)acrylaten, Vinylchlorid oder Acrylnitril copolymerisiert werden. Polyvinylidenchlorid sowie die Vinyliden-Copolymerisate werden beispielsweise zu Folien, aber auch zu Profilen, Rohren und Fasern verarbeitet. Eine wichtige Anwendung betrifft Mehrschichtfolien; die guten Barriereeigenschaften des Polyvinylidenchlorids werden auch für Beschichtungen verwendet.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter Homopolymereren und Copolymeren von cyclischen Ethern, wie Polyalkylenglykole, z. B. Polyethylenoxid, Polypropylenoxid oder Copolymeren davon mit Bisglycidylethern. Polyalkylenglykole entstehen durch Polyaddition eines cyclischen Ethers wie beispielsweise Ethylenoxid, Propylenoxid oder Tetrahydrofuran mit einer OH-Verbindung als Startermolekül, wie Wasser. Startermoleküle für die Polyaddition können auch zwei- oder mehrwertige Alkohole sein. Niedermolekulare Polyalkylenglykole werden als synthetische Schmiermittel eingesetzt. Weiterhin werden Polyalkylenglykole als Lösungsvermittler für Tensidkombinationen, als Bindemittel in Seifen, als Bestandteile in Tinten und Stempelfarben, als Weichmacher und Trennmittel eingesetzt.

Eine weitere bevorzugte Ausführungsform der vorliegenden Erfindung betrifft ein Verfahren zur Herstellung einer pigmenthaltigen Polymerzusammensetzung worin das Polymer ii) ausgewählt ist unter Polyacetalen, Copolymerisaten aus Polyacetalen mit cyclischen Ethern und Polyacetalen, die mit thermoplastischen Polyurethanen, Acrylaten oder Methylacrylat/Butadien/Styrol-Copolymeren modifiziert sind. Polyacetale entstehen durch Polymerisation von Aldehyden beziehungsweise von cyclischen Acetalen. Ein technisch bedeutsames Polyacetal ist Polyoxymethylen (POM), das durch kationische oder anionische Polymerisation von Formaldehyd beziehungsweise Trioxan erhältlich ist. Modifiziertes POM wird beispielsweise durch Copolymerisation mit cyclischen Ethern wie Ethylenoxid oder 1,3-Dioxolan erhalten. Die Kombination von POM mit thermoplastischen Polyurethan-Elastomeren ergibt Polymerblends auf POM-Basis. Unverstärktes POM zeichnet sich durch eine sehr hohe Steifheit, Festigkeit und Zähigkeit aus. POM wird vorzugsweise für Haushaltsgeräte-und Apparatebau, Fahrzeugbau, Maschinenbau, Sanitär- und Installationstechnik verwendet.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter Polyarylethern, Polyarylsulfiden und Gemischen von Polyarylethem mit Styrolpolymeren und Polyamiden. Ein Beispiel für Polyarylether sind Polyphenylenoxide, deren Hauptkette aus über Sauer-stoffatomen verknüpften Phenyleneinheiten, die gegebenenfalls durch Alkylgruppen substituiert sind, aufgebaut ist. Ein technisch bedeutsames-Polyphenylenoxid ist Poly-2,6-dimethylphenylether. Ein Beispiel für Polyarylsulfide sind Polyphenylensulfide, die durch Polykondensation von 1,4-Dichlorbenzol mit Natriumsulfid erhältlich sind. Sie zeichnen sich durch eine hohe Festigkeit, Steifheit und Härte aus. Sie eignen sich als Substitut für Metalle im Bau von Pumpengehäusen und bei anderen Elementen des Maschinen- und Apparatebaus. Weitere Einsatzgebiete für Polyphenylensulfide sind die Elektrotechnik und die Elektronik.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter Polyurethanen. Geeignete Polyisocyanat-Polyadditionsprodukte (Polyurethane) sind beispielsweise zellige Polyurethane, z. B. harte oder weiche Polyurethanschaumstoffe, kompakte Polyurethane, thermoplastische Polyurethane (TPU), duromere oder elastische Polyurethane oder Polyisocyanurate. Diese sind allgemein bekannt und ihre Herstellung ist vielfach beschrieben. Sie erfolgt üblicherweise durch Umsetzung von zwei- und höherwertigen Isocyanaten oder von entsprechenden Isocyanatanaloga mit gegenüber Isocyanaten reaktiven Verbindungen. Die Herstellung erfolgt nach üblichen Verfahren, beispielsweise im one-shot-Verfahren oder nach dem Prepolymerverfahren, z. B. in Formen, in einem Reaktionsextruder oder auch einer Bandanlage. Ein spezielles Herstellverfahren stellt das Reaction-Injection-Moulding- (RIM-) Verfahren dar, das bevorzugt zur Herstellung von Polyurethanen mit einem geschäumten oder kompakten Kern und einer überwiegend kompakten, nichtporösen Oberfläche angewandt wird. Die Verbindung (I) und deren Derivate eignen sich in vorteilhafter Weise für alle diese Verfahren.

Polyurethane sind im Allgemeinen aufgebaut aus wenigstens einem Polyisocyanat und wenigstens einer Verbindung mit wenigstens zwei gegenüber Isocyanatgruppen reaktiven Gruppen pro Molekül. Geeignete Polyisocyanate besitzen vorzugsweise 2 bis 5 NCO-Gruppen. Die gegenüber Isocyanatgruppen reaktiven Gruppen sind vorzugsweise ausgewählt unter Hydroxyl-, Mercapto-, primären und sekundären Aminogruppen. Dazu zählen vorzugsweise zwei- oder höherwertige Polyole.

Geeignete Polyisocyanate sind aliphatische, cycloaliphatische, araliphatische und aromatische Isocyanate. Geeignete aromatische Diisocyanate sind beispielsweise 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Aliphatische und cycloaliphatische Diisocyanate umfassen beispielsweise Tri-, Tetra-, Penta-, Hexa-, Hepta- und/oder Oktamethylendiisocyanat, 2-Methyl-pentamethylen-1,5-diisocyanat, 2-Ethylbutylen-1,4-diisocyanat, 1-Isocyanato-3,3,5-trimethyl-5-isocyanatomethyl-cyclohexan (isophoron-diisocyanat, IPDI), 1,4-und/oder 1,3-Bis(isocyanatomethyl)cyclohexan (HXDI), Cyclohexan-1,4-diisocyanat, 1-Methyl-2,4- und/oder 2,6-cyclohexandiisocyanato und/oder 4,4'-, 2,4'- und/oder 2,2'-Dicyclohexylmethan-diisocyanat. Zu den bevorzugten Diisocyanaten zählen Hexamethylendiisocyanat (HMDI) und Isophorondiisocyanat. Beispiele für höherfunktionelle Isocyanate sind Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurethe der vorgenannten Diisocyanate, ferner Oligomere, die durch gezielte Umsetzung von semiblockierten Diisocyanaten mit Polyolen, die im Mittel mehr als 2 und vorzugsweise 3 oder mehr Hydroxygruppen aufweisen, erhältlich sind.

Als Polyolkomponenten werden dabei für Polyurethanhartschaumstoffe, die gegebenenfalls Isocyanuratstukturen aufweisen können, hochfunktionelle Polyole, insbesondere Polyetherpolyole auf Basis hochfunktioneller Alkohole, Zuckeralkohole und/oder Saccharide als Startermoleküle eingesetzt. Für flexible Polyisocyanat-Polyadditionsprodukte, z. B. Polyurethanweichschaumstoffe oder RIM-WerkstofFe, sind 2- und/oder 3-funktionelle Polyetherpolyole auf Basis von Glyzerin und/oder Trimethylolpropan und/oder Glykolen als Startermoleküle als Polyole und 2- und/oder 3-funktionelle Polyetherpolyole auf Basis von Glycerin und/oder Trimethylolpropan und/oder Glykolen als zu veresternde Alkohole als Polyole bevorzugt. Thermoplastische Polyurethane basieren üblicherweise auf überwiegend difunktionellen Polyesterpolyalkoholen und/oder Polyetherpolyalkoholen, die bevorzugt eine mittlere Funktionalität von 1,8 bis 2,5, besonders bevorzugt 1,9 bis 2,1, aufweisen.

Die Herstellung der Polyetherpolyole erfolgt dabei nach einer bekannten Technologie. Geeignete Alkylenoxide zur Herstellung der Polyole sind beispielsweise 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen im Polyol führen. Besonders bevorzugt werden als Polyole solche eingesetzt, die zum Abschluss der Alkoxylierung mit Ethylenoxid alkoxyliert wurden und damit primäre Hydroxylgruppen aufweisen. Weitere geeignete Polyetherole sind Polytetrahydrofurane und Polyoxymethylene. Die Polyetherpolyole besitzen eine Funktionalität von vorzugsweise 2 bis 6 und insbesondere 2 bis 4 und Molekulargewichte von 200 bis 10000, vorzugsweise 200 bis 8000.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen, hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Weiterhin kann die Polyol-Komponente auch Diole oder höherwertige Alkohole umfassen. Geeignete Diole sind Glykole mit vorzugsweise 2 bis 25 Kohlenstoffatomen. Hierzu zählen 1,2-Ethandiol, 1,2-Propandiol, 1,3-Propandiol, 1,4-Butandiol, 1,5-Pentandiol, 1,6-Hexandiol, 1,10-Decandiol, Diethylenglykol, 2,2,4-Trimethylpentandiol-1,5, 2,2-Dimethylpropandiol-1,3, 1,4-Dimethylolcyclohexan, 1,6-Dimethylolcyclohexan, 2,2-Bis(4-hydroxyphenyl)-propan (Bisphenol A), 2,2-Bis(4-hydroxyphenyl)butan (Bisphenol B) oder 1,1-Bis(4-hydroxyphenyl)-3,3,5-trimethylcyclohexan (Bisphenol C). Geeignete höherwertige Alkohole sind z. B. dreiwertige (Triole), vierwertige (Tetrole) und/oder fünfwertige Alkohole (Pentole). Sie weisen in der Regel 3 bis 25, vorzugsweise 3 bis 18 Kohlenstoffatome auf. Hierzu zählen Glycerin, Trimethylolethan, Trimethylolpropan, Erythrit, Pentaerythrit, Sorbit und deren Alkoxylate.

Zur Modifizierung der mechanischen Eigenschaften, z. B. der Härte, kann sich jedoch der Zusatz von Kettenverlängerungsmitteln, Vernetzungsmitteln, Abstoppern oder gegebenenfalls auch Gemischen davon als vorteilhaft erweisen. Die Kettenverlängerungs- und/oder Vernetzungsmittel weisen beispielsweise ein Molekulargewicht von 40 bis 300 auf. In Betracht kommen beispielsweise aliphatische, cycloaliphatische und/oder araliphatische Diole mit 2 bis 14, vorzugsweise 2 bis 10 Kohlenstoffatomen, wie z. B. Ethylenglykol, 1,3-Propandiol, 1,2-Propandiol, 1,10-Decandiol-, 1,2-, 1,3-, 1,4-Dihydroxycyclohexan, Diethylenglykol, Dipropylenglykol und vorzugsweise Ethylenglykol, 1,4-Butandiol, 1,6-Hexandiol und Bis-(2-hydroxyethyl)-hydrochinon, Triole, wie 1,2,4-, 1,3,5-Trihydroxycyclohexan, Glycerin, Trimethylolpropan, Triethanolamin und niedermolekulare hydroxylgruppenhaltige Polyalkylenoxide auf Basis Ethylen-und/oder 1,2-Propylenoxid und den vorgenannten Diolen und/oder Triolen als Startermoleküle. Geeignete Abstopper umfassen beispielsweise monofunktionelle Alkohole oder sekundäre Amine.

Polyurethane werden zum größten Teil zu Schaumstoffen verarbeitet.

Eine weitere bevorzugte Ausführungsform der vorliegenden Erfindung betrifft ein Verfahren zur Herstellung einer pigmenthaltigen Polymerzusammensetzung worin das Polymer ii) ausgewählt ist unter Polyharnstoffen, Polyimiden, Polyamidimiden, Polyetherimiden, Polyesterimiden, Polyhydantoinen und Polybenzimidazolen. Polyharnstoffe entstehen bekanntermaßen durch Polyaddition von Diaminen und Diisocyanaten. Polyimide, deren wesentliches Strukturelement die Imidgruppe in der Hauptkette ist, entstehen durch Umsetzung von aromatischen Tetracarbonsäurendianhydriden mit aliphatischen oder aromatischen Diaminen. Polyimide werden unter anderem als Klebstoffe in Verbundwerkstoffen, außerdem für Beschichtungen, dünne Folien, beispielsweise als Isoliermaterial in der Mikroelektronik, für Hochmodulfasern, für semi-permeable Membranen und als flüssig-kristalline Polymere eingesetzt.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter Polyestern, vorzugsweise wenigstens einen linearen Polyester. Geeignete Polyester und Copolyester sind in der EP-A-0678376, EP-A-0 595 413 und US 6,096,854 beschrieben, worauf hiermit Bezug genommen wird. Polyester sind bekanntermaßen Kondensationsprodukte aus einem oder mehreren Polyolen und einer oder mehreren Polycarbonsäuren. In linearen Polyestern ist das Polyol ein Diol und die Polycarbonsäure eine Dicarbonsäure. Die Diolkomponente kann unter Ethylenglykol, 1,4-Cyclohexandimethanol, 1,2-Propandiol, 1,3-Propandiol, 1,4-Butandiol, 2,2-Dimethyl-1,3-propandiol, 1,6-Hexandiol, 1,2-Cyclohexandiol, 1,4-Cyclohexandiol, 1,2-Cyclohexandimethanol und 1 ,3-Cyclohexandimethanol ausgewählt sein. Ferner kommen Diole in Betracht, deren Alkylenkette durch nicht benachbarte Sauerstoffatome ein- oder mehrfach unterbrochen ist. Hierzu zählen Diethylenglykol, Triethylenglykol, Dipropylenglykol, Tripropylenglykol und dergleichen. In der Regel enthält das Diol 2 bis 18 Kohlenstoffatome, vorzugsweise 2 bis 8 Kohlenstoffatome. Cycloaliphatische Diole können in Form ihres cis- oder trans-Isomeren oder als Isomerengemisch eingesetzt werden. Die Säurekomponente kann eine aliphatische, alicyclische oder aromatische Dicarbonsäure sein. Die Säurekomponente linearer Polyester ist in der Regel ausgewählt unter Terephthalsäure, Isophthalsäure, 1,4-Cyclohexandicarbonsäure, 1,3-Cyclohexandicarbonsäure, Bernsteinsäure, Glutarsäure, Adipinsäure, Sebacinsäure, 1,12-Dodecandisäure, 2,6-Naphthalindicarbonsäure und Gemische davon. Selbstverständlich kann man auch die funktionellen Derivate der Säurekomponente wie Ester, beispielsweise der Methylester, Anhydride oder Halogenide, vorzugsweise Chloride, einsetzten. Bevorzugte Polyester sind Polyalkylenterephthalate, und Polyalkylennaphthalate, die durch Kondensation von Terephthalsäure beziehungsweise Naphthalindicarbonsäure mit einem aliphatischen Diol erhältlich sind.

Bevorzugte Polyalkylenterephthalate sind Polyethylenterephthalate (PET), die man durch Kondensation von Terephthalsäure mit Diethylenglykol erhält. PET ist des Weiteren auch durch Umesterung von Dimethylterephthalat mit Ethylenglykol unter Abspaltung von Methanol zum Bis(2-hydroxyethyl)terephthalat und dessen Polykondensation unter Freisetzung von Ethylenglykol erhältlich. Weitere bevorzugte Polyester sind Polybutylenterephthalate (PBT), die durch Kondensation von Terephthalsäure mit 1,4-Butandiol erhältlich sind, Polyalkylennaphthalate (PAN) wie Polyethylen-2,6-naphthalate (PEN), Poly-1,4-cyclohexandimethylenterephthalate (PCT), sowie Copolyester von Polyethylenterephthalat mit Cyclohexandimethanol (PDCT), Copolyester von Polybutylenterephthalat mit Cyclohexandimethanol. Ebenso bevorzugt sind Copolymerisate, Umesterungsprodukte und physikalische Gemische (Blends) der zuvor genannten Polyalkylenterephthalate. Besonders geeignete Polymere sind ausgewählt unter Poly- oder Copolykondensaten der Terephthalsäure wie Poly- oder Copolyethylenterephthalat (PET oder CoPET oder PETG), Poly(ethylen-2,6-naphthalat)en (PEN) oder PEN/PET-Copolymerisaten und PEN/PET-Blends. Die genannten Copolymerisate und Blends können in Abhängigkeit von ihrem Herstellungsverfahren auch Anteile von Umesterungsprodukten enthalten.

PET und PBT werden in großem Umfang zur Produktion von Fasern eingesetzt und weisen außerdem eine hohe Beständigkeit als thermoplastische Werkstoffe für technische Teile wie Lager, Zahnräder, Nockenscheiben, Rollen, Schaltergehäuse, Stecker, Handgriffe, Bedienungsknöpfe auf. PET wird in hohem Maß als Material für Getränkeflaschen verwendet.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter Polycarbonaten, Polyestercarbonaten und Gemischen davon. Polycarbonate entstehen z. B. durch Kondensation von Phosgen oder Kohlensäureestern wie Diphenylcarbonat oder Dimethylcarbonat mit Dihydroxyverbindungen. Geeignete Dihydroxyverbindungen sind aliphatische oder aromatische Dihydroxyverbindungen. Als aromatische Dihydroxyverbindungen seien beispielsweise Bisphenole wie 2,2-Bis-(4-hydroxyphenyl)-propan (Bisphenol-A), Tetraalkylbisphenol-A, 4,4-(meta-Phenylendiisopropyl)diphenol (Bisphenol M), 4,4-(para-Phenylendiisopropyl)diphenol, 1,1-Bis-(4-hydroxyphenyl)-3,3,5-trimethylcyclohexan (BP-TMC), 2,2-Bis-(4-hydroxyphenyl)-2-phenylethan, 1,1-Bis-(4-hydroxyphenyl)-cyclohexan (Bisphenol-Z) sowie gegebenenfalls deren Gemische genannt. Die Polycarbonate können durch Verwendung geringer Mengen an Verzweigern verzweigt werden. Zu den geeigneten Verzweigern zählen Phloroglucin, 4,6-Dimethyl-2,4,6-tri-(4-hydroxyphenyl)-hepten-2, 4,6-Dimethyl-2,4,6-tri(4-hydroxyphenyl)-heptan; 1,3,5-Tri-(4-hydroxyphenyl)-benzol; 1,1,1-Tri(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan, 2,2-Bis-[4,4-bis-(4-hydroxyphenyl)-cyclohexyl]-propan; 2,4-Bis-(4-hydroxyphenyl-isopropyl)-phenol; 2,6-Bis(2-hydroxy-5'-methylbenzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol, 1,4-Bis-(4',4"-dihydroxytriphenyl)-methyl)-benzol und insbesondere 1,1,1-Tri-(4-hydroxyphenyl)-ethan und Bis-(3-methyl-4-hydroxyphenyl)-2-oxo-2,3-dihydroindol.

Zum Kettenabbruch eignen sich beispielsweise Phenole wie Phenol, Alkylphenole wie Kresol und 4-tert.-Butylphenol, Chlorphenol, Bromphenol, Cumylphenol oder deren Mischungen. Der Anteil an Kettenabbrechern beträgt in der Regel 1 bis 20 Mol-%, pro Mol an Dihydroxyverbindung.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter Polysulfonen, Polyethersulfonen, Polyetherketonen und Gemischen davon. Polyetherketone werden beispielsweise in der Elektroindustrie und im Fahrzeugbau eingesetzt.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter synthetischen Harzen. Zu den synthetischen Harzen gehören vernetzte Polymere, die sich von Aldehyden einerseits und Phenolen, Harnstoffen und Melaminen andererseits ableiten, wie Phenol/- Formaldehydharze, Harnstoff/Formaldehydharze und Melamin/Formaldehydharze. Ebenfalls zu den synthetischen Harzen zählen trocknende und nicht trocknende Alkydharze und ungesättigte Polyesterharze, abgeleitet von Copolyestern gesättigter und ungesättigter Dicarbonsäuren mit mehrwertigen Alkoholen und Vinylverbindungen als Vernetzungsmittel und auch Halogen-enthaltende Modifizierungen davon mit niederer Entflammbarkeit. Weiterhin zählen zu den synthetischen Harzen vernetzbare Acrylharze, die sich von substituierten Acrylaten ableiten, wie Epoxyacrylate, Urethanacrylate oder Polyesteracrylate. Des Weiteren zählen zu den synthetischen Harzen Alkydharze, Polyesterharze und Acrylatharze, vernetzt mit Melaminharzen, Harnstoffharzen, Isocyanaten, Isocyanuraten, Polyisocyanaten oder Epoxidharzen und vernetzte Epoxidharze, die sich von aliphatischen, cycloaliphatischen, heterocyclischen oder aromatischen Glycidylverbindungen ableiten. Epoxidharze entstehen bekanntermaßen durch ringöffnende Vernetzungsreaktion von mehrwertigen Epoxiden. Beispiele für Epoxidharze umfassen Diglycidylether von Bisphenol-A oder Bisphenol F. Sie lassen sich mit Säureanhydriden oder Aminen, mit oder ohne Beschleuniger, vernetzen. Zu den synthetischen Harzen zählen auch Kohlenwasserstoffharze, die üblicherweise ein Molekulargewicht unter 2000 aufweisen. Die Kohlenwasserstoffharze lassen sich in drei Gruppen aufteilen, in die Petroleumharze, Terpenharze und Kohlenteerharze. Zu den Kohlenwasserstoffharzen werden im Rahmen dieser Erfindung auch die hydrierten Modifizierungen davon und Polyalkylene gerechnet.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter natürlichen Polymeren, wie Cellulose, Kautschuk, Gelatine und chemisch modifizierte Derivate davon, beispielsweise Celluloseacetate, Cellulosepropionate und Cellulosebutyrate, oder die Celluloseether, wie Methylcellulose; sowie Kolophonium und dessen Derivate.

Cellulose wird vor allem in Mischung mit PET-Fasern im Bekleidungssektor verwendet; außerdem als Kunstseide, Futterstoffe, Vorhangstoffe, Reifencord, Watte, Verbandstoffe und Hygieneartikel. Celluloseester werden beispielsweise zu Schraubendrehergriffe, Brillengestelle, Bürsten, Kämme, Kugelschreiber, technischen Teilen wie Kfz-Lenkräder, Leuchten- und Geräteabdeckungen, Schreibmaschinentasten, Elektroisolierfolien, Filme für photographische Zwecke und zu licht- und hitzefeste thermoplastische Bindemittel für Lacke verarbeitet. Celluloseether dienen als Bindemittel für Klarlack für Textilien, Papier, Folien und Metalle. Naturkautschuk (1,4-cis-Polyisopren) ist für viele Anwendungen, beispielsweise Radialreifen, unentbehrlich.

Eine weitere bevorzugte Ausführungsform der vorliegenden Erfindung betrifft ein Verfahren zur Herstellung einer pigmenthaltigen Polymerzusammensetzung worin das Polymer ii) ausgewählt ist unter natürlich vorkommenden und synthetischen organischen Materialien, die hergestellt sind aus reinen monomeren Verbindungen oder Gemischen solcher Verbindungen, z. B. Mineralöle, tierische und pflanzliche Fette, Öl und Wachse, oder Öle, Fette und Wachse, die auf synthetischen Estern basieren, wie Phthalate, Adipate, Phosphate oder Trimellitate und auch Gemische von synthetischen Estern mit Mineralölen in beliebigen Gewichtsverhältnissen, im allgemeinen jene, die als Spinnmittel verwendet werden, sowie wässerige Emulsionen solcher Materialien.

Eine weitere bevorzugte Ausführungsform der vorliegenden Erfindung betrifft ein Verfahren zur Herstellung einer pigmenthaltigen Polymerzusammensetzung , wobei das Polymer ii) ausgewählt ist unter wässrigen Emulsionen von natürlichem oder synthetischem Kautschuk. Zu den wässerigen Emulsionen von natürlichem oder synthetischem Kautschuk zählen natürlicher Latex oder Latizes von carboxylierten Styrol/Butadien-Copolymeren.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter Polyolefinen und Gemischen davon.

Im Rahmen der vorliegenden Erfindung umfasst der Begriff "Polyolefin" alle Polymere, die aus Olefinen ohne weitere Funktionalität aufgebaut sind, wie Polyethylen, Polypropylen, Polybuten-1 oder Polyisobutylen, Poly-4-methylpent-1-en, Polyisopren, Polybutadien, Polymere von Cycloolefinen, beispielsweise Cyclopenten oder Norbornen sowie Copolymerisate von Mono- oder Diolefinen wie Polyvinylcyclohexan.

### Ethylen-Polymere:

Geeignete Polyethylen (PE)-Homopolymere, deren Einteilung nach der Dichte erfolgt, sind z. B.:
- PE-ULD (ULD = ultra low density), PE-VLD (VLD = very low density); Co- und Terpolymerisate von Ethylen mit bis zu 10 % Octen-, 4-Methylpenten-1 und zuweilen Propylen; Dichte zwischen 0,91 und 0,88 g/cm³; kaum kristallin, transparent
- PE-LD (LD = low density), erhältlich z. B nach dem Hochdruckverfahren (ICI) bei 1000 bis 3000 bar und 150 bis 300 °C mit Sauerstoff oder Peroxiden als Katalysatoren in Autoklaven oder Rohrreaktoren. Stark verzweigt mit unterschiedlich langen Verzweigungen, Kristallinität 40 bis 50 %, Dichte 0,915 bis 0,935 g/cm³, mittlere Molmasse bis 600 000 g/mol.
- PE-LLD (LLD = linear low density), erhältlich mit Metallkomplex-Katalysatoren im Niederdruckverfahren aus der Gasphase, aus einer Lösung (z. B. Benzin), in einer Suspension oder mit einem modifizierten Hochdruckverfahren. Schwach verzweigt mit in sich unverzweigten Seitenketten, Molmassen höher als bei PE-LD.
- PE-MD (MD = middle-density); die Dichte zwischen 0,93 und 0,94 g/cm³; kann durch Mischen von PE-LD und PE-HD oder unmittelbar als ein copolymeres PE-LLD hergestellt werden.
- PE-HD (HD = high density), erhältlich nach dem Mitteldruck-(Phillips) und Niederdruck-(Ziegler)-Verfahren. Nach Phillips bei 30 bis 40 bar, 85 bis 180 °C, Chromoxid als Katalysator, Molmassen etwa 50 000 g/mol. Nach Ziegler bei 1 bis 50 bar, 20 bis 150 °C, Titanhalogenide, Titanester oder Aluminiumalkyle als Katalysatoren, Molmasse etwa 200 000 bis 400 000 g/mol. Durchführung in Suspension, Lösung, Gasphase oder Masse. Sehr schwach verzweigt, Kristallinität 60 bis 80 %, Dichte 0,942 bis 0,965 g/cm³.
- PE-HD-HMW (HMW = high molecular weight), erhältlich nach Ziegler-, Phillips-oder Gasphasenmethode. Hohe Dichte und hohe Molmasse.
- PE-HD-UHMW (UHMW = ultra high molecular weight) erhältlich mit modifizierten Ziegler-Katalysator, Molmasse 3 000 000 bis 6 000 000 g/mol.

Besonders geeignet ist Polyethylen, das in einem Gasphasenwirbelbettverfahren unter Verwendung von (üblicherweise geträgerten) Katalysatoren hergestellt wird, z. B. Lupolen® (Basell, Niederlande).

Besonders bevorzugt ist Polyethylen, das unter Verwendung von Metallocen-Katalysatoren hergestellt wird. Derartiges Polyethylen ist z. B. als Luflexen® (Basell, Niederlande) im Handel erhältlich.

Als Ethylen-Copolymere sind alle handelsüblichen Ethylen-Copolymere geeignet, beispielsweise Luflexen®-Typen (Basell; Niederlande), Nordel® und Engage® (DuPont-Dow, USA). Als Comonomere sind z. B. α-Olefine mit 3 bis 10 C-Atomen geeignet, insbesondere Propylen, But-1-en, Hex-1-en und Oct-1-en, außerdem Alkylacrylate und -methacrylate mit 1 bis 20 C-Atomen im Alkylrest, insbesondere Butylacrylat. Weitere geeignete Comonomere sind Diene wie z. B. Butadien, Isopren und Octadien. Weitere geeignete Comonomere sind Cycloolefine, wie Cyclopenten, Norbornen und Dicyclopentadien.

Bei den Ethylen-Copolymeren handelt es sich üblicherweise um statistische Copolymere oder Block- oder Impactcopolymere. Geeignete Block- oder Impactcopolymere aus Ethylen und Comonomeren sind z. B. Polymere, bei denen man in der ersten Stufe ein Homopolymer des Comonomeren oder ein statistisches Copolymer des Comonomeren, beispielsweise mit bis zu 15 Gew.-% Ethylen herstellt und dann in der zweiten Stufe ein Comonomer-Ethylen-Copolymer mit Ethylengehalten von 15 bis 80 Gew.-% hinzupolymerisiert. In der Regel wird soviel des Comonomer-Ethylen-Copolymer hinzupolymerisiert, dass das in der zweiten Stufe erzeugte Copolymer im Endprodukt einen Anteil von 3 bis 60 Gew.-% aufweist.

Die Polymerisation zur Herstellung der Ethylen-Comonomer-Copolymere kann mittels eines Ziegler-Natta-Katalysatorsystems erfolgen. Es können aber auch Katalysatorsysteme auf der Basis von Metallocenverbindungen bzw. auf der Basis von polymerisationsaktiven Metallkomplexen eingesetzt werden.

Aus HDPE stellt man hauptsächlich Spielwaren, Haushaltsartikel, technische Kleinteile und Bierkästen her. Einige HDPE-Sorten finden Verwendung bei Einweg- und Massenartikel des täglichen Bedarfs. Das Einsatzgebiet von LDPE erstreckt sich von Folien über Papierbeschichtung hin zu dick- und dünnwandigen Formteilen. LLDPE zeigt gegenüber LDPE Vorteile bei den mechanischen Eigenschaften und bei der Spannungsrissbeständigkeit. Anwendung von LLDPE findet sich vor allem bei Rohren und Folien.

### Propylen-Polymere:

Unter der Bezeichnung Polypropylen sollen nachfolgend sowohl Homo- als auch Copolymere des Propylens verstanden werden. Copolymere des Propylens enthalten in untergeordneten Mengen mit Propylen copolymerisierbare Monomere, beispielsweise C₂-C₈-Alk-1-ene wie u. a. Ethylen, But-1-en, Pent-1-en oder Hex-1-en. Es können auch zwei oder mehr verschiedene Comonomere verwendet werden.

Geeignete Polypropylene sind u. a. Homopolymere des Propylens oder Copolymere des Propylens mit bis zu 50 Gew.-% einpolymerisierter anderer Alk-1-ene mit bis zu 8 C-Atomen. Die Copolymere des Propylens sind hierbei statistische Copolymere oder Block- oder Impactcopolymere. Sofern die Copolymere des Propylens statistisch aufgebaut sind, enthalten sie im allgemeinen bis zu 15 Gew.-%, bevorzugt bis zu 6 Gew.-%, andere Alk-1-ene mit bis zu 8 C-Atomen, insbesondere Ethylen, But-1-en oder ein Gemisch aus Ethylen und But-1-en.

Geeignete Block- oder Impactcopolymere des Propylens sind z. B. Polymere, bei denen man in der ersten Stufe ein Propylenhomopolymer oder ein statistisches Copolymer des Propylens mit bis zu 15 Gew.-%, bevorzugt bis zu 6 Gew.-%, anderer Alk-1-ene mit bis zu 8 C-Atomen herstellt und dann in der zweiten Stufe ein Propylen-Ethylen-Copolymer mit Ethylengehalten von 15 bis 80 Gew.-%, wobei das Propylen-Ethylen-Copolymer zusätzlich noch weitere C₄-C₈-Alk-1-ene enthalten kann, hinzupolymerisiert. In der Regel wird soviel des Propylen-Ethylen-Copolymer hinzupolymerisiert, dass das in der zweiten Stufe erzeugte Copolymer im Endprodukt einen Anteil von 3 bis 60 Gew-% aufweist.

Die Polymerisation zur Herstellung von Polypropylen kann mittels eines Ziegler-Natta-Katalysatorsystems erfolgen. Dabei werden insbesondere solche Katalysatorsysteme verwendet, die neben einer titanhaltigen Feststoffkomponente a) noch Cokatalysatoren in Form von organischen Aluminiumverbindungen b) und Elektronendonorverbindungen c) aufweisen.

Es können aber auch Katalysatorsysteme auf der Basis von Metallocenverbindungen bzw. auf der Basis von polymerisationsaktiven Metallkomplexen eingesetzt werden.

Die Herstellung der Polypropylene wird üblicherweise durch Polymerisation in wenigstens einer, häufig auch in zwei oder noch mehr hintereinandergeschalteten Reaktionszonen (Reaktorkaskade), in der Gasphase, in einer Suspension oder in einer flüssigen Phase (Bulkphase) durchgeführt. Es können die üblichen, für die Polymerisation von C₂-C₈-Alk-1-enen verwendeten Reaktoren eingesetzt werden. Geeignete Reaktoren sind u, a. kontinuierlich betriebene Rührkessel, Schleifenreaktoren, Pulverbettreaktoren oder Wirbelbettreaktoren.

Die Polymerisation zur Herstellung der verwendeten Polypropylene wird unter üblichen Reaktionsbedingungen bei Temperaturen von 40 bis 120°C, insbesondere von 50 bis 100 °C und Drücken von 10 bis 100 bar, insbesondere von 20 bis 50 bar vorgenommen.

Geeignete Polypropylene weisen in der Regel eine Schmelzflussrate (MFR), nach ISO 1133, von 0,1 bis 200 g/10 min., insbesondere von 0,2 bis 100 g/10 min., bei 230 °C und unter einem Gewicht von 2,16 kg, auf.

In einer weiteren Ausführungsform der Erfindung enthält der Kunststoff wenigstens ein Polyolefin. Bevorzugte Polyolefine enthalten wenigstens ein Monomer einpolymerisiert, das ausgewählt ist unter Ethylen, Propylen, But-1-en, Isobutylen, 4-Methyl-1-penten, Butadien, Isopren und Mischungen davon. Geeignet sind Homopolymere, Copolymere aus den genannten Olefinmonomeren und Copolymere aus wenigstens einem der genannten Olefine als Hauptmonomer und anderen Monomeren (wie z. B. Vinylaromaten) als Comonomeren.

Bevorzugte Polyolefine sind Polyethylen-Homopolymere niedriger Dichte (PE-LD) und Polypropylen-Homopolymere und Polypropylen-Copolymere: Bevorzugte Polypropylene sind beispielsweise biaxial orientiertes Polypropylen (BOPP) und kristallisiertes Polypropylen. Bevorzugte Gemische der zuvor genannten Polyolefine sind beispielsweise Gemische von Polypropylen mit Polyisobutylen, Polypropylen mit Polyethylen (z. B. PP/HDPE, PP/LDPE) und Gemische von verschiedenen Arten von Polyethylen (z. B. LDPE/HDPE).

Eine weitere Ausführungsform der vorliegenden Erfindung betrifft ein Verfahren zur Herstellung einer pigmenthaltigen Polymerzusammensetzung , worin das Polymer ii) ausgewählt ist unter Copolymerisaten von Mono- oder Diolefinen mit Vinylmonomeren und Gemischen davon. Hierzu zählen Ethylen/Propylen-Copolymere, linearniederdichtes Polyethylen (LLDPE) und Gemische davon mit niederdichtem Polyethylen (LDPE), Propylen/But-1-en-Copolymere, Propylen/Isobutylen-Copolymere, Ethylen/But-1-en-Copolymere, Ethylen/Hexen-Copolymere, Ethylen/- Methylpenten-Copolymere, Ethylen/Hepten-Copolymere, Ethylen/Octen-Copolymere, Propylen/Butadien-Copolymere, Isobutylen/Isopren-Copolymere, Ethylen/Alkylacrylat-Copolymere, Ethylen/Alkylmethacrylat-Copolymere, Ethylen/Vinylacetat-Copolymere und deren Copolymere mit Kohlenmonoxid oder Ethylen/Acrylsäure-Copolymere und deren Salze (Ionomere) sowie Terpolymere von Ethylen mit Propylen und einem Dien, wie Hexadien, Dicyclopentadien oder Ethyliden-Norbornen; und Gemische von solchen Copolymeren miteinander und mit vorstehend erwähnten Polymeren, z. B. Polypropylen/Ethylen-Propylen-Copolymere, LDPE/Ethylen-Vinylacetat-Copolymere (EVA), LDPE/Ethylen-Acrylsäure-Copolymere (EAA), LLDPE/EVA, LLDPE/EAA und alternierende oder statistische Polyalkylen/Kohlenmonoxid-Copolymere und Gemische davon mit anderen Polymeren, z. B. Polyamiden.

Eine weitere bevorzugte Ausführungsform der Erfindung betrifft ein Verfahren zur Herstellung einer pigmenthaltigen Polymerzusammensetzung , worin das Polymer ii) ausgewählt ist unter Polymeren, die sich von ungesättigten Alkoholen und Aminen oder von deren Acylderivaten oder Acetalen ableiten wie Polyvinylacetat (PVAC) und Polyvinylalkohol (PVAL). Bei der Umsetzung von Polyvinylalkohol mit einem Aldehyd entstehen Polyvinylacetale, beispielsweise bei Umsetzung mit Formaldehyd die Polyvinylformale (PVFM) oder mit Butyraldehyd die Polyvinylbutyrale (PVB). Polyvinylverbindungen sind wegen ihrer niedrigen Glastemperatur keine thermoplastischen Werkstoffe, sondern Polymerisatharze. Sie werden als Beschichtungsmassen, beispielsweise für Teppichrückenbeschichtungen, Käsebeschichtungen, Papierstreichmassen, Lack- und Pigmentbindemittel, Lackrohstoff, Leime, Klebstoffe, Schutzkolloide, Kaugummimasse, Betonzusatz, Folien zur Herstellung von Verbundgläsern für Windschutzscheiben von Kraftfahrzeugen und zu vielen anderen Zwecken eingesetzt.

Eine weitere bevorzugte Ausführungsform der Erfindung betrifft eine Zusammensetzung, worin das Polymer ii) ausgewählt ist unter Polyamiden (Kurzzeichen PA) oder Copolyamiden, die als wesentliches Strukturelementen Amid-Gruppen in der Polymerhauptkette aufweisen. Polyamide können beispielsweise durch Polykondensation aus Diaminen und Dicarbonsäuren oder deren Derivaten hergestellt werden. Geeignete Diamine sind beispielsweise Alkyldiamine wie C₂-C₂₀-Alkyldiamine, z. B. Hexamethylendiamin, oder aromatische Diamine, wie C₆-C₂₀-aromatische Diamine, z. B. m- o- der p-Phenylendiamin oder m-Xyloldiamin. Geeignete Dicarbonsäuren umfassen aliphatischen Dicarbonsäuren oder deren Derivate, beispielsweise Chloride, wie C₂-C₂₀-aliphatische Dicarbonsäuren, z. B. Sebacinsäure, Decandicarbonsäure oder Adipinsäure oder aromatische Dicarbonsäuren, beispielsweise C₆-C₂₀-aromatischen Dicarbonsäuren oder deren Derivaten, beispielsweise Chloride, wie 2,6-Naphthalindicarbonsäure, Isophthalsäure oder Terephthalsäure. Beispiele für derartige Polyamide sind Poly-2,4,4-trimethylhexamethylenterephthalamid oder Poly-m-phenylenisophthalamid, PA 6,6 (Polyhexamethylenadipamid), PA 4,6 (Polytetramethylenadipamid), PA 6,10 (Polyhexamethylensebacamid), PA 6/9, PA 6/12, PA 4/6, PA 12/12, wobei die erste Zahl stets die Anzahl der Kohlenstoffatome des Diamins und die zweite Zahl die Anzahl der Kohlenstoffatome der Dicarbonsäure angibt.

Polyamide sind ebenfalls durch Polykondensation aus Aminosäure, beispielsweise C₂-C₂₀-Aminosäuren wie 6-Aminocapronsäure, 11-Aminoundecansäure oder durch ringöffnende Polymerisation aus Lactamen, z. B. Caprolactam erhältlich. Beispiele für derartige Polyamide sind PA 4 (aufgebaut aus 4-Aminobuttersäure), PA 6 (aufgebaut aus 6-Aminohexansäure). PA 11 ist beispielsweise ein Polyundecanolactam und PA 12 ist ein Polydodecanolactam. Bei Polyamiden, die wie in diesem Fall nur aus einem Monomer aufgebaut sind, gibt die Zahl hinter der Abkürzung PA die Anzahl der Kohlenstoffatome des Monomers an.

Polyamide können gegebenenfalls mit einem Elastomer als Modifiziermittel hergestellt werden. Geeignete Copolyamide sind beispielsweise Blockcopolymere der vorstehend erwähnten Polyamiden mit Polyolefinen, Olefin-Copolymeren, Ionomeren oder chemisch gebundenen oder gepfropften Elastomeren; oder mit Polyethern, beispielsweise mit Polyethylenglykol, Polypropylenglycol oder Polytetramethylenglycol. Geeignet sind ferner mit EPDM oder ABS modifizierte Polyamide oder Copolyamide; und während der Verarbeitung kondensierte Polyamide (RIM-Polyamidsysteme).

Polyamid findet in Spritzgussteilen mit hohen Anforderungen an Zähigkeit, Abriebfestigkeit und thermische Stabilität (Formstabilität) Verwendung, wie zum Beispiel für Kunststoffbauteile im Motorraum von Automobilen, Zahnräder etc. Außerdem wird Polyamid in Kunstfasern (z. B. Nylon, Perlon) eingesetzt.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter Polymeren, die sich von α,β-ungesättigten Säuren und deren Derivaten ableiten, wie Polyacrylate und Polymethacrylate; Polymethylmethacrylate (PMMA), Polyacrylamide (PAA) und Polyacrylnitrile (PAC), schlagmodifiziert mit Essigsäurebutylester. Bekanntermaßen entstehen Polyacrylsäuren durch Polymerisation von Acrylsäure. Die Polymerisation kann als Lösungspolymerisation in Wasser, als Fällungspolymerisation beispielsweise in Benzol oder als Suspensionspolymerisation durchgeführt werden.

Polyacrylsäure wird in Form ihrer Salze als Verdicker und in wässerigen Medien für Beschichtungen eingesetzt. Polyacrylsäure und ihre Copolymere mit Acrylamid werden als Suspendierhilfsmittel für Pigmente, als Flockungsmittel in der Wasseraufbereitung, als Bohrhilfe im Bergbau, als Papierhilfsmittel, als Klebstoff für Metall/Kunststoffverbindungen und für viele andere Zwecke verwendet. Polyacrylsäureester werden hauptsächlich als Bindemittel für Anstrichstoffe und Lacke, in der Papierindustrie in Streichmassen und als Binder und Leimungsmittel, zur Ausrüstung von Textilien, in Klebstoffen und Dichtungsmassen, als Lederhilfsmittel, als Elastomere und zu vielen anderen Zwecken verwendet. Ein großes Anwendungsgebiet für PMMA ist der Einsatz als hartmachende Komponente in Bindemitteln von Lackharzen. In Kombination mit Acrylaten liefert es hochwertige Beschichtungen, die sich durch ihre Dauerhaftigkeit, Filmzähigkeit, Glanz und Wetterbeständigkeit auszeichnen. Solche Harze werden bei Grundierungen und Beschichtungen, Dispersionsfarben und -lacken eingesetzt. PAA wird hauptsächlich als Flockungsmittel in der Wasseraufbereitung, als Papierhilfsmittel und als Flotationshilfsmittel im Bergbau verwendet. Außerdem wird es noch als Klärhilfe für Obstsäfte, Textilhilfsmittel, als Vernetzer in Beschichtungen, z. B. in der Lederbranche, als Verdicker in Anstrichdispersionen, in Klebstoffen und vielen anderen Anwendungen eingesetzt. Einsatzgebiete von PAC sind Strickwaren, Heimtextilien (z. B. Decken, Vorhänge, Polsterstoffe) und Teppiche.

Eine weitere bevorzugte Ausführungsform der vorliegenden Erfindung betrifft ein Verfahren zur Herstellung einer pigmenthaltigen Polymerzusammensetzung , worin das Polymer ii) ausgewählt ist unter Copolymeren der im obigen Absatz genannten Monomeren miteinander oder mit anderen ungesättigten Monomeren wie Acrylnitril/Butadien-Copolymere, Acrylnitril/Alkylacrylat-Copolymere, Acrylnitril/Alkoxyalkylacrylat- oder Acrylnitri/Ninylhalogenid-Copolymere oder Acrylnitril/Alkylmethacrylat/Butadien-Terpolymere.

Eine weitere bevorzugte Ausführungsform der vorliegenden Erfindung betrifft eine Zusammensetzung, worin das Polymer ii) ausgewählt ist unter Copolymeren von Styrol oder α-Methylstyrol mit Dienen oder Acrylderivaten oder Pfropfcopolymeren von Styrol oder α-Methylstyrol.

Eine weitere Ausführungsform der vorliegenden Erfindung betrifft ein Verfahren zur Herstellung einer pigmenthaltigen Polymerzusammensetzung, worin das Polymer ii) ausgewählt ist unter Polystyrol, Poly(p-methylstyrol), Poly(α-methylstyrol), Copolymeren von Styrol oder α-Methylstyrol mit Dienen oder Acrylderivaten oder Pfropfcopolymeren von Styrol oder α-Methylstyrol.

Eine weitere bevorzugte Ausführungsform der vorliegenden Erfindung betrifft eine Zusammensetzung, worin das Polymer ii) ein Copolymer von Styrol mit Acrylnitril und Butadien und/oder Acryl- oder Methacrylestern ist.

Unmodifizierte Styrolpolymere lassen sich zu Schaumstoffen verarbeiten, die im Bauwesen und in der Verpackung weitere Anwendung finden. Copolymere von Styrol oder α-Methylstyrol mit Dienen oder Acryl-Derivativen umfassen Styrol/Butadien, Styrol/Acrylnitril, Styrol/Alkylmethacrylat, Styrol/Butadien/Alkylacrylat, Styrol/Butadien/Alkylmethacrylat, Styrol/Maleinsäureanhydrid, Styrol/Acrylnitril/Methylacrylat; Gemische mit hoher Schlagzähigkeit von Styrol-Copolymeren und anderem Polymer, z. B. einem Polyacrylat, einem Dienpolymer oder einem Ethyten/Propylen/Dien-Terpolymer; und Blockcopolymere von Styrol, wie Styrol/Butadien/Styrol, Styrol/Isopren/Styrol, Styrol/Ethylen/Butylen/Styrol oder Styrol/Ethylen/Propylen/Styrol.

Pfropfcopolymere von Styrol oder α-Methylstyrol, z. B. Styrol auf Polybutadien, Styrol auf Polybutadien-Styrol oder Polybutadien-Acrylnitril-Copolymere; Styrol und Acrylnitril (oder Methacrylnitril) auf Polybutadien; Styrol, Acrylonitril und Methylmethacrylat auf Polybutadien; Styrol und Maleinsäureanhydrid auf Polybutadien; Styrol, Acrylnitril und Maleinsäureanhydrid oder Maleinimid auf Polybutadien; Styrol und Maleinimid auf Polybutadien; Styrol und Alkylacrylate oder -methacrylate auf Polybutadien; Styrol und Acrylnitril auf Ethylen/Propylen/Dien-Terpolymeren; Styrol und Acrylnitril auf Polyalkylacrylaten oder Polyalkylmethacrylaten, Styrol und Acrylnitril auf Acrylat/Butadien-Copolymeren sowie Gemische davon mit Polyharnstoffen, Polyimiden, Polyamidimiden, Polyetherimiden, Polyesterimiden, Polyhydantoinen und Polybenzimidazolen, z. B. die Copolymer-Gemische, die als ABS-, MBS-, ASA- oder AES-Polymere bekannt sind.

Wichtigste Anwendungen für ABS sind Bauteile, z. B. Gehäuse für Elektro- und Elektronikgeräte (Telefone), Automobilteile.

Eine weitere bevorzugte Ausführungsform der vorliegenden Erfindung betrifft ein Verfahren zur Herstellung einer pigmenthaltigen Polymerzusammensetzung , wobei es sich bei dem Polymer ii) um einen Polymerblend handelt. Unter dem Begriff "Polymerblend" versteht man eine Mischung aus zwei oder mehreren Polymeren oder Copolymeren. Polymerblends dienen dazu, die Eigenschaften der Basiskomponente zu verbessern.

Beispiele für Polymerblends umfassen PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylate, POM/MBS, PPO/HIPS, PPO/PA 6,6 und Copolymere, Methylmethacrylat-Acrylnitril/Butadien/Styrol-Polymer (MABS), PA/HDPE, PA/PP, PA/PPO, PBT/PC/ABS oder PBT/PET/PC.

Acrylnitril-Butadien-Styrol-Copolymere (ABS) sind thermoplastische oder elastische Polymerblends. Man stellt sie durch Pfropfpolymerisation der drei Basismonomeren Acrylnitril, Butadien und Styrol in einem Emulsionspolymerisationsverfahren oder Massepolymerisationsverfahren her. Die Eigenschaften von ABS lassen sich über die Mengenverhältnisse der eingesetzten Monomere steuern.

Erfindungsgemäß enthält die Zusammensetzung wenigstens ein Farbmittel iii). Das Farbmittel ist ein Pigment. Das Pigment kann ein anorganisches oder organisches Pigment sein. Ebenfalls als Farbmittel sind organische Verbindungen anzusehen, die eine Fluoreszenz im sichtbaren Teil des elektromagnetischen Spektrums aufweisen wie Fluoreszenzfarbstoffe. Das Farbmittel kann außerdem weitere Eigenschaften wie elektrische Leitfähigkeit aufweisen oder es kann magnetisch abschirmend sein.

Beispiele für geeignete anorganische farbgebende Pigmente sind Weißpigmente wie Titandioxid in seinen drei Modifikationen Rutil, Anatas oder Brookit, Bleiweiß, Zinkweiß, Zinksulfid oder Lithopone; Schwarzpigmente wie Ruß, Eisenoxidschwarz, Eisen-Mangan-Schwarz oder Spinellschwarz; Buntpigmente wie Chromoxid, Chromoxidhydratgrün, Kobaltgrün oder Ultramaringrün, Kobaltblau, Eisenblau, Miloriblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; Eisenoxidgelb, Nickeltitangelb, Chromtitangelb, Cadmiumsulfid, Cadmiumzinksulfid, Chromgelb, Zinkgelb, Erdalkalichromate, Neapelgelb; Bismutvanadat, Effektpigmente wie Interferenzpigmente und Glanzpigmente.

Geeignete anorganische Pigmente umfassen: Pigment White 6, Pigment White 7, Pigment Black 7, Pigment Black 11, Pigment Black 22, Pigment Black 27/30, Pigment Yellow 34, Pigment Yellow 35 / 37, Pigment Yellow 42, Pigment Yellow 53, Pigment Brown 24, Pigment Yellow 119, Pigment Yellow 184, Pigment Orange 20, Pigment Orange 75, Pigment Brown 6, Pigment Brown 29, Pigment Brown 31, Pigment Yellow 164, Pigment Red 101, Pigment Red 104, Pigment Red 108, Pigment Red 265, Pigment Violet 15, Pigment Blue 28 / 36, Pigment Blue 29, Pigment Green 17, Pigment Green 26 / 50.

Beispiele für geeignete organische Pigmente sind Anilinschwarz, Anthrapyrimidinpigmente, Azomethinpigmente, Anthrachinonpigmente, Monoazopigmente, Bisazopigmente, Benzimidazolonpigmente, Chinacridonpigmente, Chinophthalonpigmente, Diketopyrrolopyrrolpigmente, Dioxazinpigmente, Flavanthronpigmente, Indanthronpigmente, Indolinonpigmente, Isoindolinpigmente, Isoindolinonpigmente, Thioindigopigmente, Metallkomplexpigmente, Perinonpigmente, Perylenpigmente, Pyranthronpigmente, Phthalocyaninpigmente, Thioindigopigmente, Triarylcarboniumpigmente oder Metallkomplexpigmente.

Geeignete organische Pigmente umfassen C.I. (Colour Index) Pigment Yellow 93, C.I. Pigment Yellow 95, C.I. Pigment Yellow 138, C.I. Pigment Yellow 139, C.I. Pigment Yellow 155, C.I. Pigment Yellow 162, C.I. Pigment Yellow 168, C.I. Pigment Yellow 180, C.I. Pigment Yellow 183, C.I. Pigment Red 44, C.I. Pigment Red 170, C.I. Pigment Red 202, C.I. Pigment Red 214, C.I. Pigment Red 254, C.I. Pigment Red 264, C.I. Pigment Red 272, C.I. Pigment Red 48:2, C.I. Pigment Red 48:3, C.I. Pigment Red 53:1, C.I. Pigment Red 57:1, C.I. Pigment Green 7, C.I. Pigment Blue 15:1, C.I. Pigment Blue 15:3, C.I. Pigment Violet 19.

Einige der genannten Pigmente, wie beispielsweise Ruß oder Titandioxid, vermögen auch als Füll- oder Verstärkungsstoff und/oder als Nukleierungsmittel zu fungieren.

Besonders bevorzugt sind weiße und schwarze Pigmente, insbesondere Titandioxid in seinen drei Modifikationen und Ruß. Besonders bevorzugt sind auch weiße oder schwarze Pigmente in Kombination mit einem organischen oder anorganischen Pigment.

Beispiele für geeignete Farbstoffe sind: Azo-Farbstoffe, Pyrazolon-Farbstoffe, Anthrachinon-Farbstoffe, Perinon-Farbstoffe, Perylen-Farbstoffe, Indigo- und Thioindigo-Farbstoffe und Azomethin-Farbstoffe.

In einer speziellen Ausführungsform der vorliegenden Erfindung weist das Pigmentteilchen eine mittlere Teilchengröße von weniger als 5 µm, bestimmt nach dynamischer Lichtstreuung, auf. Vorzugsweise liegt die mittlere Teilchengröße im Bereich von 0,1 nm bis 2 µm, insbesondere im Bereich von 1 nm bis 1 µm und ganz besonders bevorzugt im Bereich von 5 nm bis 0,5 µm.

Der Pigmentgehalt in der erfindungsgemäßen. Zusammensetzung richtet sich nach der Farbanforderung, die das aus der erfindungsgemäßen Zusammensetzung hergestellte Produkt aufweisen soll und kann daher sehr weit schwanken. Vorzugsweise wird die Pigmentkomponente iii) in einer Menge von 0,0001 bis 10 Gew.-%, bevorzugt 0,001 bis 5 Gew.-%, besonders bevorzugt 0,01 bis 3 Gew.-% und ganz besonders bevorzugt 0,1 bis 2 Gew.-%, bezogen auf das Gesamtgewicht der erfindungsgemäßen Zusammensetzung eingesetzt.

Die Art der Zugabe der Pigmentkomponente iii) ist nicht beschränkt. Das Pigment kann in feinteiliger Form ohne weiteren Zusatzstoff fest oder geschmolzen oder in Form einer Vormischung mit einem Zusatzstoff, z. B. Lösungsmittel, zugegeben werden. Für das staubfreie Einfärben eignen sich insbesondere Pigmentzubereitungen, in denen der Zusatzstoff ein Polymer oder eine Polymerzusammensetzung ist. Solche Vormischungen werden im Rahmen der vorliegenden Erfindung auch als Masterbatch bezeichnet. Das im Masterbatch enthaltende Polymer beziehungsweise die im Masterbatch enthaltene Polymerzusammensetzung ist vorzugsweise das gleiche bzw. die gleiche wie die Polymerkomponente ii). Die Masterbatch-Präparation kann fest oder flüssig vorliegen. Gegebenenfalls kann die Masterbatch-Präparation auch eine Paste sein. Die Masterbatch-Präparation kann noch weitere Additive enthalten, wie sie nachfolgend beschrieben werden. sein. Die Komponente iii) kann vor, während und nach der Herstellung des Polymers zugesetzt werden. Vorzugsweise erfolgt die Zugabe nach der Polymerisation des Polymers. Zur Einarbeitung der Pigmentkomponente iii) in das Polymer können alle bekannten Vorrichtungen und Methoden zum Einmischen verwendet werden.

Die Stabilisatorkomponente i) kann in fester oder flüssiger Form vor, während oder nach der Herstellung des Polymers zugefügt werden. Die Pigmentkomponente iii) und die Stabilisatorkomponente i) können auch zusammen oder nacheinander vor, während oder nach der Herstellung des Polymers eingearbeitet werden.

Üblicherweise enthält die erfindungsgemäße Zusammensetzung wenigstens eine Verbindung der Formel (I) in einer Menge von 0,01 bis 5 Gew.-%, vorzugsweise 0,02 bis 2,5 Gew.-% und insbesondere bevorzugt 0,1 bis 1,0 Gew.-%, bezogen auf das Gesamtgewicht der Zusammensetzung. Unter dem Gesamtgewicht der Zusammensetzung versteht man das Gewicht des mit der Verbindung (I) sowie gegebenenfalls mit weiteren Additiven versetzten Zusammensetzung (Polymer + Pigment + Summe aller sonstigen Additive).

Die erfindungsgemäße Zusammensetzung kann außerdem wenigstens ein unter Antioxidantien, Lichtstabilisierungsmitteln, Metalldesaktivatoren, antistatischen Mitteln, Verstärkungs- und Füllstoffen, Beschlagverhinderungsmittel und Bioziden ausgewähltes Additiv enthalten. Vorzugsweise enthält die erfindungsgemäße Zusammensetzung keinen von der Verbindung der Formel (I) verschiedenen Metalldesaktivator.

Vorzugsweise weisen die gegebenenfalls mitverwendeten Antioxidantien, Lichtstabilisierungsmitteln, Metalldesaktivatoren, eine hohe Migrationsechtheit und Temperaturbeständigkeit auf. Geeignete Antioxidantien, Lichtstabilisierungsmitteln, Metalldesaktivatoren sind beispielsweise aus den Gruppen a) bis s) ausgewählt:
a) 4,4-Diarylbutadiene,
b) Zimtsäureester,
c) Benzotriazole,
d) Hydroxybenzophenone,
e) Diphenylcyanacrylate,
f) Oxamide (Oxalsäurediamide),
g) 2-Phenyl-1,3,5-triazine;
h) Antioxidantien,
i) Nickelverbindungen
j) sterisch gehinderte Amine,
k) Metalldesaktivatoren,
l) Phosphite und Phosphonite,
m) Hydroxylamine,
n) Nitrone,
o) Aminoxide,
p) Benzofuranone und Indolinone,
q) Thiosynergisten,
r) Peroxid-zerstörende Verbindungen und
s) basische Costabilisatoren.

Zur Gruppe a) der 4,4-Diarylbutadiene zählen beispielsweise Verbindungen der Formel A.

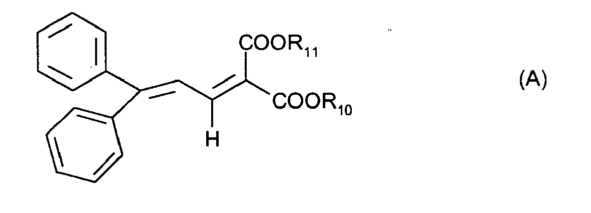

Die Verbindungen sind aus der EP-A-916 335 bekannt. Die Substituenten R₁₀ und/oder R₁₁ bedeuten bevorzugt C₁-C₈-Alkyl und C₅-C₈-Cycloalkyl.

Zur Gruppe b) der Zimtsäureester zählen beispielsweise 4-Methoxyzimtsäureisoamylester, 4-Methoxyzimtsäure-2-ethylhexylester, Methyl-α-methoxycarbonylcinnamat, Methyl-α-cyano-β-methyl-p-methoxycinnamat, Butyl-α-cyano-β-methyl-p-methoxy-cinnamat und Methyl-α-methoxycarbonyl-p-methoxycinnamat.

Zur Gruppe c) der Benzotriazole zählen beispielsweise 2-(2'-Hydroxyphenyl)-benzotriazole wie 2-(2'-Hydroxy-5'-methylphenyl)-benzotriazol, 2-(3',5'-Di-tert-butyl-2'-hydroxyphenyl)benzotriazol, 2-(5'-tert-Butyt-2'-hydroxyphenyl)-benzotriazol, 2-(2'-Hydroxy-5'-(1,1,3,3-tetramethylbutyl)phenyl)benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octyloxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol; 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonyl ethyl]-2'-hyd roxyphenyl)-benzotriazol, 2-(3'-Dodecyl-2'-hydroxy-5'-methylphenyl)-benzotriazol und 2-(3'-tert-Butyl-2'-hydroxy-5'-(2-isooctyloxycarbonylethyl)-phenylbenzotriazol, 2,2'-Methylen-bis[4-(1,1,3,3-tetramethylbutyl)-6-benzotriazol-2-yl-phenol]; das Produkt der Veresterung von 2-[3'-tert-Butyl-5'-(2-methoxycarbonylethyl)-2'-hydroxyphenyl]-2 H-benzotriazol mit Polyethylenglycol 300; [R-CH₂CH₂-COO(CH₂)₃]₂, mit R = 3'-tert-Butyl-4'-hydroxy-5'-2H-benzotriazol-2-yl-phenyl und Gemische davon.

Zur Gruppe d) der Hydroxybenzophenone zählen beispielsweise 2-Hydroxybenzophenone wie 2-Hydroxy-4-methoxybenzophenon, 2,2'-Dihydroxy-4-methoxybenzophenon, 2,4-Dihydroxybenzophenon, 2,2',4,4'-Tetrahydroxybenzophenon, 2,2'-Dihydroxy-4,4'-dimethoxybenzophenon, 2,2'-Dihydroxy-4,4'-dimethoxybenzophenon, 2-Hydroxy-4-(2-ethylhexyloxy)benzophenon, 2-Hydroxy-4-(n-octyloxy)-benzophenon, 2-Hydroxy-4-methoxy-4'-methylbenzophenon, 2-Hydroxy-3-carboxybenzophenon, 2-Hydroxy-4-methoxybenzophenon-5-sulfonsäure und deren Natriumsalz, 2,2'-Dihydroxy-4,4'-dimethoxybenzophenon-5,5'-bissulfonsäure und deren Natriumsalz.

Zur Gruppe e) der Diphenylcyanacrylate zählen beispielsweise Ethyl-2-cyan-3,3-diphenylacrylat, das beispielsweise im Handel unter dem Namen Uvinul® 3035 der Fa. BASF Aktiengesellschaft, Ludwigshafen erhältlich ist, 2-Ethylhexyl-2-cyan-3,3-diphenylacrylat, das beispielsweise im Handel als Uvinul® 3039 der Fa. BASF Aktiengesellschaft, Ludwigshafen, erhältlich ist und 1,3-Bis-[(2'-cyano-3',3'-diphenylacryloyl)-oxy]-2,2-bis{[2'-cyano-3',3'-diphenylacryloyl)oxy]methyl}propan, das beispielsweise im Handel unter dem Namen Uvinul® 3030 der Fa. BASF Aktiengesellschaft, Ludwigshafen erhältlich ist.

Zur Gruppe f) der Oxamide zählen beispielsweise 4,4'-Dioctyloxyoxanilid, 2,2'-Diethoxyoxanilid, 2,2'-Dioctyloxy-5,5'-di-tert-butyloxanilid, 2,2'-Didodecyloxy-5,5'-di-tert-butyloxanilid, 2-Ethoxy-2'-ethyloxanilid, N,N'-Bis(3-dimethylaminopropyl)oxamid, 2-Ethoxy-5-tert-butyl-2'-ethyloxanilid und dessen Mischung mit 2-Ethoxy-2'-ethyl-5,4'-di-tert-butyloxanilid sowie Mischungen von ortho-, para-Methoxy-disubstituierten Oxaniliden und Mischungen von ortho- und para-Ethoxy disubstituierten Oxaniliden.

Zur Gruppe g) der 2-Phenyl-1,3,5-triazine zählen beispielsweise 2-(2-Hydroxyphenyl)-1,3,5-triazine wie 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propoxy)-phenyl]-4,6-bis(2,4-dimethylphenyl)-1,3,5-triazin, 2-[2-Hydroxy-4-(2-hydroxy-3-octyloxy-propoxy)phenyl]-4,6-bis(2,4-dimethylphenyl)- 1,3,5-triazin, 2-[4-(Dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis-(2,4-dimethylphenyl)-1,3,5-triazin, 2-(2-Hydroxy-4-hexyloxyphenyl)-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin und 2-(2-Hydroxyphenyl)-4-(4-methoxyphenyl)-6-phenyl-1,3,5-triazin.

Die Gruppe h) der Antioxidantien umfasst beispielsweise:
h.1) Alkylierte Monophenole wie beispielsweise 2,6-Di-tert-butyl-4-methylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethylphenol, unverzweigte oder in der Seitenkette verzweigte Nonylphenole wie beispielsweise 2,6-Di-nonyl-4-methylphenol, 2,4-Dimethyl-6-(1-methylundec-1-yl)-phenol, 2,4-Dimethyl-6-(1-methylheptadec-1-yl)-phenol, 2,4-Dimethyl-6-(1-methyltridec-1-yl-)phenol und Gemische davon.
h.2) Alkylthiomethylphenole wie zum Beispiel 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol.
h.3) Hydrochinone und alkylierte Hydrochinone wie zum Beispiel 2,6-Di-tert-butyl-4-methoxyphenol, 2,5-Di-tert-butylhydrochinon, 2,5-Di-tert-amylhydrochinon, 2,6-Diphenyl-4-octadecyloxyphenol, 2,6-Di-tert-butylhydrochinon, 2,5-Di-tert-butyl-4-hydroxyanisol, 3,5-Di-tert-butyl-4-hydroxyanisol, 3,5-Di-tert-butyl-4-hydroxyphenylstearat, Bis-(3,5-di-tert-butyl-4-hydroxyphenyl)adipat.
h.4) Tocopherole, wie zum Beispiel α-Tocopherol, β-Tocopherol, γ-Tocopherol, δ-Tocopherol und Gemische davon (Vitamin E).
h.5) Hydroxylierte Thiodiphenylether wie zum Beispiel 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis(6-tert-butyl-2-methylphenol), 4,4'-Thio-bis-(3,6-di-secamylphenol), 4,4'-Bis(2,6-dimethyl-4-hydroxyphenyl)disulfid.
h.6) Alkyliden-Bisphenole wie zum Beispiel 2,2'-Methylen-bis(6-tert-butyl-4-methylphenol), 2,2'-Methylen-bis(6-tert-butyl-4-ethylphenol), 2,2'-Methylen-bis[4-methyl-. 6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)butan, 1,1-Bis(5-tert-butyl-4-hydroxy-2-methyl-phenyl)-3-n-dodecylmercaptobutan, Ethylenglycol-bis-[3,3-bis(3-tert-butyl-4-hydroxyphenyl)butyrat], Bis(3-tert-butyl-4-hydroxy-5-methyl-phenyl)dicyclopentadien, Bis[2-(3'-tert-butyl-2-hydroxy-5- methylbenzyl)-6-tert-butyl-4-methylphenyl]terephthalat, 1,1-Bis-(3,5-dimethyl-2-hydroxyphenyl)butan, 2,2-Bis-(3,5-di-tert-butyl-4-hydroxyphenyl)propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.
h.7) Benzylverbindungen wie zum Beispiel 3,5,3',5'-Tetra-tert-butyl-4,4'-dihydroxydibenzylether, Octadecyl-4-hydroxy-3,5-dimethylbenzylmercaptoacetat, Tridecyl-4-hydroxy-3,5-di-tert-butylbenzylmercaptoacetat, Tris(3,5-di-tert-butyl-4-hydroxybenzyl)amin, 1,3,5-Tri-(3,5-di-tert-butyl-4-hydroxybenzyl)-2,4,6-trimethylbenzol, Di-(3,5-di-tert-butyl-4-hydroxybenzyl)sulfid, 3,5-Di-tert-butyl-4-hydroxybenzylmercapto-essigsäureisooctylester, Bis-(4-tert-butyl-3-hydroxy-2,6-dimethylbenzyl)dithiolterephthalat, 1,3,5-Tris-(3,5-di-tert-butyl-4-hydroxybenzyl)isocyanurat, 1,3,5-Tris-(4-tert-butyl-3-hydroxy-2, 6-dimethylbenzyl)isocyanurat, 3,5-Di-tert-butyl-4-hydroxybenzyl-phosphorsäuredioctadecylester und 3,5-Di-tert-butyl-4-hydroxybenzyl-phosphorsäuremonoethylester, Calciumsalz.
h.8) Hydroxybenzylierte Malonate wie zum Beispiel Dioctadecyl-2,2-bis-(3,5-di-tert butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)malonat, Bis[4-(1,1,3,3-tetramethylbutyl)phenyl]-2,2-bis(3,5-di-tert-butyl-4-hydroxybenzyl)malonat.
h.9) Hydroxybenzyl-Aromaten wie zum Beispiel 1,3,5-Tris-(3, 5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)phenol.
h.10)Triazinverbindungen wie zum Beispiel 2,4-Bis(octylmercapto)-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,3,5-triazin, 1,3,5-Tris-(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
h.11)Benzylphosphonate wie zum Beispiel Dimethyl-2,5-di-tert-butyl-4-hydroxybenzylphosphonat, Diethyl-3,5-di-tert-butyl-4-hydroxybenzylphosphonat ((3,5-Bis(1,1-dimethylethyl)-4-hydroxyphenyl)methyl)phosphonsäurediethylester), Dioctadecyl-3,5-di-tert-butyl-4-hydroxybenzylphosphonat, Dioctadecyl-5-tert-butyl-4-hydroxy-3-methylbenzylphosphonat, Calciumsalz des 3,5-Di-tert-butyl-4-hydroxybenzylphosphonsäure-monoethylesters.
h.12)Acylaminophenole wie zum Beispiel 4-Hydroxy-laurinsäureanilid, 4-Hydroxystearinsäureanilid, 2,4-Bis-octylmercapto-6-(3,5-di-tert-butyl-4-hydroxyanilino)-s-triazin und Octyl-N-(3,5-di-tert-butyl-4-hydroxyphenyl)-carbamat.
h.13)Ester der β-(3,5-Di-tert-butyl-4-hydroxyphenyl)propionsäure mit ein- oder mehrwertigen Alkoholen wie z. B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyefhyl)-isocyanurat, N,N'-Bis-(Hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
h.14)Ester der β-(5-tert-Butyl-4-hydroxy-3-methylphenyl)propionsäure mit ein- oder mehrwertigen Alkoholen, wie z. B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2] octan.
h.15)Ester der β-(3,5-Dicyclohexyl-4-hydroxyphenyl)propionsäure mit ein- oder mehrwertigen Alkoholen wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo [2.2.2]octan.
h.16)Ester der 3,5-Di-tert-butyl-4-hydroxyphenylessigsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.
h.17)Amide der β-(3, 5-Di-tert-butyl-4-hydroxyphenyl)propionsäure, wie z. B. N,N'-Bis(3,5-di-tert-butyl-4-hydroxyphenylpropionyl)-hexamethylendiamin, N,N'-Bis(3,5-di-tert-butyl-4-hydroxyphenylpropionyl)-trimethylendiamin, N,N'-Bis(3,5-di-tert-butyl-4-hydroxyphenylpropionyl)-hydrazin, N,N'-Bis[2-(3-[3,5-di-tert-butyl-4-hydroxyphenyl]-propionyloxy)ethyl]-oxamid (z. B. Naugard®XL-1 der Firma Uniroyal).
h.18)Ascorbinsäure (Vitamin C)
h.19)Aminische Antioxidantien, wie zum Beispiel N,N'-Di-isopropyl-p-phenylendiamin, N,N'-Di-sec-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylendiamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-sec-butyl-p-phenylendiamin, Diphenylamin, N-Allyldiphenylamin, 4-lsopropoxydiphenylamin, N-Phenyl-1-naphthylamin, N-(4-tert-Octylphenyl)-1-naphthylamin, N-Phenyl-2-naphthylamin, octyliertes Diphenylamin, zum Beispiel p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylaminophenol, Bis-(4-methoxyphenyl)amin, 2,6-Di-tert-butyl-4-dimethylaminomethylphenol, 2,4'-Diaminodiphenylmethan, 4,4'-Diaminodiphenylmethan, N,N,N',N'-Tetramethyl-4,4'-diaminodiphenylmethan, 1,2-Bis-[(2-methylphenyl)amino]ethan,1,2-Bis(phenylamino)-propan, (o-Tolyl)-biguanid, Bis[4-(1',3'-dimethylbutyl)phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemisch aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl)-hexamethylendiamin, Bis-(2,2,6,6-tetramethylpiperidin-4-yl)-sebacat, 2,2,6,6-Tetramethylpiperidin-4-on, 2,2,6,6 Tetramethylpi,peridin-4-ol, das Dimethylsuccinat-Polymer mit 4-Hydroxy-2,2,6,6-tetramethyl-1-piperidinethanol [CAS Nummer 65447-77-0], (beispielsweise Tinuvin® 622 der Fa. Ciba Specialty Chemicals, Schweiz), Polymer aus 2,2,4,4-Tetramethyl-7-oxa-3,20-diaza-dispiro[5.1.11.2]-heneicosan-21-on und Epichlorhydrin [CAS-No.: 202483-55-4], (beispielsweise Hostavin® N30 der Fa. Clariant, Frankfurt/Main).

Zu Gruppe i) der Nickelverbindungen gehören zum Beispiel Nickel-Komplexe des 2,2'-Thio-bis-[4-(1,1,3,3-tetramethylbutyl)phenols], wie der 1:1 oder 1:2 Komplex, gegebenenfalls mit zusätzlichen Liganden wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäuremonoalkylester wie z. B. der Methyl- oder Ethylester, Nickelkomplexe von Ketoximen wie z. B. von 2-Hydroxy-4-methylphenylundecylketoxim, Nickelkomplex von 1-Phenyl-4-lauroyl-5-hydroxypyrazol, gegebenenfalls mit zusätzlichen Liganden.

Zur Gruppe j) der sterisch gehinderten Amine gehören zum Beispiel Bis(2,2,6,6-tetramethylpiperidin-4-yl)sebacat, Bis(2,2,6,6-tetramethylpiperidin-4-yl)succinat, Bis(1,2,2,6,6-pentamethylpiperidin-4-yl)sebacat, Bis(1-octyloxy-2,2,6,6-tetramethylpiperidin-4-yl)sebacat, Bis(1,2,2,6,6-pentamethylpiperidin-4-yl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Bernsteinsäure, das Kondensationsprodukt aus N,N'-Bis(2, 2,6,6-tetramethylpiperidin-4-yl)hexamethylendiamin und 4-Tert-octylamino-2,6-dichloro-1,3,5-triazin, Tris(2,2,6,6-tetra-methylpiperidin-4-yl)nitrilotriacetat, Tetrakis(2,2,6,6-tetra-methylpiperidin-4-yl)-1,2,3,4-butantetracarboxylat, 1,1'-(1,2-Ethylen)-bis(3,3,5,5-tetramethylpiperazinon), 4-Benzoyl-2,2,6,6-tetramethylpiperidin, 4-Stearyloxy-2,2,6,6-tetramethylpiperidin, Bis(1,2,2,6,6-pentamethylpiperidin-4-yl)-2-n-butyl-2-(2-hydroxy- 3,5-di-tert-butylbenzyl)malonat, 3-n-Octyl-7,7,9,9-tetramethyl-1,3,8-triazaspiro[4.5]decan-2,4-dion, Bis(1-octyloxy-2,2,6,6-tetramethylpiperidin-4-yl)sebacat, Bis(1-octyloxy-2,2,6,6-tetramethylpiperidin-4-yl)succinat, das Kondensationsprodukt aus 2-Chloro-4,6-bis(4-n-butylamino-2,2,6,6-tetramethylpiperidin-4-yl)-1,3,5-triazin und 1,2-Bis(3-aminopropylamino)ethan, das Kondensationsprodukt aus 2-Chloro-4,6-di-(4-n-butylamino-1,2,2,6,6-pentamethylpiperidin-4-yl)-1,3,5-triazin und 1,2-Bis-(3-aminopropylamino)ethan, 8-Acetyl-3-dodecyl-7,7,9,9- tetramethyl-1,3,8-triazaspiro[4.5]-decan-2,4-dion, 3-Dodecyl-1-(2,2,6,6-tetramethylpiperidin-4-yl)pyrrolidin-2,5-dion, 3-Dodecyl-1-(1,2,2,6,6-pentamethylpiperidin-4-yl)pyrrolidin- 2,5-dion, eine Mischung aus 4-Hexadecyloxy- und 4-Stearyloxy-2,2,6,6-tetramethylpiperidin, das Kondensationsprodukt aus N,N'-Bis-(2,2,6,6-tetramethylpiperidin-4-yl)-hexamethylendiamin und 4-Cyclohexylamino-2,6-dichloro-1,3,5-triazin, das Kondensationsprodukt aus 1,2-Bis(3-aminopropylamino)-ethan und 2,4,6-Trichloro-1,3,5-triazin, 4-Butylamino-2,2,6,6-tetramethylpiperidin, N-(2,2,6,6-Tetramethylpiperidin-4-yl)-n-dodecylsuccinimid, N-(1,2,2,6,6-Pentamethylpiperidin-4-yl)-n-dodecylsuccinimid, 2-Undecyl-7,7,9,9-tetramethyl-1-oxa-3,8-diaza-4-oxospiro[4.5]- decan, das Kondensationsprodukt aus 7,7,9,9-Tetramethyl-2-cyclo-undecyl-1-oxa-3,8-diaza-4-oxospiro-[4.5]decan und Epichlorhydrin, Poly(methoxypropyl-3-oxy)-[4-(2,2,6,6-tetramethyl)piperidinyl]siloxan, polymeranaloge Umsetzungsprodukte aus 4-Amino-2,2,6,6-tetramethylpiperidin und Maleinsäure/C₂₀-C₂₄-α-Olefin-Copolymeren, z. B. Uvinul® 5050 H (BASF Aktiengesellschaft, Ludwigshafen), und dazu entsprechende polymeranaloge Umsetzungsprodukte mit 4-Amino-1,2,2,6,6-pentamethylpiperidin (z. B. "methyliertes Uvinul® 5050 H"), Kondensationsprodukte aus Tetramethylolacetylendiharnstoff und 4-Amino-2,2,6,6-tetramethylpiperidin, z. B. Uvinul® 4049 H (BASF Aktiengesellschaft, Ludwigshafen), und dazu entsprechende Kondensationsprodukte mit 4-Amino-1,2,2,6,6-pentamethylpiperidin (z. B. "methyliertes Uvinul®4049 H"), Poly[[6-[(1,1,3,3-tetramethylbutyl)amino]-1,3,5-triazin-2,4-diyl][(2,2,6,6-tetramethyl-4-piperidinyl)imino]1,6-hexandiyl[(2,2,6,6-tetramethyl-4-piperidinyl)imino]]) [CAS Nr. 71878-19-8], N,N',N",N"'-Tetrakis{4,6-bis[butyl-(N-methyl-2,2,6,6-tetramethylpiperidin-4-yl)amino]triazin-2-yl}-4,7-diazadecan-1,10-diamin (CAS Nr. 106990-43-6) (z. B. Chimassorb® 119 der Fa. Ciba Specialty Chemicals, Schweiz.).

Zur Gruppe k) der Metalldesaktivatoren gehören zum Beispiel N,N'-Diphenyloxalsäurediamid, N-Salicylal-N'-salicyloyl-hydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)-oxalyldihydrazid, Oxanilid, Isophthaloyldihydrazid, Sebacoylbisphenylhydrazid, N,N'-Diacetyladipinsäuredihydrazid, N,N'-Bis(salicyloyl)oxalsäuredihydrazid, N,N'-Bis(salicyloyl)thiopropionyldihydrazid.

Zur Gruppe 1) der Phosphite und Phosphonite gehören zum Beispiel Triphenylphosphit, Diphenylalkylphosphite, Phenyldialkylphosphite, Tris(nonylphenyl)phosphit, Trilaurylphosphit, Trioctadecylphosphit, Distearylpentaerythritdiphosphit, Tris(2,4-di-tert-butylphenyl)phosphit, Biisodecylpentaerythritdiphosphit, Bis(2,4-di-tert-butylphenyl)pentaerythritdiphosphit, Bis(2,6-di-tert-butyl-4-methylphenyl)-pentaerythritdiphosphit, Diisodecyloxypentaerythritdiphosphit, Bis(2,4-di-tert-butyl-6-methylphenyl)-pentaerythritdiphosphit, Bis(2,4,6-tris(tert-butylphenyl)pentaerythritdiphosphit, Tristearylsorbittriphosphit, Tetrakis-(2,4-di-tert-butylphenyl)-4,4'-biphenylendiphosphonit, 6-Isooctyloxy-2,4,8,10-tetra-tert-butyl-dibenzo[d,f][1,3,2]dioxaphosphepin, 6-Fluor-2,4,8,10-tetra-tert-butyl-12-methyl-dibenzo[d,g][1,3,2]dioxaphosphocin, Bis(2,4-di-tert-butyl-6-methylphenyl)methylphosphit, Bis(2,4-di-tert-butyl-6-methylphenyl)ethylphosphit, 2,2',2"-Nitrilo[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)phosphit.

Zur Gruppe m) der Hydroxylamine gehören zum Beispiel N,N-Dibenzylhydroxylamin, N,N-Diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N-Methyl-N-octadecylhydroxylamin und N,N-Dialkylhydroxylamin aus hydrierten Talgfettaminen.

Zur Gruppe n) der Nitrone gehören zum Beispiel N-Benzyl-α-phenylnitron, N-Ethyl-αmethylnitron, N-Octyl-a-heptylnitron, N-Lauryl-a-undecylnitron, N-Tetradecyl-a-tridecylnitron, N-Hexadecyl-α-pentadecylnitron, N-Octadecyl-α-heptadecylnitron, N-Hexadecyl-α-heptadecylnitron, N-Ocatadecyl-α-pentadecylnitron, N-Heptadecyl-αheptadecylnitron, N-Octadecyl-α-hexadecylnitron, N-Methyl-α-heptadecylnitron und Nitrone, abgeleitet von N,N-Dialkylhydroxylaminen hergestellt aus hydrierten Talgfettaminen.

Zur Gruppe o) der Aminoxide gehören zum Beispiel Aminoxidderivate wie sie in den U.S. Patenten Nr. 5,844,029 und 5,880,191 beschrieben sind, Didecylmethylaminoxid, Tridecylaminoxid, Tridodecylaminoxid und Trihexadecylaminoxid.

Zur Gruppe p) der Benzofuranone und Indolinone gehören zum Beispiel die in den US-Patenten 4,325,863; 4,338,244; 5,175,312; 5,216,052; 5,252,643; in der DE-A-4316611; in der DE-A-4316622; in der DE-A-4316876; in der EP-A-0589839 oder EP-A-0591102 schriebenen oder 3-[4-(2-Acetoxyethoxy)phenyl]-5,7-di-tert-butyl-benzofuran-2(3H)-on, 5,7-Di-tert-butyl-3-[4-(2-stearoyloxyethoxy)phenyl]benzofuran-2(3H)-on, 3,3'-Bis[5,7-di-tert-butyl-3-(4-[2-hydroxyethoxy]phenyl)benzofuran-2(3H)-on], 5,7-Di-tert-butyl-3-(4-ethoxyphenyl)benzofuran-2(3H)-on, 3-(4-Acetoxy-3,5-dimethylphenyl)-5,7-di-tert-butyl-benzofuran-2(3H)-on, 3-(3,5-Dimethyl-4-pivaloyloxyphenyl)-5,7-di-tert-butyl-benzofuran-2(3H)-on, 3-(3,4-Dimethylphenyl)-5,7-di-tert-butylbenzofuran-2(3H)-on, Irganox® HP-136 der Firma Ciba Specialty Chemicals, Schweiz, und 3-(2,3-Dimethylphenyl)-5,7-di-tert-butyl-benzofuran-2(3H)-on.

Zur Gruppe q) der Thiosynergisten gehören zum Beispiel Dilaurylthiodipropionat oder Distearylthiodipropionat.

Zur Gruppe r) der peroxidzerstörende Verbindungen gehören zum Beispiel Ester der β-Thiodipropionsäure, zum Beispiel der Lauryl-, Stearyl-, Myristyl- oder Tridecylester, Mercaptobenzimidazol oder das Zinksalz des 2-Mercaptobenzimidazols, Zinkdibutyldithiocarbamat, Dioctadecyldisulfid, Pentaerythrit-tetrakis(β-dodecylmercapto)-propionat.

Zur Gruppe s) der basischen Costabilisatoren gehören zum Beispiel Melamin, Polyvinylpyrrolidon, Dicyandiamid, Triallylcyanurat, Harnstoffderivate, Hydrazinderivative, Amine, Polyamide, Polyurethane, Alkali- und Erdalkalisalze höherer Fettsäuren, zum Beispiel Calciumstearat, Zinkstearat, Magnesiumbehenat, Magnesiumstearat, Natriumricinoleat und Kaliumpalmitat, Antimonbrenzcatechinat oder Zinkbrenzcatechinat.

Als weitere Lichtstabilisierungsmittel kommen insbesondere Diphenylcyanacrylate wie Ethyl-2-cyan-3,3-diphenylacrylat in Betracht. Eine weitere bevorzugte Ausführungsform der vorliegenden Erfindung betrifft daher eine Zusammensetzung, worin die Verbindung der Formel (I) N,N'-Bis(formyl)-N,N'-bis(2,2,6,6-tetramethyl-4-piperidyl)-1,6 hexandiamin ist und das weitere Lichtstabilisierungsmittel 2-Cyano-3,3-diphenylacrylsäureethylester ist. Das Gewichtsverhältnis von Verbindung der Formel (I) zu 2-Cyano-3,3-diphenylacrylsäureethylester liegt üblicherweise dann im Bereich von 10:1 bis 1:10, vorzugsweise im Bereich von 5:1 bis 1:5.

Als weiteres Lichtstabilisierungsmittel kommen insbesondere auch sterisch gehinderte Amine in Betracht. Ganz besonders bevorzugt sind polymeranaloge Umsetzungsprodukte aus 4-Amino-2,2,6,6-tetramethylpiperidin und Maleinsäure/C₂₀-C₂₄-a-Olefin-Copolymeren, z. B. Uvinul® 5050 H (BASF Aktiengesellschaft, Ludwigshafen) und das dazu entsprechende polymeranaloge Umsetzungsprodukte mit 4-Amino-1,2,2,6,6-pentamethylpiperidin (z. B. "methyliertes Uvinul® 5050 H"). Eine weitere bevorzugte Ausführungsform der vorliegenden Erfindung betrifft daher eine Zusammensetzung, worin die Verbindung der Formel (I) N,N'-Bis(formyl)-N,N'-bis(2,2,6,6-tetramethyl-4-piperidyl)-1,6 hexandiamin ist und als weiteres Lichtstabilisierungsmittel die polymeranalogen Umsetzungsprodukte aus 4-Amino-2,2,6,6-tetramethylpiperidin und Maleinsäure/C₂₀-C₂₄-α-Olefin-Copolymeren, oder das dazu entsprechende, am Piperidinstickstoffatom methylierte Produkt ist. Das Gewichtsverhältnis von Verbindung der Formel (I) zu den polymeranalogen Umsetzungsprodukten aus 4-Amino-2,2,6,6-tetramethylpiperidin und Maleinsäure/C₂₀-C₂₄-α-Olefin-Copolymeren, oder dem dazu entsprechenden, am Piperidinstickstoffatom methylierte Produkt liegt üblicherweise dann im Bereich von 10:1 bis 1:10, vorzugsweise im Bereich von 5:1 bis 1:5.

Erfindungsgemäß kann die Zusammensetzung auch wenigstens ein unter antistatischen Mitteln, Füll- oder Verstärkungsstoffen und Nukleierungsmitteln ausgewähltes Additiv (Gruppe t) enthalten.

Geeignete antistatische Mittel sind beispielsweise Aminderivate wie N,N-Bis(hydroxyalkyl)alkylamine oder -alkylenamine, Polyethylenglycolester und -ether, ethoxylierte Carbonsäureester- und -amide und Glycerinmono- und - distearate, sowie deren Mischungen.

Geeignete Füll- oder Verstärkungsstoffe umfassen zum Beispiel die bereits zuvor genannten Pigmente, wie Ruß, Graphit, Calciumcarbonat, Silikate, Talk, Mica, Kaolin, Glimmer, Bariumsulfat, Metalloxide und -hydroxide, Holzmehl und Mehle oder Fasern anderer Naturprodukte, synthetische Fasern. Als Beispiele für faserförmige bzw. pulverförmige Füllstoffe kommen außerdem Kohlenstoff- oder Glasfasern in Form von Glasgeweben, Glasmatten oder Glasseidenrovings, Schnittglas, Glaskugeln sowie Wollastonit in Betracht. Die Einarbeitung von Glasfasern kann sowohl in Form von Kurzglasfasern als auch in Form von Endlosfasern (Rovings) erfolgen.

Außerdem kann die erfindungsgemäße Zusammensetzung auch Nukleierungsmittel umfassen. Zu den geeigneten Nukleierungsmittel zählen zum Beispiel anorganische Stoffe, beispielsweise Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z. B. 4-tert-Butylbenzoesäure, Adipinsäure, Diphenylessigsäure, Natriumsuccinat oder Natriumbenzoat; polymere Verbindungen, wie beispielsweise ionische Copolymerisate ("lonomere").

Die Verbindungen aus den Gruppen a) bis s) werden, mit Ausnahme der Benzofuranone der Gruppe p), in üblichen Mengen verwendet, beispielsweise in Mengen von 0,0001 bis 10 Gew.-%, vorzugsweise 0,01 bis 1 Gew.-%, bezogen auf das Gesamtgewicht der Zusammensetzung.

Die Additive der Gruppe t) werden in den üblichen Mengen verwendet. Üblicherweise verwendet man sie in einer Menge von 0 bis 60 Gew.-%, bezogen auf das Gesamtgewicht der Zusammensetzung.

Die in pigmentierten Polymerzusammensetzungen eingesetzten Pigmente liegen in einer speziellen Ausführungsform in feinteiliger Form vor, d. h. sie weisen üblicherweise eine mittlere Teilchengröße der Primärteilchen von weniger als 5 µm (5000 nm) auf. Feinteilige Pigmente neigen jedoch dazu, sich zusammenzulagern und Agglomerate zu bilden. Bei der Verarbeitung der Pigmente im Polymer müssen durch Scherkräfte die Pigmentagglomerate aufgebrochen werden, damit eine feinteilige Verteilung gewährleistet wird. Zur Unterstützung dieses Vorgangs werden üblicherweise Dispergierhilfsmittel zugesetzt.

Üblicherweise in pigmenthaltigen Polymerzusammensetzungen eingesetzte Dispergierhilfsmittel sind Polyethylen- und Polypropylenwachse, Metallseifen, Fettsäureester, Montansäurewachs, wachsartige Polymere oder Amidwachs. Es besteht ganz allgemein ein Bedarf, den Anteil an Dispergierhilfsmittel möglichst gering zu halten.

Ein weit verbreitetes Verfahren zur Weiterverarbeitung von thermoplastischen Kunststoffen ist das Schmelzspinnverfahren. Dabei wird die Polymerzusammensetzung, entweder direkt aus der Herstellung oder nach Aufschmelzen in einem Extruder, durch Spinndüsen gepresst, wobei jede Spinndüse z. B. aus einer Lochplatte mit vielen Bohrungen besteht. Die Polymerschmelze tritt aus den Düsenlöchern als Bündel von Filamenten aus. Beim Spinnen herkömmlicher Polymerzusammensetzungen, die als Dispergierhilfsmittel z. B. Wachs enthalten, wandert jedoch das Wachs aus der Polymerschmelze, so dass sich um die Spinndüsen Wachsablagerungen bilden. Die Schmelzspinnanlage muss abgestellt und gereinigt werden, was naturgemäß kostenintensiv ist. Außerdem scheidet sich das herausgewanderte Wachs auf der Faser ab, so dass sich die Faser in einem anschließenden Verarbeitungsgang beispielsweise schlechter bedrucken lässt. Die als Dispergierhilfsmittel in herkömmlichen pigmenthaltigen Polymerzusammensetzungen eingesetzten Wachse sind daher aus den zuvor genannten Gründen nachteilig. Auch im Trockenspinn- und Nassspinnverfahren ist es von Nachteil, wenn die Polymerzusammensetzung Wachse als Dispergierhilfsmittel enthält.

In Hinblick auf den Stand der Technik war es überraschend und für den Fachmann nicht vorhersehbar, dass die Verbindung der Formel (I) als Dispergierhilfsmittel in einer pigmenthaltigen Polymerzusammensetzung zu fungieren vermag. Eine derartige Wirkung weisen die aus dem Stand der Technik bekannten Stabilisatoren gegen die Einwirkung von Licht, Sauerstoff und/oder Wärme nicht auf.

Ein weiterer Gegenstand der vorliegenden Erfindung ist daher ein Verfahren zur Herstellung einer pigmenthaltigen Polymerzusammensetzung, enthaltend eine kontinuierliche Polymerphase und eine darin dispergierte teilchenförmige Pigmentphase, bei dem man die Polymerzusammensetzung mit dem Pigment in innigen Kontakt bringt und als Dispergierhilfsmittel wenigstens eine Piperidin-Verbindung der Formel (I) 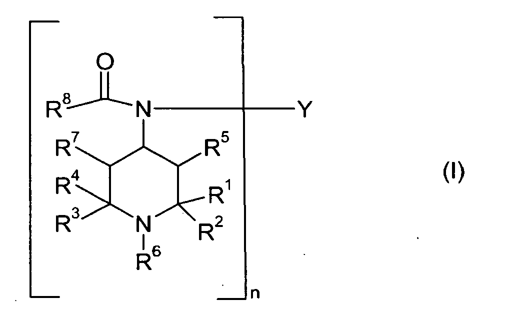 worin n, Y, R¹, R², R³, R⁴, R⁵, R⁶, R⁷ und R⁸ die zuvor genannten Bedeutungen, und insbesondere die als bevorzugt genannten Bedeutungen aufweist, einsetzt.

Bezüglich geeigneter Polymere in der Polymerzusammensetzung wird auf das im Zusammenhang mit der Komponente ii) zuvor Gesagte im vollen Umfang Bezug genommen. Die nach dem erfindungsgemäßen Verfahren erhaltene Polymerzusammensetzung enthält als Polymerkomponente vorzugsweise ein Polymer, das sich durch Spritzguss, Extrusion oder Blasformung weiterverarbeiten lässt. Insbesondere wird die nach dem erfindungsgemäßen Verfahren hergestellte pigmenthaltige Polymerzusammensetzung nach dem Schmelzspinnverfahren, Trockenspinnverfahren oder Nassspinnverfahren, speziell nach dem Schmelzspinnverfahren, weiterverarbeitet.

Die Polymerkomponente ii) ist vorzugsweise ausgewählt aus der Gruppe der Polyolefine, Polyolefincopolymere, Polytetrafluoroethylene, Ethylen-Tetrafluoroethylen-Copolymere, Polyvinylchloride, Polyvinylidenchloride, Polyvinylalkohole, Polyvinylester, Polyvinylalkanale, Polyvinylketale, Polyamide, Polyimide, Polycarbonate, Polycarbonat-Blends, Polyester, Polyester-Blends, Poly(meth)acrylate, Poly(meth)acrylat-Styrolcopolymer-Blends, Poly(meth)acrylat-Polyvinylidendifluorid-Blends, Polyurethane, Polystyrole, Styrolcopolymere, Polyether, Polyetherketone und Polysulfone und deren Mischungen.

Bevorzugt ist die Polymerkomponente ii) ausgewählt aus der Gruppe der Polyolefine, Polyolefincopolymere, Polyvinylalkanale, Polyamide, Polycarbonate, Polycarbonat-Polyester-Blends, Polycarbonat-Styrolcopolymer-Blends, Polyester, Polyester-Blends, Poly(meth)acrylate, Poly(meth)acrylat-Styrolcopolymer-Blends, Poly(meth)acrylat-Polyvinylidendifluorid-Blends, Styrolcopolymere und Polysulfone und deren Mischungen.

Besonders bevorzugt ist die Polymerkomponente ii) ausgewählt unter Polypropylen, Polyamid 6, Polyamid 6,6, Polycarbonat, Polycarbonat-Polyethylenterephthalat-Blends, Polycarbonat-Polybutylen-terephthalat-Blends, Polycarbonat-Acrylnitril/Styrol/Acrylnitril-Copolymer-Blends, Polycarbonat-Acrylnitril/Butadien/Styrol-Copolymer-Blends, Methylmethacrylat-Acrylnitril/Butadien/Styrol-Polymer (MABS), Polyethylenterephthalat, Polybutylenterephthalat, Polymethylmethacrylat, schlagzähmodifiziertes Polymethylmethacrylat, Polybutylacrylat, Polymethylmethacrylat-Polyvinylidendifluorid-Blends, Acrylnitril/Butadien/Styrol-Copolymere (ABS), Acrylnitril/Styrol/Acrylester-Polymer (ASA), Styrol/Acrylnitril-Copolymere (SAN) und Polyphenylensulfon sowie deren Mischungen.

Bezüglich geeigneter und bevorzugter Pigmente wird auf das im Zusammenhang mit der Pigmentkomponente iii) zuvor Gesagte im vollen Umfang Bezug genommen.

Zur Herstellung einer pigmenthaltigen Polymerzusammensetzung, enthaltend eine kontinuierliche Polymerphase und eine darin dispergierte teilchenförmige Pigmentphase bringt man Polymerkomponente, Pigment und Piperidinverbindung der Formel (I) in innigen Kontakt. Als Mischvorrichtungen für die Durchführung des erfindungsgemäßen Verfahrens sind beispielsweise diskontinuierlich arbeitende, beheizte Innenkneter mit oder ohne Stempel, kontinuierlich arbeitende Kneter wie z. B. kontinuierliche Innenkneter, Schneckenkneter mit axial oszillierenden Schnecken, Banbury-Kneter, weiterhin Extruder sowie Walzenstühle, Mischwalzwerke mit beheizten Walzen und Kalander, zu nennen.

Hierfür eignen sich prinzipiell die üblichen, dem Fachmann bekannten Extrudertypen. Diese umfassen üblicherweise ein Gehäuse, eine Antriebseinheit, eine Plastifiziereinheit aus einer oder mehreren mit Transport- und/oder Knetelementen versehenen rotierenden Achsen (Schnecken) sowie eine Steuereinheit. Längs der Schnecke erstrecken sich in Transportrichtung mehrere Zonen, die im erfindungsgemäßen Verfahren eine Einzugszone, wenigstens eine Zone zum Plastifzieren und Homogenisieren und eine Ausstoßzone umfassen. Jede Zone kann wiederum einen oder mehrere Zylinder als kleinste unabhängige Einheit umfassen. Beispiele für geeignete Extruder sind Einschneckenextruder, Doppelschneckenextruder und Mehrwellenextruder. In einer bevorzugten Ausführung wird ein Doppelschneckenextruder verwendet.

Die Polymerkomponente kann in die erfindungsgemäß verwendete Mischvorrichtung in geschmolzener, in der Regel aber in fester Form, zugeführt werden. Wenn die Polymerkomponente in fester Form eingesetzt wird, so kann sie als Granulat, Pulver, Pellet oder Mahlgut vorliegen. Ein Aufschmelzen der Polymerkomponente erfolgt dann beispielsweise bei Temperaturen von 150 bis 300°C.

Das Pigment kann ohne Zusatz, z. B. in fester Form, eingesetzt werden. Vorzugsweise wird das Pigment jedoch in Form einer Masterbatch-Präparation eingesetzt.

Die Polymerkomponente, das Pigment, die Piperidinverbindung sowie gegebenenfalls weitere Additive können auch "kalt"-vermischt werden und das Gemisch wird danach aufgeschmolzen und homogenisiert. Geeignete Temperaturen liegen üblicherweise im Bereich von 150 bis 300 °C.

Die Reihenfolge der Zugabe von Polymerkomponente, Pigment, Piperidinverbindung der Formel (I) ist unkritisch. Die Zugabe kann gemeinsam oder getrennt voneinander, auf einmal oder portionsweise erfolgen. Gegebenenfalls kann es von Vorteil sein, Vormischungen aus Pigmentkomponente und Piperidinverbindung der Formel (I) einzusetzen. Das innige in Kontakt bringen kann außerdem in Gegenwart wenigstens eines Additivs erfolgen, das unter einem Antioxidans, Lichtstabilisierungsmittel, Metalldesaktivator, antistatischem Mittel, Verstärkungs- und Füllstoff, Beschlagverhinderungsmittel, Biozid und von den Verbindungen der Formel (I) verschiedenem Dispergierhilfsmittel ausgewählt ist. Bezüglich geeigneter Antioxidantien, Lichtstabilisierungsmittel, Metalldesaktivatoren, antistatische Mittel, Verstärkungs- und Füllstoffe, Beschlagverhinderungsmittel und Biozide wird hiermit in vollem Umfang auf das zuvor Gesagte Bezug genommen. Geeignete, von der Verbindung der Formel (I) verschiedene Dispergierhilfsmittel sind Polyethylenwachs, Polypropylenwachs, Metallseifen, Fettsäureestern, Montansäurewachs, wachsartige Polymere und Amidwachs. Vorzugsweise beträgt der Anteil des von der Verbindung der Formel (I) verschiedenen Dispergierhilfsmittels weniger als 0,01 Gew.-%, bezogen auf das Gesamtgewicht der Polymerzusammensetzung. In einer besonders bevorzugten Ausführungsform der vorliegenden Erfindung enthält die farbmittelhaltige Polymerzusammensetzung außer der Verbindung der Formel (I) kein weiteres Dispergierhilfsmittel, insbesondere kein Wachs.

Aufgrund des erfindungsgemäßen Verfahrens liegt das Pigment partikulär in der kontinuierlichen Polymerphase vor. Eine Agglomeration und/oder Sedimentation des Pigments findet nicht oder nur in untergeordnetem Maße statt. Eine nach dem erfindungsgemäßen Verfahren hergestellte pigmenthaltige Polymerzusammensetzung weist die zuvor genannten Nachteile, die eine herkömmliche pigmentlhaltige Polymerzusammensetzung hat, nicht auf.

Ein weiterer Gegenstand der vorliegenden Erfindung betrifft daher die Verwendung einer Piperidinverbindung der Formel (I) als Dispergierhilfsmittel für Pigmente in Polymerzusammensetzungen.

Die erfindungsgemäße Verwendung einer Piperidinverbindung der Formel (I) bietet daher eine Reihe von Vorteilen:

Die Piperidinverbindung der Formel (I) vermag Pigmente in Polymerzusammensetzungen sehr gut zu dispergieren. Daher kann auf die Mitverwendung eines von der Verbindung I verschiedenen Dispergierhilfsmittels, insbesondere auf die Verwendung von Wachs als Dispergierhilfsmittel, in der Regel verzichtet werden. Bei Mitverwendung eines von der Verbindung der Formel (I) verschiedenen Dispergierhilfsmittels liegt dessen Anteil unter 0,01 Gew.-%, bezogen auf das Gesamtgewicht der farbmittelhaltigen Polymerzusammensetzung. In einer besonders bevorzugten Ausführungsform der Erfindung wird kein von der Verbindung der Formel (I) verschiedenes Dispergierhilfsmittel eingesetzt.

Die Farbstärke einer pigmenthaltigen Polymerzusammensetzung ist von dem erreichten Dispergiergrad des Farbmittels abhängig. Je feinteiliger das Pigment verteilt ist, um so farbtiefer erscheint das eingefärbte Polymer. Im Gegensatz zu aus dem Stand der Technik bekannten Stabilisatoren gegen die Einwirkung von Licht, Sauerstoff und/oder Wärme vermag die Piperidinverbindung der Formel (I) Pigmente sehr effektiv in Polymerzusammensetzungen zu dispergieren. Daher ist ein geringerer Pigmentgehalt ausreichend, um die gleiche Farbstärke im Vergleich zu einer herkömmlichen pigmenthaltigen Polymerzusammensetzung, die einen aus dem Stand der Technik bekannten Stabilisator gegen die Einwirkung von Licht, Sauerstoff und/oder Wärme enthält, zu erzielen.

### Anwendungstechnische Untersuchungen

Verwendete Stabilisatoren:
- S1: Uvinul® 4050H der Fa. BASF, Aktiengesellschaft, Ludwigshafen (N,N'-Bis(formyl)-N,N'-bis(2,2,6,6-tetramethyl-4-piperidyl)-1,6-hexandiamin), CAS-Nr. 124172-53-8;
- S3: Uvinul® 3035 der Fa. BASF Aktiengesellschaft, Ludwigshafen, 2-Cyano-3,3-diphenyl-acrylsäureethylester, CAS-Nr. 5232-99-5;
- S4: Tinuvin® 234 der Fa. Ciba Specialty Chemicals, Schweiz, (2-(2H-Benzotriazol-2-yl)-4,6-bis-(1-methyl-1-phenylethyl)-phenol, CAS-Nr. 70321-86-7;
- S5: Tinuvin® 320 der Fa. Ciba Specialty Chemicals, Schweiz, (2-(2H-Hydroxy-3,5-di-tert-butylphenyl)benzotriazol), CAS-Nr. 3864-71-7:
- S6: Tinuvin® 770, der Fa. Ciba Specialty Chemicals, Schweiz, (Bis-(2,2,6,6-tetramethyl-4-piperidinyl)-sebacat), CAS-Nr. 52829-07-9;
- S7: Tinuvin® 783, der Fa. Ciba Specialty Chemicals, Schweiz, (Gemisch aus Poly-{[6-[(1,1,3,3-tetramethylbutyl)-imino]-1,3,5-triazin-2,4-diyl][2-(2,2,6,6-tetramethylpiperidyl)-amino]-hexamethylen-[4-(2,2,6,6-tetramethylpiperidyl)-imino]} und Poly-(N-β-hydroxyethyl-2,2,6,6-tetramethyl-4-hydroxy-piperidylsuccinat);
- S8: Tinuvin® P (2-(2-Hydroxy-5-methylphenyl)benzotriazol) der Fa. Ciba Specialty Chemicals, Schweiz, CAS Nr. 2440-22-4;
- S9: Chimassorb® 2020 der Fa. Ciba Specialty Chemicals, Schweiz, (1,6-Hexandiamine, N,N'-bis(2,2,6,6-tetramethyl-4-piperidinyl)-, Polymer mit 2,4,6-Trichloro-1,3,5-triazine, Reaktionsprodukt mit N-Butyl-1-butanamin und N-Butyl-2,2,6,6-tetramethyl-4-piperidinamin) CAS-Nr. 192268-64-7;
- S10: Chimassorb® 944 der Fa. Ciba Speciality Chemicals, Schweiz, (Poly[[6-[(1,1,3,3-tetramethylbutyl)amino]-1,3,5-triazin-2,4-diyl][(2,2,6,6-tetramethyl-4-piperidinyl)imino]-1,6-hexanediyl [2,2,6,6-tetramethyl-4-piperidinyl)imino]] CAS-Nr. 71878-19-8;
- S11: Cyasorb® 3346 der Fa. Cytec, USA, (Poly[[6-(morpholino)-s-triazine-2,4-diyl][(2,2,6,6-tetramethyl-4-piperidyl)imino]-hexamethylene [(2,2,6,6-tetramethyl-4-piperidyl) imino]]) CAS-Nr. 082451-48-7;
- S12: Cyasorb® 3529 der Fa. Cytec, USA, 1,6-Hexandiamin, N,N'-bis(2,2,6,6-tetramethy)-4-piperidinyl)-, Polymer mit Morpholin-2,4,6-trichloro-1,3,5-triazine, CAS-Nr. 193098-40-7;
- S13: Cyasorb® 3853 der Fa. Cytec, USA, CAS-Nr. 167078-06-0; 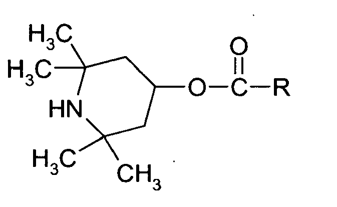 R = C₁₁-C₂₀, vorzugsweise C₁₆-C₁₈
- S14: Hostavin® N 30 der Fa. Clariant, Frankfurt/Main, Polymer aus 2,2,4,4-Tetramethyl-7-oxa-3,20-diaza-dispiro[5.1.11.2]-heneicosan-21-on und Epichlorhydrin, CAS-Nr.: 202483-55-4;
- S15: Irganox® 1098 der Fa. Ciba Specialty Chemicals, Schweiz, Phenylpropanamid-N,N-1,6-hexandiylbis-[3,5-bis-(1,1-dimethylethyl)-4-hydroxy], CAS-Nr.: 23128-74-7.

### Beispiel 1: Belichtung und Ofenlagerung von weiß pigmentiertem ABS

In einem Intensivmischer wurden 0,5 Gew.-% S1, 0,35 Gew.-% S3, ABS vom Typ Terluran 967K (Fa. BASF Aktiengesellschaft, Ludwigshafen, Deutschland) und 1,0 Gew.-% TiO₂ bezogen auf das Gewicht des gesamten Gemischs, gemischt und danach über einen Laborextruder bei einer Temperatur von 240 °C homogenisiert und granuliert. Das anfallende Granulat wurde zu 2 mm dicken Prüfkörpern gespritzt.

Diese wurden nach DIN 54004 bei 45 °C belichtet (Tabelle 1) bzw. nach DIN 53383 im Umluftofen bei 90 °C gelagert (Tabelle 2). Gemessen wurde die Vergilbung (Yellowness Index, YI) nach 0, 500, 1000, 1500 und 2000 Stunden Belichtung bzw. nach 0, 250, 500 und 750 Stunden Ofenlagerung.

Als Kontrolle diente ein Prüfkörper, der wie zuvor in Beispiel 1 beschrieben hergestellt wurde, jedoch keine zugefügte Stabilisatormischung enthielt. Als Vergleich diente ein Prüfkörper, der wie zuvor in Beispiel 1 beschrieben hergestellt wurde, die Stabilisatormischung bestand jedoch im Gegensatz zu Beispiel 1 aus 0,5 Gew.-% S6 und 0,5 Gew.-% S8 anstelle von 0,5 Gew.-% S1 und 0,35 Gew.-% S3.

**Tabelle 1: Belichtung von weiß pigmentiertem ABS bei 45°C**

| Stabilisatormischung | YI nach Stunden Belichtung | | | | |
|---|---|---|---|---|---|
| | 0 h | 500 h | 1 000 h | 1500h | 2000 h |
| Unstabilisiert | 17,3 | 16,9 | 19,7 | 18 | 24 |
| 0,5 Gew.-% S1 | 18 | 9,1 | 9,8 | 8,5 | 9,2 |
| 0,35 Gew.-% S3 | | | | | |
| 0,5 Gew.-% S6 | 18,4 | 11,9 | 12 | 9,8 | 10,1 |
| 0,5 Gew.-% S8 | | | | | |

**Tabelle 2: Ofenlagerung von weiß pigmentiertem ABS bei 90°C**

| Stabilisatormischung | YI nach Stunden | | | |
|---|---|---|---|---|
| | 0 h | 250 h | 500 h | 750 h |
| 0,5 Gew.-% S1 | 18 | 21,5 | 19,9 | 22 |
| 0,35 Gew.-% S3 | | | | |
| 0,5 Gew.-% S6 | 18,4 | 22,9 | 25,1 | 26,8 |
| 0,5 Gew.-% S8 | | | | |

Der YI-Wert stellt ein Maß für die Schädigung des Polymers dar. Je kleiner dieser Wert ist, desto besser ist die Wirkung des Stabilisators. Wie man den Tabellen 1 und 2 entnehmen kann, ist die Stabilisatorkombination aus S1 (N,N'-Bis(formyl)-N,N'-bis(2,2,6,6-tetramethyl-4-piperidyl)-1,6-hexandiamin) und S3 (2-Cyano=3,3-diphenyl-acrylsäure-ethylester) der Stabilisatorkombination aus S6 (Bis-(2,2,6,6-tetramethyl-4-piperidinyl)-sebacat) und S8 (2-(2-Hydroxy-5-methylphenyl)benzotriazol) sowohl bei Belichtung bei 45°C als auch bei Ofenlagerung bei 90 °C überlegen. Mit der Stabilisatorkombination aus S1 (N,N'-Bis(formyl)-N,N'-bis(2,2,6,6-tetramethyl-4-piperidyl)-1,6-hexandiamin) und S3 (2-Cyano-3,3-diphenyl-acrylsäureethylester) wird eine längere Stabilisierungsdauer erzielt wird.

### Beispiel 2: Ofenlagerung von grau pigmentiertem ABS

Man wiederholte Beispiel 1, setzte aber 2,0 Gew.-% Sicostyren Grau 00-6295 anstelle von 1 Gew.-% TiO₂ ein. Gemessen wurde die Vergilbung (Yellowness Index, YI) nach 200, 400, 600, 800 und 1000 h Ofenlagerung.

**Tabelle 3: Ofenlagerung von grau pigmentiertem ABS bei 90 °C**

| Stabilisatormischung | YI nach Stunden | | | | |
|---|---|---|---|---|---|
| | 200 h | 400 h | 600 h | 800 h | 1000 h |
| 0,5 Gew.-% S1 | 0,2 | 0,4 | 0,7 | 1,1 | 1,5 |
| 0,35 Gew.-% S3 | | | | | |
| 0,5 Gew.-% S6 | 0,3 | 0,5 | 1 | 1,5 | 1,7 |
| 0,5 Gew.-% S8 | | | | | |

### Beispiel 3: Farbäquivalente und Restreißkraft von pigmentierter Polypropylen-Faser

Basel HP 561 R (Polypropylen der Fa. BaseII, Niederlande) wurde mit den in Tabellen 4 und 5 angeführten Stabilisatoren und Pigmenten in einem Intensivmischer gemischt, über einen Laborextruder bei einer Temperatur von 182°C homogenisiert und über eine Faseranlage versponnen. Die so hergestellten Fasern wurden bezüglich ihrer Farbäquivalente und Restreißkraft untersucht.

Als Kontrolle diente eine Polypropylen-Faser, die als Pigment 0,3 Gew.-% Paliotol gelb K 1841 oder 0,3 Gew.-% PV Echtgelb HR enthielt.

Als Vergleich dienten die folgenden Stabilisatoren: S7; S9; S10; S11; S12; und S13.

**Tabelle 4: Farbäquivalente von pigmentierter Polypropylen-Faser**

| Stabilisator/Pigment-Gemisch | FAE |
|---|---|
| 0,3 Gew.-% Paliotol gelb K1841 (Kontrolle) | 100 |
| 0,3 Gew.-% PV Echtgelb HR (Kontrolle) | 100 |
| 0,2 Gew.-% S1 | |
| 0,3 Gew.-% Paliotol gelb K1841 | 50 |
| 0,2 Gew.-% S9, | 99 |
| 0,3 Gew.-% Paliotol gelb K1841 | |
| 0,2 Gew.-% S7 | 158 |
| 0,3 Gew.-% Paliotol gelb K1841 | |
| 0,2 Gew.-% S10 | 107 |
| 0,3 Gew.-% Paliotol gelb K1841 | |
| 0,2 Gew.-% S11 | 129 |
| 0,3 Gew.-% Paliotol gelb K1841 | |
| 0,2 Gew.-% S12 | 150 |
| 0,3 Gew.-% Paliotol gelb K1841 | |
| 0,2 Gew.-% S13 | 123 |
| 0,3 Gew.-% Paliotol gelb K1841 | |
| 0,2 Gew.-% S1 | 81 |
| 0,3 Gew.-% PV Echtgelb HR | |
| 0,2 Gew.-% S9, | 95 |
| 0,3 Gew.-% PV Echtgelb HR | |
| 0,2 Gew.-% S7 | |
| 0,3 Gew.-% PV Echtgelb HR | 162 |
| 0,2 Gew.-% S10 | |
| 0,3 Gew.-% PV Echtgelb HR | 110 |
| 0,2 Gew.-% S11 | |
| 0,3 Gew.-% PV Echtgelb HR | 144 |
| 0,2 Gew.-% S12 | |
| 0,3 Gew.-% PV Echtgelb HR | 118 |

Der Farbäquivalent-Wert (FAE) gibt bezogen auf den Kontrollwert 100 (pigmentiertes Polypropylen ohne Stabilisator beziehungsweise Dispergierhilfsmittel) relativ an, wie viele Teile Pigment nötig sind, um den gleichen Farbeffekt zu erhalten. Je kleiner dieser Wert ist, desto besser ist die Wirkung des Stabilisators bzw. des Dispergierhilfsmittels. S1 zeigt für Paliotol gelb K1841 und PV Echtgelb HR bei den Farbäquivalenten deutlich bessere Werte als die übrigen untersuchten Stabilisatoren.

**Tabelle 5: Restreißkraft von pigmentierter Polypropylen-Faser**

| Stabilisator/Pigment-Gemisch | Restreißkraft nach Stunden Bewitterung | | | | | |
|---|---|---|---|---|---|---|
| | 500 h | 1000 h | 1500 h | 2000 h | 2500 h | 3000 h |
| 0,3 Gew.-% Paliotol gelb K1841 | 53% | spröde | | | | |
| 0,3 Gew.-% Paliotol gelb 0961 | 21% | spröde | | | | |
| 0,2 Gew.-% S1 | 84% | 78% | 75% | 68% | 70% | 54% |
| 0,3 Gew.-% Paliotol gelb K1841 | | | | | | |
| 0,2 Gew.-% S9, | 78% | 70% | 63% | 58% | 49% | spröde |
| 0,3 Gew.-% Paliotol gelb K1841 | | | | | | |
| 0,2 Gew.-% S7 | 87% | 74% | 63% | 65% | 60% | 52% |
| 0,3 Gew.-% PV Echtgelb HR | | | | | | |
| 0,2 Gew.-% S10 | 82% | 71% | 66% | 59% | 44% | 39% |
| 0,3 Gew.-% Paliotol gelb K1841 | | | | | | |
| 0,2 Gew.-% S11 | 73% | 70% | 56% | 47% | spröde | |
| 0,3 Gew.-% Paliotol gelb K1841 | | | | | | |
| 0,2 Gew.-% S12 | 75% | 66% | 54% | 48% | spröde | |
| 0,3 Gew.-% Paliotol gelb K1841 | | | | | | |
| 0,2 Gew.-% S13 | 81% | 73% | 66% | 48% | spröde | |
| 0.3 Gew.-% Paliotol gelb K1841 | | | | | | |
| 0,2 Gew.-% S14 | 76% | 59% | 55% | 30% | spröde | 76% |
| 0,3 Gew.-% Paliotol gelb K1841 | | | | | | |
| 0,2 Gew.-% S1 | 50% | 14% | | | | |
| 0,3 Gew.-% Paliotol gelb 0961 | | | | | | |
| 0,2 Gew.-% S9, | 41% | spröde | | | | |
| 0,3 Gew.-% Paliotol gelb 0961 | | | | | | |
| 0,2 Gew.-% S7 | 70% | 10% | | | | |
| 0,3 Gew.-% Paliotol gelb 0961 | | | | | | |
| 0,2 Gew.-% S10 | 55% | spröde | | | | |
| 0,3 Gew.-% Paliotol gelb 0961 | | | | | | |
| 0,2 Gew.-% S11 | 52% | spröde | | | | |
| 0,3 Gew.-% Paliotol gelb 0961 | | | | | | |
| 0,2 Gew.-% S12 | 53% | spröde | | | | |
| 0,3 Gew.-% Paliotol gelb 0961 | | | | | | |
| 0,2 Gew.-% S13 | spröde | | | | | |
| 0,3 Gew.-% Paliotol gelb 0961 | | | | | | |
| 0,2 Gew.-% S14 | 46% | spröde | | | | |
| 0,3 Gew.-% Paliotol gelb 0961 | | | | | | |

Die aufgeführte Restreißkraft gibt den Anteil der Kraft an, der benötigt wird, um eine Faser zu zerreißen, nachdem diese 500, 1000, 1500, 2000, 2500 und 3000 h nach DIN EN ISO 4892-2 bewittert wurde. Dabei wird der Anfangswert (0 h Bewitterung) als Kontrolle auf 100 % gesetzt. Je größer die Restreißkraft ist, desto besser ist die Wirkung des Stabilisators.

Wie man Tabelle 5 entnehmen kann, zeigt S1 (N,N'-Bis(formyl)-N,N'-bis(2,2,6,6-tetramethyl-4-piperidyl)-1,6-hexandiamin) für Paliotol gelb K1841 bei der Restreißkraft deutlich bessere Werte als die übrigen untersuchten Stabilisatoren.

### Beispiel 4: Restreißkraft von pigmentierter Polyamid-Faser

Polyamid Ultramid B3S (Garn 1360 f 68) (Fa BASF Aktiengesellschaft, Ludwigshafen) wurde mit den in Tabelle 6 angeführten Stabilisatoren und mit jeweils 1,0 Gew.-% Palamid Gelb 21-0705 und jeweils 0,85 Gew.-% Ultramid PC1 (BASF Aktiengesellschaft, Ludwigshafen) in einem Intensivmischer gemischt, über einen Laborextruder bei einer Temperatur von 260 °C homogenisiert und über eine Faseranlage versponnen. Die so hergestellten Garne wurden bezüglich ihrer Restreißkraft untersucht.

**Tabelle 6: Restreißkraft von pigmentierter Polyamid-Faser**

| Stabilisator-Gemisch | Restreißkraft nach Zyklen Belichtung | | | | |
|---|---|---|---|---|---|
| | 2. Zyklus | 4. Zyklus | 6. Zyklus | 8. Zyklus | 10.Zyklus |
| unstabilisiert | 0% | | | | |
| 0,2 Gew.-% S1 | 91% | 84% | 82% | 73% | 72% |
| 0,1 Gew.-% S4 | 77% | 74% | 52% | 37% | 21% |
| 0,2 Gew.-% S10 | | | | | |

Die aufgeführte Restreißkraft gibt den Anteil der Kraft an, der benötigt wird, um die Faser zu zerreißen, nachdem dieses in nach DIN 75 202-3 A10 belichtet worden ist. Dabei wird der Anfangswert (0 Zyklen Belichtung) als Kontrolle auf 100 % gesetzt. Je größer die Restreißkraft, desto besser ist die Wirkung des Stabilisators.

### Beispiel 5: Farbänderung bei pigmentiertem, dickwandigem Polyamid

Polyamid 6 des Typs Ultramid B3S (Fa. BASF Aktiengesellschaft, Ludwigshafen) wurde mit den in Tabellen 7 und 8 angeführten Stabilisatoren und Pigmenten in einem Intensivmischer gemischt, über einen Laborextruder bei einer Temperatur von 261 °C homogenisiert und granuliert. Das anfallende Granulat wurde zu 3 bzw. 2 mm dicken Prüfplättchen gespritzt. Diese wurden nach DIN 75202-3 bei 100°C belichtet (Tabelle 7) bzw. nach DIN 53387 bei 65°C bewittert (Tabelle 8).

Gemessen wurde jeweils die Farbänderung (DE*-(CIELAB)) nach 1, 2, 3, 4 und 5 Belichtungszyklen bzw. nach 1000, 1500, 2000, 2300, 2500 und 3000 h Bewitterung. Der DE*-(CIELAB)-Wert stellt ein Maß für die Effektivität des Stabilisators dar. Je kleiner dieser Wert ist, desto besser ist die Wirkung des Stabilisators.

**Tabelle 7: Farbänderung bei Belichtung von pigmentiertem, dickwandigem Polyamid**

| Stabilisator/Pigment-Gemisch | DE*-(CIELAB) nach Zyklen Belichtung | | | | |
|---|---|---|---|---|---|
| | 1. Zyklus | 2. Zyklus | 3. Zyklus | 4. Zyklus | 5. Zyklus |
| 0,2 Gew.-% S6 | 0,4 | 1,4 | 1,9 | 2,2 | 3,3 |
| 1,0 Gew.-% Sicoversal-Grau 22/24000 | | | | | |
| 0,2 Gew.-% S1 | 0,2 | 0,5 | 1 | 1,3 | 1,6 |
| 1,0 Gew.-% Sicoversal-Grau 22/24000 | | | | | |
| 0,2 Gew.-% S6 (glasfaserverstärkt) | 0,5 | 1,2 | 1,8 | 2,4 | 3,4 |
| 1,0 Gew.-% Sicoversal-Grau 22/24000 | | | | | |
| 0,2 Gew.-% S1 (glasfaserverstärkt) | 0,2 | 0,5 | 1 | 1,3 | 1,6 |
| 1,0 Gew.-% Sicoversal-Grau 22/24000 | | | | | |

Wie man Tabelle 7 entnehmen kann, erzielt man mit S1 (N,N'-Bis(formyl)-N,N'-bis(2,2,6,6-tetramethyl-4-piperidyl)-1,6-hexandiamin) eine deutlich bessere Stabilisierung als mit S6 (Bis-(2,2,6,6-tetramethyl-4-piperidinyl)-sebacat) bei gleicher Menge an eingesetztem Stabilisator.

**Tabelle 8: Farbänderung bei Bewitterung von blaupigmentiertem (1,0 % Sicopal Blau K 6310), dickwandigem Polyamid**

| Stabilisator | DE*(CIELAB) nach Stunden Bewitterung | | |
|---|---|---|---|
| | 1000 h | 2000 h | 3000 h |
| unstabilisiert | 6,8 | 13,6 | 16,7 |
| 0,2 Gew.-% S1 | 0,32 | 1,7 | 3,4 |
| 0,2 Gew.-% S6 | 0,29 | 1,8 | 4,6 |

Wie man Tabelle 8 entnehmen kann, erzielt man mit S1 (N,N'-Bis(formyl)-N,N'-bis(2,2,6,6-tetramethyl-4-piperidyl)-1,6-hexandiamin) eine deutlich bessere Stabilisierung als mit S6 (Bis-(2,2,6,6-tetramethyl-4-piperidinyl)-sebacat) bei gleicher Menge an eingesetztem Stabilisator.

## Patentansprüche

1. Zusammensetzung, enthaltend:
i) als Stabilisator wenigstens eine Piperidin-Verbindung der Formel (I) 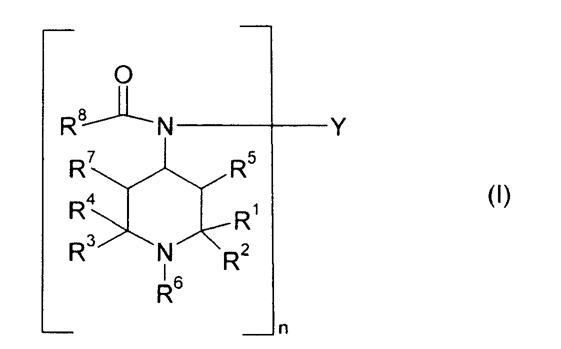 worin
n für 1 oder 2 steht;
R¹, R², R³ und R⁴ unabhängig voneinander für C₁-C₄-Alkyl stehen, oder R¹ und R² und/oder R³ und R⁴ gemeinsam mit dem Kohlenstoffatom, an das sie ge- bunden sind, einen 4-, 5-, 6-, 7- oder 8-gliedrigen Ring bilden;
R⁵, R⁷ unabhängig voneinander für Wasserstoff oder C₁-C₄-Alkyl steht;
R⁶ für Wasserstoff, Oxyl, Hydroxy, Acyl, C₁-C₄₀-Alkyl oder C₂-C₄₀-Alkenyl steht, wobei die zwei zuletzt genannten Reste durch eine oder mehrere nicht be- nachbarte Gruppen, die unabhängig voneinander ausgewählt sind unter Sauerstoff, Schwefel, -NH- und N(C₁-C₁₀-Alkyl)-, unterbrochen sein können und/oder einen oder mehrere Substituenten tragen können, die ausgewählt sind unter Cyano, Hydroxy, Amino und Aryl, wobei Aryl seinerseits ein- oder mehrfach durch C₁-C₄-Alkyl, Halogen, C₁-C₄-Alkoxy, Di-(C₁-C₄-alkyl)amino, Methylendioxy oder Ethylendioxy substituiert sein kann;
R⁸ für Wasserstoff oder C₁-C₁₀-Alkyl steht; und
wenn n für 1 steht
Y für Wasserstoff, C₁-C₂₂-Alkyl, das unsubstituiert ist oder einfach oder mehr- fach durch gleiche oder verschiedene Resten R^{a} substituiert ist und durch eine oder mehrere nicht benachbarte Gruppen, die unabhängig voneinan- der ausgewählt sind unter Sauerstoff, Schwefel, -NH- und N(C₁-C₁₀-Alkyl)-, unterbrochen sein kann; oder Y für C₃-C₂₂-Alkenyl, C₃-C₁₂-Cycloalkyl, C₆-C₁₂-Bicycloalkyl, C₃-C₁₀-Cycloalkenyl steht, worin die vier zuletzt genannten Reste einen oder mehrere Reste R^{a} tragen können und C₃-C₁₂-Cycloalkyl, C₆-C₁₂-Bicycloalkyl, C₃-C₁₀-Cycloalkenyl außerdem eine oder mehrere Al- kylgruppen tragen können, oder Y für Aryl steht, worin Aryl ein- oder mehrfach durch Halogen, C₁-C₄-Alkyl, C₁-C₄-Alkoxy, C₁-C₄-Alkoxycarbonyl, Methylendioxy, Ethylendioxy oder Di-(C₁-C₄-alkyl)amino substituiert sein kann; oder Y für einen heterocyclischen Ring steht, der gegebenenfalls ein oder meh- rere gleiche oder verschiedene Reste trägt, die unter Oxyl, Hydroxy, Acyl, C₁-C₄₀-Alkyl oder C₂-C₄₀-Alkenyl ausgewählt sind, wobei C₁-C₄₀-Alkyl und C₂-C₄₀-Alkenyl durch eine oder mehrere nicht benachbarte Gruppen, die unabhängig voneinander ausgewählt sind unter Sauerstoff, Schwefel, -NH- und N(C₁-C₁₀-Alkyl)-, unterbrochen sein können und/oder einen oder meh- rere Substituenten tragen können, die unabhängig voneinander ausgewählt sind unter Cyano, Hydroxy, Amino, und Aryl, wobei Aryl seinerseits ein- oder mehrfach durch C₁-C₄-Alkyl, Halogen, C₁-C₄-Alkoxy, Di-(C₁-C₄-alkyl)- amino, Methylendioxy oder Ethylendioxy substituiert sein kann; wobei R^{a} für Cyano, Amino, Hydroxy, Hydroxy-C₁-C₄-alkoxy, C₁-C₄-Alkoxy- carbonyl, Aryl oder Heterocyclyl steht, wobei die zwei letztgenannten Reste ihrerseits ein- oder mehrfach durch Halogen, Hydroxy, C₁-C₄-Alkyl, C₁-C₄-Alkoxy, C₁-C₄-Alkoxycarbonyl, Methylendioxy, Ethylendioxy oder Di-(C₁-C₄-alkyl)amino substituiert sein können;
und wenn n für 2 steht
Y für eine zweiwertige Gruppe mit 1 bis 30 Brückenatomen zwischen den flankierenden Bindungen steht, wobei die zweiwertige Gruppe Strukturein- heiten aufweist, die ausgewählt sind unter Alkylen, Alkenylen, Arylen, Hete- rocyclylen, Cycloalkylen, wobei Alkylen und Alkenylen ein- oder mehrfach durch Sauerstoff, Schwefel, -NH- und -N(C₁-C₁₀-Alkyl)- unterbrochen sein können, und Arylen, Heterocyclyl und Cycloalkylen ein- oder mehrfach durch C₁-C₄-Alkyl substituiert sein können;
ii) wenigstens ein Polymer ausgewählt unter Polyamiden, Copolyamiden und Copolymeren von Styrol oder α-Methylstyrol; und
iii) wenigstens ein Pigment.

2. Zusammensetzung nach Anspruch 1, worin R¹, R², R³ und R⁴ in Formel I jeweils für Methyl und R⁵ und R⁷ jeweils für Wasserstoff stehen.

3. Zusammensetzung nach Anspruch 1 oder 2, worin R⁶ in Formel I für Wasserstoff steht.

4. Zusammensetzung nach einem der vorhergehenden Ansprüche, worin R⁸ für H steht.

5. Zusammensetzung nach einem der Ansprüche 1 bis 4, worin in Formel (I) n für 2 steht und Y für eine 2- bis 10 gliedrige Alkylenkette steht.

6. Zusammensetzung nach einem der vorhergehenden Ansprüche, worin die Verbindung der Formel (I) N,N'-Bis(formyl)-N,N'-bis(2,2,6,6-tetramethyl-4-piperidyl)-1,6-hexandiamin ist.

7. Zusammensetzung nach Anspruch 1, wobei das Copolymer von Styrol ein Copolymer von Styrol mit Acrylnitril und Butadien und/oder Acryl- oder Methacrylestern ist.

8. Zusammensetzung nach einem der vorhergehenden Ansprüche, worin die Zusammensetzung außerdem wenigstens ein unter Antioxidantien, Lichtstabilisierungsmitteln, Metalldesaktivatoren, antistatischen Mitteln, Verstärkungs- und Füllstoffen, Beschlagverhinderungsmittel und Bioziden ausgewähltes Additiv enthält.

9. Zusammensetzung nach Anspruch 8, worin das Lichtstabilisierungsmittel ein 2-Cyano-3,3-diphenylacrylsäureester ist.

10. Verfahren zur Herstellung einer pigmenthaltigen Polymerzusammensetzung, enthaltend eine kontinuierliche Polymerphase und eine darin dispergierte teilchenförmige Pigmentphase, bei dem man die Polymerzusammensetzung mit dem Pigment in innigen Kontakt bringt und als Dispergierhilfsmittel wenigstens eine Piperidin-Verbindung der Formel (I) 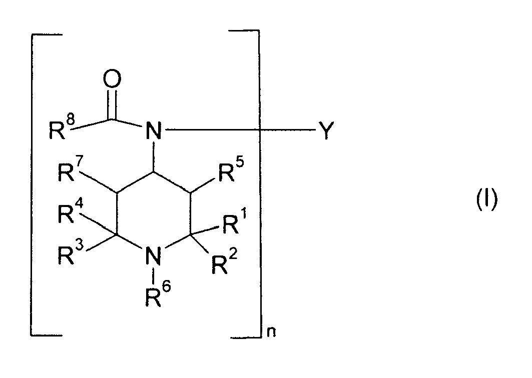 worin
n für 1 oder 2 steht;
R¹, R², R³ und R⁴ unabhängig voneinander für C₁-C₄-Alkyl stehen, oder R¹ und R² und/oder R³ und R⁴ gemeinsam mit dem Kohlenstoffatom, an das sie ge- bunden sind, einen 4-, 5-, 6-, 7- oder 8-gliedrigen Ring bilden;
R⁵, R⁷ unabhängig voneinander für Wasserstoff oder C₁-C₄-Alkyl steht;
R⁶ für Wasserstoff, Oxyl, Hydroxy, Acyl, C₁-C₄₀-Alkyl oder C₂-C₄₀-Alkenyl steht, wobei die zwei zuletzt genannten Reste durch eine oder mehrere nicht be- nachbarte Gruppen, die unabhängig voneinander ausgewählt sind unter Sauerstoff, Schwefel, -NH- und N(C₁-C₁₀-Alkyl)-, unterbrochen sein können und/oder einen oder mehrere Substituenten tragen können, die ausgewählt sind unter Cyano, Hydroxy, Amino und Aryl, wobei Aryl seinerseits ein- oder mehrfach durch C₁-C₄-Alkyl, Halogen, C₁-C₄-Alkoxy, Di-(C₁-C₄-alkyl)amino, Methylendioxy oder Ethylendioxy substituiert sein kann;
R⁸ für Wasserstoff oder C₁-C₁₀-Alkyl steht; und
wenn n für 1 steht
Y für Wasserstoff, C₁-C₂₂-Alkyl, das unsubstituiert ist oder einfach oder mehr- fach durch gleiche oder verschiedene Resten R^{a} substituiert ist und durch eine oder mehrere nicht benachbarte Gruppen, die unabhängig voneinan- der ausgewählt sind unter Sauerstoff, Schwefel, -NH- und N(C₁-C₁₀-Alkyl)-, unterbrochen sein kann; oder
Y für C₃-C₂₂-Alkenyl, C₃-C₁₂-Cycloalkyl, C₆-C₁₂-Bicydoalkyl, C₃-C₁₀-Cyclo- alkenyl steht, worin die vier zuletzt genannten Reste einen oder mehrere Reste R^{a} tragen können und C₃-C₁₂-Cycloalkyl, C₆-C₁₂-Bicycloalkyl, C₃-C₁₀-Cycloalkenyl außerdem eine oder mehrere Alkylgruppen tragen kön- nen, oder,
Y für Aryl steht, worin Aryl ein- oder mehrfach durch Halogen, C₁-C₄-Alkyl, C₁-C₄-Alkoxy, C₁-C₄-Alkoxycarbonyl, Methylendioxy, Ethylendioxy oder Di-(C₁-C₄-alkyl)amino substituiert sein kann; oder
Y für einen heterocyclischen Ring steht, der gegebenenfalls ein oder mehrere gleiche oder verschiedene Reste trägt, die unter Oxyl, Hydroxy, Acyl, C₁-C₄₀-Alkyl oder C₂-C₄₀-Alkenyl ausgewählt sind, wobei C₁-C₄₀-Alkyl und C₂-C₄₀-Alkenyl durch eine oder mehrere nicht benachbarte Gruppen, die unabhängig voneinander ausgewählt sind unter Sauerstoff, Schwefel, -NH- und N(C₁-C₁₀-Alkyl)-, unterbrochen sein können und/oder einen oder meh- rere Substituenten tragen können, die unabhängig voneinander ausgewählt sind unter Cyano, Hydroxy, Amino und Aryl, wobei Aryl seinerseits ein- oder mehrfach durch C₁-C₄-Alkyl, Halogen, C₁-C₄-Alkoxy, Di-(C₁-C₄-alkyl)- amino, Methylendioxy oder Ethylendioxy substituiert sein kann; wobei R^{a} für Cyano, Amino, Hydroxy, Hydroxy-C₁-C₄-alkoxy, C₁-C₄-Alkoxy- carbonyl, Aryl oder Heterocyclyl steht, wobei die zwei letztgenannten Reste ihrerseits ein- oder mehrfach durch Halogen, Hydroxy, C₁-C₄-Alkyl, C₁-C₄-Alkoxy, C₁-C₄-Alkoxycarbonyl, Methylendioxy, Ethylendioxy oder Di-(C₁-C₄-alkyl)amino substituiert sein können;
und wenn n für 2 steht
Y für eine zweiwertige Gruppe mit 1 bis 30 Brückenatomen zwischen den flankierenden Bindungen steht, wobei die zweiwertige Gruppe Strukturein- heiten aufweist, die ausgewählt sind unter Alkylen, Alkenylen, Arylen, Hete- rocyclyl, Cycloalkylen, wobei Alkylen und Alkenylen ein- oder mehrfach durch Sauerstoff, Schwefel, -NH- und -N(C₁-C₁₀-Alkyl)- unterbrochen sein können, und Arylen, Heterocyclyl und Cycloalkylen ein- oder mehrfach durch C₁-C₄-Alkyl substituiert sein können;
einsetzt.

11. Verfahren nach Anspruch 10, wobei das innige in Kontakt bringen außerdem in Gegenwart wenigstens eines Additivs, ausgewählt unter einem Antioxidans, Lichtstabilisierungsmittel, Metalldesaktivator, antistatischem Mittel, Verstärkungs-und Füllstoff, Beschlagverhinderungsmittel, Biozid und von den Verbindungen der Formel I verschiedenem Dispergierhilfsmittel, erfolgt.

12. Verfahren nach Anspruch 11, wobei das von den Verbindungen der Formel I verschiedene Dispergierhilfsmittel ausgewählt ist unter Polyethylenwachs, Polypropylenwachs, Metallseifen, Fettsäureestern, Montanwachs, wachsartigen Polymeren und Amidwachs.

13. Verfahren nach Anspruch 11 oder 12, wobei der Anteil des Dispergierhilfsmittels, das von der Verbindung der Formel I verschieden ist, weniger als 0,01 Gew.-%, bezogen auf das Gesamtgewicht der Polymerzusammensetzung, beträgt.

14. Verfahren nach Anspruch 10, wobei kein von der Verbindung der Formel (I) verschiedenes Dispergierhilfsmittel eingesetzt wird.

15. Verwendung einer Piperidin-Verbindung der Formel (I) wie in Anspruch 1 definiert als Dispergierhilfsmittel in einer pigmenthaltigen Polymerzusammensetzung.

## Claims

1. A composition comprising:
i) as stabilizer at least one piperidine compound of the formula (I) 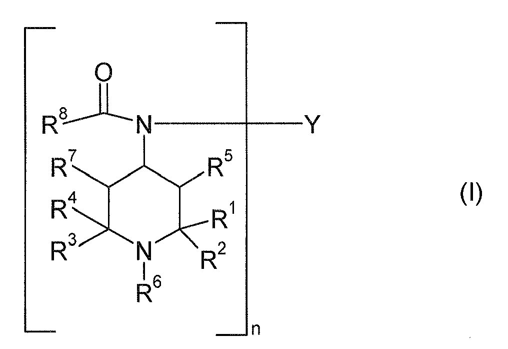 in which
n is 1 or 2;
R¹, R², R³, and R⁴ each independently are C₁-C₄-alkyl, or R¹ and R² and/or R³ and R⁴, together with the carbon atom to which they are attached, form a 4-, 5-, 6-, 7- or 8-membered ring;
R⁵ and R⁷ each independently are hydrogen or C₁-C₄-alkyl;
R⁶ is hydrogen, oxyl, hydroxyl, acyl, C₁-C₄₀-alkyl or C₂-C₄₀-alkenyl, it being possible for the two last-mentioned radicals to be interrupted by one or more nonadjacent groups selected independently of one another from oxygen, sulfur, -NH-, and N(C₁-C₁₀-alkyl)-, and/or to carry one or more substituents selected from cyano, hydroxyl, amino, and aryl, it being possible for aryl in turn to be substituted one or more times by C₁-C₄-alkyl, halogen, C₁-C₄-alkoxy, di(C₁-C₄-alkyl)amino, methylenedioxy or ethylenedioxy;
R⁸ is hydrogen or C₁-C₁₀-alkyl; and
if n is 1
Y is hydrogen or is C₁-C₂₂-alkyl which is unsubstituted or is substituted one or more times by identical or different radicals R^{a} and may be interrupted by one or more nonadjacent groups selected independently of one another from oxygen, sulfur, -NH- and N(C₁-C₁₀-alkyl)-; or Y is C₃-C₂₂-alkenyl, C₃-C₁₂-cycloalkyl, C₆-C₁₂-bicycloalkyl or C₃-C₁₀- cycloalkenyl, in which the four last-mentioned radicals may carry one or more radicals R^{a}, and C₃-C₁₂-cycloalkyl, C₆-C₁₂-bicycloalkyl, and C₃-C₁₀- cycloalkenyl additionally may carry one or more alkyl groups, or Y is aryl, in which aryl may be substituted one or more times by halogen, C₁-C₄-alkyl, C₁-C₄-alkoxy, C₁-C₄-alkoxycarbonyl, methylenedioxy, ethylenedioxy or di-(C₁-C₄-alkyl)amino; or Y is a heterocyclic ring which optionally carries one or more identical or different radicals selected from oxyl, hydroxyl, acyl, C₁-C₄₀-alkyl or C₂-C₄₀- alkenyl, it being possible for C₁-C₄₀-alkyl and C₂-C₄₀-alkenyl to be interrupted by one or more nonadjacent groups selected independently of one another from oxygen, sulfur, -NH- and N(C₁-C₁₀-alkyl)-, and/or to carry one or more substituents selected independently of one another from cyano, hydroxyl, amino, and aryl, it being possible for aryl in turn to be substituted one or more times by C₁-C₄-alkyl, halogen, C₁-C₄-alkoxy, di(C₁-C₄-alkyl)amino, methylenedioxy or ethylenedioxy; R^{a} being cyano, amino, hydroxyl, hydroxy-C₁-C₄-alkoxy, C₁-C₄- alkoxycarbonyl, aryl or heterocyclyl, it being possible for the two last- mentioned radicals in turn to be substituted one or more times by halogen, hydroxyl, C₁-C₄-alkyl, C₁-C₄-alkoxy, C₁-C₄-alkoxycarbonyl, methylenedioxy, ethylenedioxy or di(C₁-C₄-alkyl)amino;
and if n is 2
Y is a divalent group having 1 to 30 bridge atoms between the flanking bonds, the divalent group having structural units selected from alkylene, alkenylene, arylene, heterocyclylene and cycloalkylene, it being possible for alkylene and alkenylene to be interrupted one or more times by oxygen, sulfur, -NH- and -N(C₁-C₁₀-alkyl)-, and for arylene, heterocyclyl, and cycloalkylene to be substituted one or more times by C₁-C₄-alkyl;
ii) at least one polymer selected from polyamides, copolyamides, and copolymers of styrene or α-methylstyrene; and
iii) at least one pigment.

2. The composition according to claim 1, wherein R¹, R², R³ and R⁴ in formula I are each methyl and R⁵ and R⁷ are each hydrogen.

3. The composition according to claim 1 or 2, wherein R⁶ in formula I is hydrogen.

4. The composition according to any one of the preceding claims, wherein R⁸ is H.

5. The composition according to any one of claims 1 to 4, wherein in formula (I) n is 2 and Y is a 2- to 10-membered alkylene chain.

6. The composition according to any one of the preceding claims, wherein the compound of the formula (I) is N,N'-bis(formyl)-N,N'-bis(2,2,6,6-tetramethyl-4-piperidyl)-1,6-hexanediamine.

7. The composition according to claim 1, wherein the copolymer of styrene is a copolymer of styrene with acrylonitrile and butadiene and/or acrylic or methacrylic esters.

8. The composition according to any one of the preceding claims, further comprising at least one additive selected from antioxidants, light stabilizers, metal deactivators, antistatic agents, reinforcing agents, fillers, antifogging agents, and biocides.

9. The composition according to claim 8, wherein the light stabilizer is a 2-cyano-3,3-diphenylacrylic ester.

10. A process for producing a pigmented polymer composition comprising a continuous polymer phase and, dispersed therein, a particulate pigment phase, wherein the polymer composition is intimately contacted with the pigment and the dispersing assistant used is at least one piperidine compound of the formula (I) 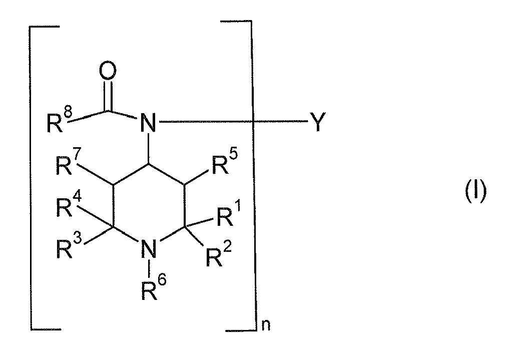 in which
n is 1 or 2;
R¹, R², R³, and R⁴ each independently are C₁-C₄-alkyl, or R¹ and R² and/or R³ and R⁴, together with the carbon atom to which they are attached, form a 4-, 5-, 6-, 7- or 8-membered ring;
R⁵ and R⁷ each independently are hydrogen or C₁-C₄-alkyl;
R⁶ is hydrogen, oxyl, hydroxyl, acyl, C₁-C₄₀-alkyl or C₂-C₄₀-alkenyl, it being possible for the two last-mentioned radicals to be interrupted by one or more nonadjacent groups selected independently of one another from oxygen, sulfur, -NH-, and N(C₁-C₁₀-alkyl)-, and/or to carry one or more substituents selected from cyano, hydroxyl, amino, and aryl, it being possible for aryl in turn to be substituted one or more times by C₁-C₄-alkyl, halogen, C₁-C₄-alkoxy, di(C₁-C₄-alkyl)amino, methylenedioxy or ethylenedioxy;
R⁸ is hydrogen or C₁-C₁₀-alkyl; and
if n is 1
Y is hydrogen or is C₁-C₂₂-alkyl which is unsubstituted or is substituted one or more times by identical or different radicals R^{a} and may be interrupted by one or more nonadjacent groups selected independently of one another from oxygen, sulfur, -NH- and N(C₁-C₁₀-alkyl)-; or
Y is C₃-C₂₂-alkenyl, C₃-C₁₂-cycloalkyl, C₆-C₁₂-bicycloalkyl or C₃-C₁₀- cycloalkenyl, in which the four last-mentioned radicals may carry one or more radicals R^{a}, and C₃-C₁₂-cycloalkyl, C₆-C₁₂-bicycloalkyl, and C₃-C₁₀- cycloalkenyl additionally may carry one or more alkyl groups, or
Y is aryl, in which aryl may be substituted one or more times by halogen, C₁- C₄-alkyl, C₁-C₄-alkoxy, C₁-C₄-alkoxycarbonyl, methylenedioxy, ethylenedioxy or di-(C₁-C₄-alkyl)amino; or
Y is a heterocyclic ring which optionally carries one or more identical or different radicals selected from oxyl, hydroxyl, acyl, C₁-C₄₀-alkyl or C₂-C₄₀- alkenyl, it being possible for C₁-C₄₀-alkyl and C₂-C₄₀-alkenyl to be interrupted by one or more nonadjacent groups selected independently of one another from oxygen, sulfur, -NH- and N(C₁-C₁₀-alkyl)-, and/or to carry one or more substituents selected independently of one another from cyano, hydroxyl, amino, and aryl, it being possible for aryl in turn to be substituted one or more times by C₁-C₄-alkyl, halogen, C₁-C₄-alkoxy, di(C₁-C₄-alkyl)amino, methylenedioxy or ethylenedioxy; R^{a} being cyano, amino, hydroxyl, hydroxy-C₁-C₄-alkoxy, C₁-C₄- alkoxycarbonyl, aryl or heterocyclyl, it being possible for the two last- mentioned radicals in turn to be substituted one or more times by halogen, hydroxyl, C₁-C₄-alkyl, C₁-C₄-alkoxy, C₁-C₄-alkoxycarbonyl, methylenedioxy, ethylenedioxy or di(C₁-C₄-alkyl)amino;
and if n is 2
Y is a divalent group having 1 to 30 bridge atoms between the flanking bonds, the divalent group having structural units selected from alkylene, alkenylene, arylene, heterocyclyl and cycloalkylene, it being possible for alkylene and alkenylene to be interrupted one or more times by oxygen, sulfur, -NH- and -N(C₁-C₁₀-alkyl)-, and for arylene, heterocyclyl, and cycloalkylene to be substituted one or more times by C₁-C₄-alkyl.

11. The process according to claim 10, wherein the intimate contacting additionally takes place in the presence of at least one additive selected from an antioxidant, light stabilizer, metal deactivator, antistatic agent, reinforcing agent, filler, antifogging agent, biocide and dispersing assistant other than the compounds of the formula I.

12. The process according to claim 11, wherein the dispersing assistant other than the compounds of the formula I is selected from polyethylene wax, polypropylene wax, metal soaps, fatty acid esters, montan wax, waxlike polymers, and amide wax.

13. The process according to claim 11 or 12, wherein the fraction of the dispersing assistant other than the compound of the formula I is less than 0.01 % by weight, based on the total weight of the polymer composition.

14. The process according to claim 10, wherein no dispersing assistant other than the compound of the formula (I) is used.

15. The use of a piperidine compound of the formula (I) as defined in claim 1 as a dispersing assistant in a pigmented polymer composition.

## Revendications

1. Composition, contenant
i) en tant que stabilisateur, au moins un composé de pipéridine de formule (I) 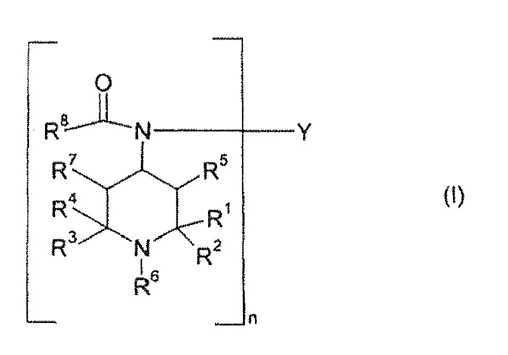 dans laquelle
n représente 1 ou 2 ;
R¹, R², R³ et R⁴ représentent indépendamment les uns des autres alkyle en C₁-C₄, ou R¹ et R² et/ou R³ et R⁴ forment ensemble avec l'atome de carbone auquel ils sont reliés un cycle à 4, 5, 6, 7 ou 8 éléments ;
R⁵, R⁷ représentent indépendamment l'un de l'autre hydrogène ou alkyle en C₁-C₄ ;
R⁶ représente hydrogène, oxyle, hydroxy, acyle, alkyle en C₁-C₄₀ ou alcényle en C₂-C₄₀, les deux derniers radicaux cités pouvant être interrompus par un ou plusieurs groupes non voisins, qui sont choisis indépendamment les uns des autres parmi oxygène, soufre, -NH- et N(alkyle en C₁-C₁₀)-, et/ou pouvant porter un ou plusieurs substituants, qui sont choisis parmi cyano, hydroxy, amino et aryle, aryle pouvant de son côté être substitué une ou plusieurs fois par alkyle en C₁-C₄, halogène, alcoxy en C₁-C₄, di-(alkyle en C₁-C₄)amino, méthylènedioxy ou éthylènedioxy ;
R⁸ représente hydrogène ou alkyle en C₁-C₁₀; et lorsque n représente 1
Y représente hydrogène, alkyle en C₁-C₂₂, qui est non substitué ou substitué une ou plusieurs fois par des radicaux R^{a} identiques ou différents, et qui peut être interrompu par un ou plusieurs groupes non voisins, qui sont choisis indépendamment les uns des autres parmi oxygène, soufre, -NH- et N(alkyle en C₁-C₁₀)- ; ou
Y représente alcényle en C₃-C₂₂, cycloalkyle en C₃-C₁₂, bicycloalkyle en C₆-C₁₂, cycloalcényle en C₃-C₁₀, les quatre derniers radicaux cités pouvant porter un ou plusieurs radicaux R^{a}, et cycloalkyle en C₃-C₁₂, bicycloalkyle en C₆-C₁₂, cycloalcényle en C₃-C₁₀ pouvant également porter un ou plusieurs groupes alkyle, ou
Y représente aryle, aryle pouvant être substitué une ou plusieurs fois par halogène, alkyle en C₁-C₄, alcoxy en C₁-C₄, alcoxycarbonyle en C₁-C₄, méthylènedioxy, éthylènedioxy ou di-(alkyle en C₁-C₄)amino ; ou
Y représente un cycle hétérocyclique, qui porte éventuellement un ou plusieurs radicaux identiques ou différents, qui sont choisis parmi oxyle, hydroxy, acyle, alkyle en C₁-C₄₀ ou alcényle en C₂-C₄₀ ; alkyle en C₁-C₄₀ et alcényle en C₂-C₄₀ pouvant être interrompus par un ou plusieurs groupes non voisins, qui sont choisis indépendamment les uns des autres parmi oxygène, soufre, -NH- et N(alkyle en C₁-C₁₀)-, et/ou pouvant porter un ou plusieurs substituants, qui sont choisis indépendamment les uns des autres parmi cyano, hydroxy, amino et aryle, aryle pouvant de son côté être substitué une ou plusieurs fois par alkyle en C₁-C₄, halogène, alcoxy en C₁-C₄, di-(alkyle en C₁-C₄) amino, méthylènedioxy ou éthylènedioxy ;
R^{a} représentant cyano, amino, hydroxy, hydroxy-alcoxy en C₁-C₄, alcoxycarbonyle en C₁-C₄, aryle ou hétérocyclyle, les deux derniers radicaux cités pouvant de leur côté être substitués une ou plusieurs fois par halogène, hydroxy, alkyle en C₁-C₄, alcoxy en C₁-C₄, alcoxycarbonyle en C₁-C₄, méthylènedioxy, éthylènedioxy ou di-(alkyle en C₁-C₄)amino ;
et lorsque n représente 2
Y représente un groupe bivalent de 1 à 30 atomes de pontage entre les liaisons flanquantes, le groupe bivalent comprenant des unités structurales, qui sont choisies parmi alkylène, alcénylène, arylène, hétérocyclylène, cycloalkylène ; alkylène et alcénylène pouvant être interrompus une ou plusieurs fois par oxygène, soufre, -NH- et -N (alkyle en C₁-C₁₀)-, et arylène, hétérocyclyle et cycloalkylène pouvant être substitués une ou plusieurs fois par alkyle en C₁-C₄ ;
ii) au moins un polymère choisi parmi les polyamides, les copolyamides et les copolymères de styrène ou d'α-méthylstyrène ; et
iii) au moins un pigment.

2. Composition selon la revendication 1, dans laquelle R¹, R², R³ et R⁴ dans la formule I représentent chacun méthyle, et R⁵ et R⁷ représentent chacun l'hydrogène.

3. Composition selon la revendication 1 ou 2, dans laquelle R⁶ dans la formule I représente l'hydrogène.

4. Composition selon l'une quelconque des revendications précédentes, dans laquelle R⁸ représente H.

5. Composition selon l'une quelconque des revendications 1 à 4, dans laquelle, dans la formule (I), n représente 2 et Y représente une chaîne alkylène de 2 à 10 éléments.

6. Composition selon l'une quelconque des revendications précédentes, dans laquelle le composé de formule I est la N,N'-bis(formyl)-N,N'-bis(2,2,6,6-tétraméthyl-4-pipéridyl)-1,6-hexanediamine.

7. Composition selon la revendication 1, dans laquelle le copolymère de styrène est un copolymère de styrène avec l'acrylonitrile et le butadiène et/ou des esters acryliques ou méthacryliques.

8. Composition selon l'une quelconque des revendications précédentes, dans laquelle la composition contient également au moins un additif choisi parmi les antioxydants, les photostabilisateurs, les désactivateurs de métaux, les agents antistatiques, les matières de renforcement et les charges, les agents antibuée et les biocides.

9. Composition selon la revendication 8, dans laquelle le photostabilisateur est un ester de l'acide 2-cyano-3,3-diphénylacrylique.

10. Procédé de fabrication d'une composition polymère contenant un pigment, contenant une phase polymère continue et une phase pigment particulaire dispersée dans celle-ci, selon lequel la composition polymère est mise en contact intime avec le pigment et au moins un composé de pipéridine de formule (I) 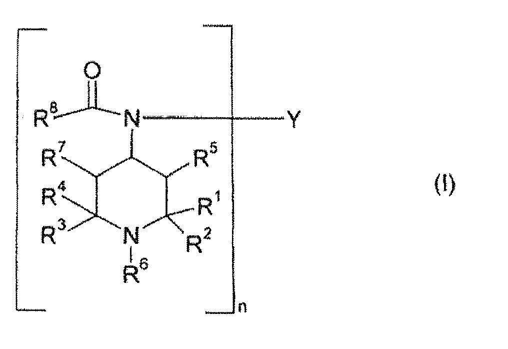 dans laquelle
n représente 1 ou 2 ;
R¹, R², R³ et R⁴ représentent indépendamment les uns des autres alkyle en C₁-C₄, ou R¹ et R² et/ou R³ et R⁴ forment ensemble avec l'atome de carbone auquel ils sont reliés un cycle à 4, 5, 6, 7 ou 8 éléments ;
R⁵, R⁷ représentent indépendamment l'un de l'autre hydrogène ou alkyle en C₁-C₄ ;
R⁶ représente hydrogène, oxyle, hydroxy, acyle, alkyle en C₁-C₄₀ ou alcényle en C₂-C₄₀, les deux derniers radicaux cités pouvant être interrompus par un ou plusieurs groupes non voisins, qui sont choisis indépendamment les uns des autres parmi l'oxygène, le soufre, -NH- et N(alkyle en C₁-C₁₀)-, et/ou pouvant porter un ou plusieurs substituants, qui sont choisis parmi cyano, hydroxy, amino et aryle, aryle pouvant de son côté être substitué une ou plusieurs fois par alkyle en C₁-C₄, halogène, alcoxy en C₁-C₄, di-(alkyle en C₁-C₄)amino, méthylènedioxy ou éthylènedioxy ;
R⁸ représente hydrogène ou alkyle en C₁-C₁₀ ; et
lorsque n représente 1
Y représente hydrogène, alkyle en C₁-C₂₂, qui est non substitué ou substitué une ou plusieurs fois par des radicaux R^{a} identiques ou différents, et qui peut être interrompu par un ou plusieurs groupes non voisins, qui sont choisis indépendamment les uns des autres parmi oxygène, soufre, -NH- et N(alkyle en C₁-C₁₀)- ; ou
Y représente alcényle en C₃-C₂₂, cycloalkyle en C₃-C₁₂, bicycloalkyle en C₆-C₁₂, cycloalcényle en C₃-C₁₀, les quatre derniers radicaux cités pouvant porter un ou plusieurs radicaux R^{a}, et cycloalkyle en C₃-C₁₂, bicycloalkyle en C₆-C₁₂, cycloalcényle en C₃-C₁₀ pouvant également porter un ou plusieurs groupes alkyle, ou
Y représente aryle, aryle pouvant être substitué une ou plusieurs fois par halogène, alkyle en C₁-C₄, alcoxy en C₁-C₄, alcoxycarbonyle en C₁-C₄, méthylènedioxy, éthylènedioxy ou di-(alkyle en C₁-C₄)amino ; ou
Y représente un cycle hétérocyclique, qui porte éventuellement un ou plusieurs radicaux identiques ou différents, qui sont choisis parmi oxyle, hydroxy, acyle, alkyle en C₁-C₄₀ ou alcényle en C₂-C₄₀ ; alkyle en C₁-C₄₀ et alcényle en C₂-C₄₀ pouvant être interrompus par un ou plusieurs groupes non voisins, qui sont choisis indépendamment les uns des autres parmi oxygène, soufre, -NH- et N(alkyle en C₁-C₁₀) -, et/ou pouvant porter un ou plusieurs substituants, qui sont choisis indépendamment les uns des autres parmi cyano, hydroxy, amino et aryle, aryle pouvant de son côté être substitué une ou plusieurs fois par alkyle en C₁-C₄, halogène, alcoxy en C₁-C₄, di-(alkyle en C₁-C₄)amino, méthylènedioxy ou éthylènedioxy ;
R^{a} représentant cyano, amino, hydroxy, hydroxy-alcoxy en C₁-C₄, alcoxycarbonyle en C₁-C₄, aryle ou hétérocyclyle, les deux derniers radicaux cités pouvant de leur côté être substitués une ou plusieurs fois par halogène, hydroxy, alkyle en C₁-C₄, alcoxy en C₁-C₄, alcoxycarbonyle en C₁-C₄, méthylènedioxy, éthylènedioxy ou di-(alkyle en C₁-C₄)amino ;
et lorsque n représente 2
Y représente un groupe bivalent de 1 à 30 atomes de pontage entre les liaisons flanquantes, le groupe bivalent comprenant des unités structurales, qui sont choisies parmi alkylène, alcénylène, arylène, hétérocyclyle, cycloalkylène ; alkylène et alcénylène pouvant être interrompus une ou plusieurs fois par oxygène, soufre, -NH- et -N(alkyle en C₁-C₂₀)-, et arylène, hétérocyclyle et cycloalkylène pouvant être substitués une ou plusieurs fois par alkyle en C₁-C₄ ;
est utilisé en tant qu'agent de dispersion.

11. Procédé selon la revendication 10, dans lequel la mise en contact intime a également lieu en présence d'au moins un additif, choisi parmi un antioxydant, un photostabilisateur, un désactivateur de métaux, un agent antistatique, une matière de renforcement et une charge, un agent antibuée, un biocide et un agent de dispersion différent des composés de formule I.

12. Procédé selon la revendication 11, dans lequel l'agent de dispersion différent des composés de formule I est choisi parmi la cire de polyéthylène, la cire de polypropylène, les savons métalliques, les esters d'acides gras, la cire de Montan, les polymères cireux et la cire d'amide.

13. Procédé selon la revendication 11 ou 12, dans lequel la proportion de l'agent de dispersion différent du composé de formule I est inférieure à 0,01 % en poids, par rapport au poids total de la composition polymère.

14. Procédé selon la revendication 10, dans lequel aucun agent de dispersion différent du composé de formule (I) n'est utilisé.

15. Utilisation d'un composé de pipéridine de formule (I) tel que défini dans la revendication 1 en tant qu'agent de dispersion dans une composition polymère contenant un pigment.
